# EUROPEAN PATENT APPLICATION

(11) **EP 4 712 492 A1**
(43) Date of publication of application: **18.03.2026**
(21) Application number: 24916014.4
(22) Date of filing: 10.01.2024
(51) Int. Cl.: H04N 21/4415, G06F 16/55, H04N 21/44

(54) **VIDEO GENERATION METHOD AND ELECTRONIC DEVICE**

(71) Applicant: Honor Device Co., Ltd., Shenzhen, Guangdong 518040 (CN)
(72) Inventor: LUO, Lan, Shenzhen, Guangdong 518040 (CN); YI, Jie, Shenzhen, Guangdong 518040 (CN)
(74) Representative: Thun, Clemens
(86) International application number: PCT/CN2024/071701
(87) International publication number: WO 2025/147937

(57) **Abstract**

A video generation method and an electronic device are provided. The method includes: An electronic device displays a video production window. The electronic device displays an operation window of a target video theme in response to an operation of selecting a target theme card in a plurality of theme cards by a user. When all persons corresponding to at least one face group lack name data, the operation window includes a first video creation entry; or when at least one of persons corresponding to at least one face group has name data, the operation window includes a second video creation entry. The electronic device displays a first selection window in response to an operation performed on the first video creation entry. The first selection window includes a facial image of at least one person. The electronic device generates, in response to an operation of selecting a facial image by the user, a video of a person corresponding to the facial image selected by the user. Alternatively, the electronic device generates, in response to an operation performed on the second video creation entry, a video of a person corresponding to the second video creation entry.

## Description

### TECHNICAL FIELD

Embodiments of this application relate to the field of electronic device technologies, and in particular, to a video generation method and an electronic device.

### BACKGROUND

With continuous development of electronic devices, the electronic devices have become an indispensable part of people's work and life. A photographing function of the electronic devices may facilitate convenience of the life of consumers. For example, the consumers may use camera applications to take photos to keep warm moments in daily work and life, or use camera applications to take videos to record living segments.

### SUMMARY

Embodiments of this application provide a video generation method and an electronic device, to resolve a current problem that a complex video composition operation causes low convenience.

To achieve the foregoing objectives, embodiments of this application use the following technical solutions:

According to a first aspect, a video generation method is provided. The video generation method is applied to an electronic device, the electronic device includes a plurality of portrait materials, and at least one face group into which the plurality of portrait materials are grouped based on a facial image, and a portrait material in one face group includes faces of a same person. The method includes: displaying, by the electronic device, a video production window, where the video production window displays a plurality of theme cards, and different theme cards correspond to different video themes; displaying, by the electronic device, an operation window of a target video theme in response to an operation of selecting a target theme card in the plurality of theme cards by a user, where when all persons corresponding to the at least one face group lack name data, the operation window includes a first video creation entry; or when at least one of persons corresponding to the at least one face group has name data, the operation window includes a second video creation entry; and the target video theme is a video theme corresponding to the target theme card; displaying, by the electronic device, a first selection window in response to an operation performed on the first video creation entry, where the first selection window includes a facial image of at least one person; and generating, by the electronic device in response to an operation of selecting a facial image by the user, a video of a person corresponding to the facial image selected by the user; or generating, by the electronic device in response to an operation performed on the second video creation entry, a video of a person corresponding to the second video creation entry.

The video production window may include theme cards corresponding to a plurality of video themes, for example, Personal photos, Family group-photos, Growth theme, Warm moments, and Pets.

A video creation entry included in the operation window of the target video theme corresponds to one or more face groups. On different video themes, the video creation entry corresponds to different quantities of face groups. For example, each video creation entry in an operation window of Personal photos corresponds to only one face group. For another example, each video creation entry in an operation window of Family group-photos corresponds to a plurality of face groups. For another example, each video creation entry in an operation window of Warm moments corresponds to one or more face groups.

The user may quickly and conveniently find a portrait material corresponding to one or more second face groups by selecting a video creation entry corresponding to the second face group. Alternatively, when a face group to be composed by the user has no name data, the user may further determine a portrait material of a first face group by selecting a video creation entry corresponding to the first face group. In this way, selection of each face group is not omitted.

According to the video generation method provided in this application, based on a feature that different persons have different facial features and based on a facial image existing in each portrait material, each portrait material may correspond to a face group in which the facial image exists. Further, with reference to a design that each video creation entry corresponds to one or more face groups, and face groups corresponding to different video creation entries are not completely the same, in the video generation method, a portrait material corresponding to one or more face groups may be found at one time by using one video creation entry, thereby improving efficiency of determining the portrait material in a composed video, and improving video generation efficiency.

In a possible implementation of the first aspect, that the operation window includes the second video creation entry includes: the operation window includes one first video creation entry and N second video creation entries, the first video creation entry corresponds to a person who lacks name data, each second video creation entry corresponds to a person who has name data, and persons corresponding to different second video creation entries are not completely the same, where N is a positive integer greater than 1.

In this embodiment, an operation window of a video theme simultaneously displays one first video creation entry and N second video creation entries. Therefore, the user may select the first video creation entry in the operation window of the video theme at one time, to select, as a material of the composed video, a material of a first face group that lacks name data; or select a second video creation entry in the operation window of the video theme, to select, as a material of the composed video, a material of a second face group that has name data. In this way, efficiency of composing a video by the user is improved.

In another possible implementation of the first aspect, the generating, by the electronic device in response to an operation of selecting a facial image by the user, a video of a person corresponding to the facial image selected by the user includes:
generating, by the electronic device, a video in response to an operation performed by the user on Q facial images in the first selection window, where a picture of the video simultaneously displays a person corresponding to the Q facial image, Q is a positive integer, and a value of Q is associated with the target video theme.

When a video creation entry tapped by the user corresponds to a plurality of first face groups that lack name data, the electronic device displays the plurality of first face groups in the first selection window, so that the user selects Q first face groups.

Different video themes correspond to different values of Q. For example, Q is 1 when the video theme is Personal photos. For another example, Q is greater than 1 when the video theme is Family group-photos. For another example, Q may be 1 or may be greater than 1 when the video theme is Warm moments.

In another possible implementation of the first aspect, the generating, by the electronic device in response to an operation of selecting a facial image by the user, a video of a person corresponding to the facial image selected by the user includes: displaying, by the electronic device, a third selection window in response to an operation of selecting a facial image by the user in the first selection window, where the third selection window displays a plurality of candidate portrait materials, each candidate portrait material is an intersection of portrait materials corresponding to the facial image selected by the user in the first selection window, and the portrait material includes a picture and/or a video; and generating, by the electronic device, a video in response to an operation of selecting one or more candidate portrait materials by the user in the third selection window.

In this embodiment, after the user selects a face group, the third selection window may display a plurality of portrait materials corresponding to the face group. The user may select, from the plurality of portrait materials, one or more portrait materials to be added to the composed video. In this way, the user can freely select a material to be used in the composed video, thereby improving a degree of freedom of composing a video by the user.

In another possible implementation of the first aspect, the first selection window further includes a name control, and each name control corresponds to a person of one facial image; and
after the displaying a first selection window, the method further includes:
displaying, by the electronic device, a name edit window in response to an operation of selecting a name control by the user; and
when receiving name data edited by the user in the name edit window, returning, by the electronic device, the first selection window, and using the name data as name data of a person corresponding to the name control selected by the user.

When a face group in an album application lacks name data, the user may perform an operation on the name control in the first selection window, to add the name data to the face group, so that the first face group to which the name data is added becomes a second face group.

In another possible implementation of the first aspect, the displaying, by the electronic device, a name edit window in response to an operation of selecting a name control by the user includes: displaying, by the electronic device, the name edit window in an album application in response to the operation of selecting the name control by the user; and after the electronic device receives the name data edited by the user in the name edit window, the method further includes: using, by the album application, the name data as the name data of the person corresponding to the name control selected by the user.

In a video composition process, the user performs an operation on the name control, and the album application displays the name edit window, to add the name data to the face group in the album application.

In another possible implementation of the first aspect, the name edit window includes a name input area, the name input area is used by the user to input name subdata of the person, and the name subdata belongs to the name data; the using, by the album application, the name data as the name data of the person corresponding to the name control selected by the user includes: using, by the album application, the name subdata as the name data of the person corresponding to the name control selected by the user.

In another possible implementation of the first aspect, the name edit window includes a relationship input area, the relationship input area is used by the user to input relationship subdata between a person and an owner of the electronic device, and the relationship subdata belongs to the name data; and the using, by the album application, the name data as the name data of the person corresponding to the name control selected by the user includes: using, by the album application, the relationship subdata as the name data of the person corresponding to the name control selected by the user.

In this embodiment, a name of each person is determined from two perspectives based on a name of the person and the relationship between the person and the owner of the electronic device, to avoid a problem that a face group is incorrectly selected because two persons have a same name, and improve accuracy of the name of the person.

In another possible implementation of the first aspect, the generating, by the electronic device in response to an operation of selecting the second video creation entry by the user, a video of a person corresponding to the second video creation entry selected by the user includes: displaying, by the electronic device, the third selection window in response to the operation of selecting the second video creation entry by the user, where the third selection window displays a plurality of candidate portrait materials, each candidate portrait material is an intersection of portrait materials of the person corresponding to the second video creation entry selected by the user, and the portrait material includes a picture and/or a video; and generating, by the electronic device, a video in response to an operation of selecting one or more candidate portrait materials by the user.

In this embodiment, after the user selects a second video creation entry corresponding to the second face group, the electronic device may display a plurality of corresponding portrait materials of the second face group. The user may select, from the plurality of portrait materials, one or more portrait materials to be added to the composed video. In this way, the user can freely select a material to be used in the composed video, thereby improving a degree of freedom of composing a video by the user.

In another possible implementation of the first aspect, that the third selection window displays the plurality of candidate portrait materials includes: arranging, by the electronic device, the plurality of candidate portrait materials in the third selection window based on a sequence of obtaining periods of the portrait materials, where a quantity of candidate portrait materials displayed in each obtaining period is positively correlated with a quantity of portrait materials captured by the electronic device in the obtaining period.

For example, in a video theme of Growth theme, a quantity of candidate portrait materials corresponding to each obtaining period may be positively correlated with a quantity of materials captured by the electronic device in the obtaining period. For example, in a same year, a large quantity of materials are captured in August, and a small quantity of materials are captured in September. In this case, the third selection window may display a large quantity of materials captured in August and a small quantity of materials captured in September. In this way, the user can select more materials in a growth process, to generate a video that conforms to Growth theme.

In another possible implementation of the first aspect, the first video creation entry includes a first recommendation text, and the first recommendation text is a preset recommendation text corresponding to a video theme; and/or the second video creation entry includes a second recommendation text, and the second recommendation text includes name data of the person corresponding to the second video creation entry.

The recommendation text of the second video creation entry includes name data of the second face group, so that the user can understand a person corresponding to each second video creation entry, and the user can more accurately select a person material, to improve video composition efficiency.

In another possible implementation of the first aspect, the theme card displays the preset recommendation text corresponding to the video theme.

In another possible implementation of the first aspect, the first video creation entry includes a first example image, and the first example image is an example image corresponding to the video theme; and/or the second video creation entry includes a second example image, and the second example image includes a portrait material of the person corresponding to the second video creation entry.

In another possible implementation of the first aspect, the operation window includes the second video creation entry; and the target theme card includes one second example image of the second video creation entry.

The portrait material of the second face group is displayed on the theme card as a theme image, and can be used as a material selection sample, to attract the user to select a theme to produce a composed video.

In another possible implementation of the first aspect, before the operation window displays the operation window of the target video theme, the method further includes: obtaining, by the electronic device, at least one face group corresponding to a plurality of portrait materials in the album application.

In another possible implementation of the first aspect, before the displaying, by the electronic device, a video production window, the method further includes: starting, by the electronic device, a voice assistant application in response to an input operation performed by the user; and displaying, by the voice assistant application, the video production window.

In this embodiment, the video production window may be provided by the voice assistant application. It may be understood that the video generation method may be implemented through voice interaction between the user and the voice assistant application.

According to a second aspect, this application provides an electronic device. The electronic device includes a processor, a memory, and a display. The processor is separately coupled to the memory and the display. The memory is configured to store computer program code. The computer program code includes computer instructions. When the processor executes the computer instructions, the electronic device is enabled to perform the method according to any possible implementation of the first aspect.

For beneficial effects of the second aspect, refer to beneficial effects of the first aspect. Details are not described herein again.

According to a third aspect, this application provides a computer-readable storage medium. The computer-readable storage medium includes computer instructions. When the computer instructions are run on an electronic device, the electronic device is enabled to perform the method according to any possible implementation of the first aspect.

For beneficial effects of the third aspect, refer to beneficial effects of the first aspect. Details are not described herein again.

### BRIEF DESCRIPTION OF DRAWINGS

FIG. 1A to FIG. 1D are a schematic diagram of interface interaction of an album application according to some embodiments;
FIG. 2 is a schematic diagram of window interaction displayed by a voice assistant application according to some embodiments;
FIG. 3 is a schematic diagram of a hardware structure of an electronic device according to an embodiment of this application;
FIG. 4 is an architectural diagram of a software system of an electronic device according to an embodiment of this application;
FIG. 5 is an architectural diagram of another software system of an electronic device according to an embodiment of this application;
FIG. 6A and FIG. 6B are a flowchart of video generation and composition according to an embodiment of this application;
FIG. 7 is a schematic interaction diagram of a voice chat window in a procedure corresponding to FIG. 6A and FIG. 6B;
FIG. 8 is a schematic interaction diagram of a video production window in a procedure corresponding to FIG. 6A and FIG. 6B;
FIG. 9 is a schematic diagram of a plurality of theme cards in the video production window shown in FIG. 8;
FIG. 10A to FIG. 10D are a schematic diagram in which a video production window of Personal photos switches to display an operation window in a procedure corresponding to FIG. 6A and FIG. 6B;
FIG. 11A and FIG. 11B are a schematic diagram in which an operation window switches to display a first selection window in a procedure corresponding to FIG. 6A and FIG. 6B;
FIG. 12A to FIG. 12C are a schematic diagram 1 of selecting a face group in a first selection window;
FIG. 13A to FIG. 13D are a schematic diagram 2 of selecting a face group in a first selection window;
FIG. 14A and FIG. 14B are a schematic diagram of selecting a face group in an operation window;
FIG. 15A to FIG. 15C is a schematic diagram in which a first selection window or an operation window each switches to display a third selection window in a procedure corresponding to FIG. 6A and FIG. 6B;
FIG. 16A and FIG. 16B are a schematic diagram 1 of selecting a candidate portrait material in a third selection window;
FIG. 17A to FIG. 17D are a schematic diagram 2 of selecting a candidate portrait material in a third selection window;
FIG. 18A and FIG. 18B are a schematic diagram in which a third selection window switches to display a composed video in a procedure corresponding to FIG. 6A and FIG. 6B;
FIG. 19A to FIG. 19C are a schematic diagram of adding name data to a person in a first selection window;
FIG. 20A to FIG. 20D to FIG. 24A and FIG. 24B are schematic diagrams of partial interaction that is of a procedure corresponding to FIG. 6A and FIG. 6B and that corresponds to a video theme of Family group-photos;
FIG. 25A to FIG. 25D to FIG. 29A and FIG. 29B are schematic diagrams of partial interaction that is of a procedure corresponding to FIG. 6A and FIG. 6B and that corresponds to a video theme of Warm moments;
FIG. 30A to FIG. 30D to FIG. 34A and FIG. 34B are schematic diagrams of partial interaction that is of a procedure corresponding to FIG. 6A and FIG. 6B and that corresponds to a video theme of Growth theme; and
FIG. 35 is a schematic diagram of a hardware structure of a chip system according to an embodiment of this application.

### DESCRIPTION OF EMBODIMENTS

Technical solutions in embodiments of this application are described below with reference to accompanying drawings in embodiments of this application. In descriptions of embodiments of this application, terms used in the following embodiments are only intended to describe particular embodiments, and are not intended to limit this application. As used in this specification and the appended claims of this application, singular expressions "a", "the", "the foregoing", "this", and "such" are also intended to include an expression such as "one or more", unless otherwise clearly specified in the context. It should be further understood that, in the following embodiments of this application, "at least one" and "one or more" mean one or more (including two). The term "and/or" is used to describe an association relationship between associated objects, and indicates that three relationships may exist. For example, "A and/or B" may represent the following cases: Only A exists, both A and B exist, and only B exists, where A and B may be singular or plural. The character "/" usually indicates an "or" relationship between the associated objects.

As described in this specification, referring to "one embodiment", "some embodiments", or the like means that one or more embodiments of this application include particular features, structures, or characteristics described with reference to the embodiment. Therefore, statements "in an embodiment", "in some embodiments", "in other embodiments", "in some other embodiments", and the like appearing in different parts of this specification do not necessarily refer to a same embodiment, but mean "one or more but not all embodiments", unless otherwise specially emphasized in other ways. The terms "include", "comprise", "have" and their variations mean "including but not limited to", unless otherwise specially emphasized in other ways. The term "connection" includes a direct connection and an indirect connection, unless otherwise specified. The terms "first" and "second" are used merely for the purpose of description, and shall not be construed as indicating or implying relative importance or implying a quantity of indicated technical features.

In embodiments of this application, words such as "example" or "for example" are used to represent giving examples, illustrations, or descriptions. Any embodiment or design scheme described as an "example" or "for example" in embodiments of this application should not be explained as being more preferred or having more advantages than another embodiment or design scheme. Specifically, the words such as "example" or "for example" are used to present related concepts in a specific manner.

Before embodiments of this application are described, related technical terms in embodiments of this application are briefly described herein.

### 1. Face clustering

A picture is used for description. Face clustering means that a large quantity of facial images are grouped into different face groups based on a preset similarity indicator and facial images existing in a plurality of portrait pictures (a picture including a facial image is referred to as a portrait picture). It may be understood that portrait materials in each face group all include faces of a same person, and different face groups correspond to faces of different persons. In addition, a portrait video (a video including a facial image is referred to as a portrait video) also includes a plurality of frames of pictures. Therefore, face clustering may also be performed on the video, to obtain different face groups through grouping.

Subsequently, the portrait picture and the portrait video are collectively referred to as portrait materials.

Each face group corresponds to a plurality of portrait materials of a same person, a facial image of the person exists in each portrait material, and a facial image of another person may also exist in the portrait material. It may be understood that, when a plurality of facial images exist in one portrait picture (for example, a group-photo picture), the portrait picture may correspond to a plurality of face groups, and the picture may also be referred to as an intersection of portrait materials of the plurality of face groups; or the portrait picture may correspond to a group-photo group of a plurality of persons.

### 2. Album application (also referred to as a Gallery application)

The album application is an application that can store a portrait material or another picture or video that is captured or downloaded by a user. The user may perform operations such as view, edit, screenshot, and share on the portrait material by using the album application. The album application may be a system application.

Further, some album applications may have a face clustering capability. For example, the album application may analyze a plurality of internally stored pictures/videos, and identify a portrait material having at least one face from the plurality of pictures. After processing is performed through image clustering, a plurality of face groups may be displayed in the album application, and each face group corresponds to a face of a person. A plurality of portrait materials in which a person corresponding to a face group exists may be found by selecting the face group.

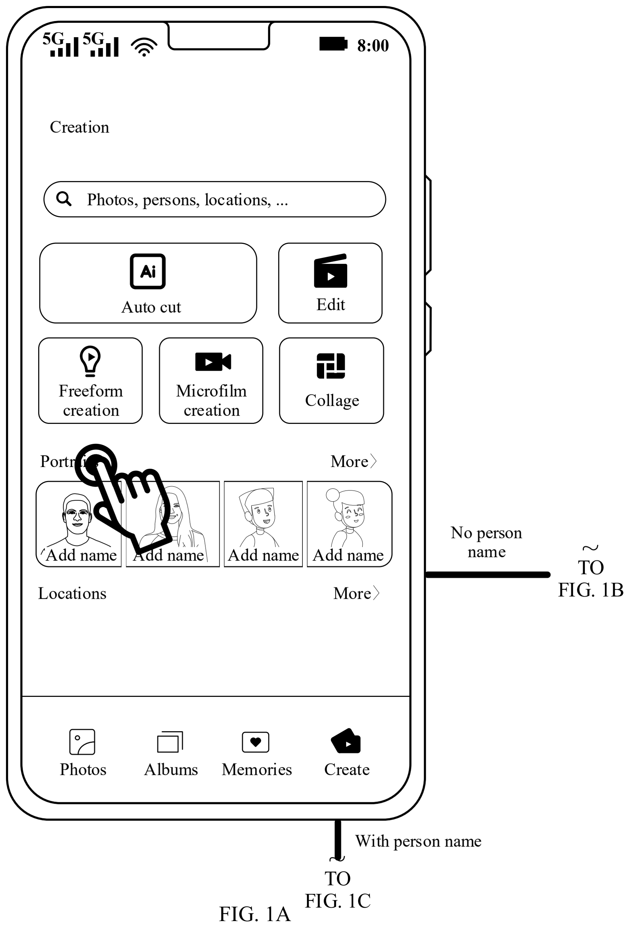

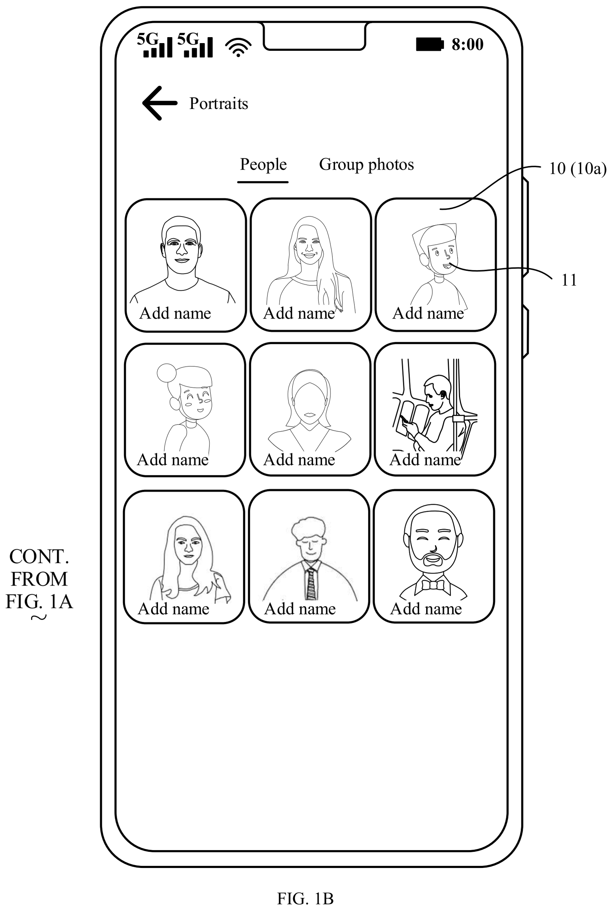

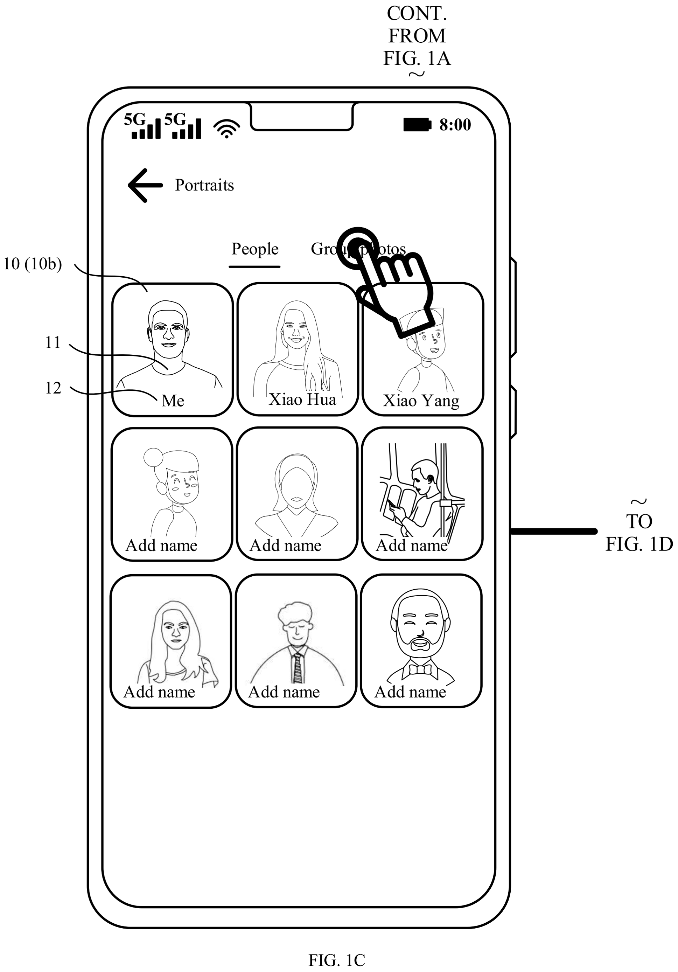

FIG. 1A to FIG. 1D are a schematic diagram of interface interaction of person information in an album application displayed on a screen. As shown in FIG. 1A to FIG. 1D, FIG. 1A shows a creation interface of the album application. The creation interface displays portrait display content. For example, the portrait display content includes facial images of a plurality of persons. Certainly, the creation interface may further include other display content such as location display content, a stitch tool, and an edit tool. This is not limited herein. After a user taps the portrait display content, the album application of an electronic device may show a personal page shown in FIG. 1B or FIG. 1C. The personal page displays a plurality of face groups 10 formed after face clustering is performed on a plurality of portrait materials. Each face group 10 on the personal page corresponds to one person. Each face group 10 is displayed by using one facial image 11, and represents a person of the facial image 11 corresponding to each face group 10. A plurality of portrait materials in the face group 10 all include facial images of a same person.

The album application may further add name data 12 to the person corresponding to each face group 10, and the user may set the name data for the person corresponding to each face group 10, to distinguish between different face groups 10. The name data may include name subdata such as a name or a nickname of the person corresponding to the face group 10, or may include relationship subdata such as a relative relationship or a friend relationship between the user and the person corresponding to the face group 10, or may include both name subdata and relationship subdata, or even more information. This is not limited in embodiments of this application.

In FIG. 1B, name data is set for no person corresponding to each face group 10, and "Add name" is displayed to attract the user to name the person. In FIG. 1C, a part of the face groups 10 has name data 12, and the other part of the face groups 10 lacks name data. In the following, a face group 10 corresponding to a person who lacks name data is referred to as a first face group 10a, and a face group corresponding to a person who has name data is referred to as a second face group 10b.

Further, for a person named by the user, the album application may further perform face clustering on portrait materials in which a plurality of facial images exist, to form a third face group (group-photo group) 10c.

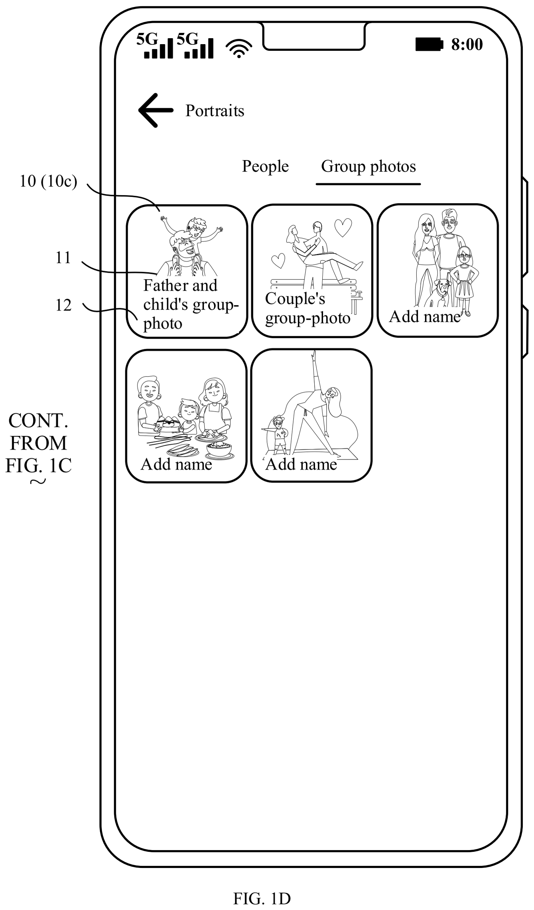

Based on this, the user may further slide the personal page, or tap Group photos on the personal page, so that the album application of the electronic device displays a group-photo page shown in FIG. 1D. The group-photo page may display at least one third face group 10c.

Each third face group 10c is displayed by displaying one group-photo picture, and facial images of a plurality of persons corresponding to the third face group 10c exist in the group-photo picture. In this way, the group-photo picture may represent a plurality of persons corresponding to each third face group 10c. The third face group 10c corresponds to a portrait material in which a plurality of faces all exist in a plurality of pictures in the album application. For example, if a person A and a person B have a plurality of group-photos, a group-photo group of the person A and the person B may be formed.

The album application may further add name data 12 for each third face group 10c, and the user may set the name data 12 for each third face group 10c, to distinguish between different face groups 10.

It may be understood that if one third face group 10c corresponds to a person 1 and a person 2, the third face group 10c corresponds to a plurality of portrait materials in which both a facial image of the person 1 and a facial image of the person 2 exist in the album application. In addition, an intersection of a portrait material of a face group 10 of the person 1 and a portrait material of a face group 10 of the person 2 also corresponds to the portrait material in which both the facial image of the person 1 and the facial image of the person 2 exist in the album application. Therefore, it may also be considered that the portrait material of the third face group 10c corresponding to the person 1 and the person 2 is equivalent to the intersection of the portrait material of the face group 10 of the person 1 and the portrait material of the face group 10 of the person 2.

### 3. Video composition function

The video composition function means that an electronic device may compose a plurality of materials selected by a user, to obtain a segment of video. The material may be a picture, a video, or the like. In a playing process, a composed video displays each material, and a dynamic effect, music, or the like displayed to match each material.

For a principle and a manner of the composed video, refer to other descriptions of the conventional technology. Details are not described in embodiments of this application.

### 4. Voice assistant application

The voice assistant application is an application that is of an electronic device and that is used to provide a voice interaction function for a user. For example, a voice assistant may collect a voice sent by a user, convert the voice into a voice instruction, and input the voice instruction into a system on chip (system on chip, SoC, also referred to as a system-on-a-chip) of the electronic device, so that the electronic device correspondingly executes a user intention. In addition, the voice assistant may further convert an output message of the electronic device into a text statement, and then play the text statement for the user in a voice form. In this way, the voice assistant application can implement voice communication between the electronic device and the user. The voice assistant application may be a system application.

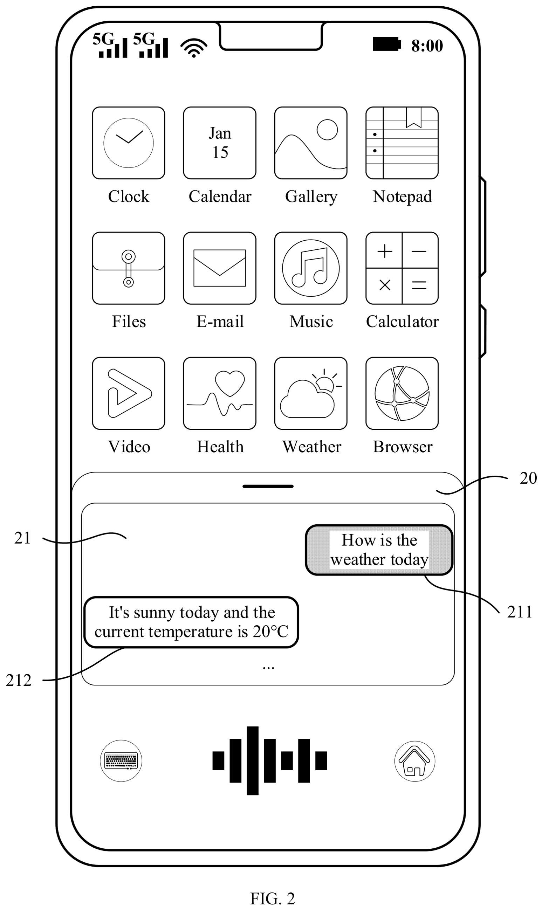

FIG. 2 is a schematic diagram of window interaction corresponding to a voice assistant application displayed on a screen. After the voice assistant application obtains a start permission of an electronic device, a user may wake up the voice assistant application by issuing a preset voice password or action (for example, touching and holding a lock key). After the voice assistant application is started, as shown in FIG. 2, a voice assistant window 20 is correspondingly displayed on a display of the electronic device.

The voice assistant window 20 may include a voice chat window 21. The voice chat window 21 may display a first chat message 211. The first chat message 211 may display a text corresponding to a voice spoken by the user. For example, the voice assistant application collects the voice sent by the user, performs voice-to-text conversion processing (including voice recognition processing), and then displays the corresponding text by using the first chat message 21. The voice chat window 21 may further display a second chat message 212. The second chat message 212 may display a text corresponding to a voice played by the voice assistant application for the user. For example, the voice assistant application converts an output message into a text statement, and displays the text statement by using the second chat message 22. In addition, the voice assistant application further drives a speaker of the electronic device to play a corresponding voice message through text-to-voice conversion processing.

The voice assistant window 20 may further include another window. Specifically, a quantity of windows of the voice assistant window 20 may depend on a quantity of functions integrated by the voice assistant application. For example, when the voice assistant application is integrated with the foregoing video composition function, the voice assistant window 20 may further include a video production window.

It should be noted that the window mentioned in this specification may be a half-screen window, a full-screen window, or a window of another size. In addition, in an actual application scenario, the window may be presented in a manner such as a page, an interface, or the like. It may be understood that the window represents various manners that can be presented on the display. This is not limited in embodiments of this application.

The following describes the solutions of embodiments of this application.

An electronic device provided in embodiments of this application includes the foregoing album application. The album application may store a plurality of pictures, including at least one portrait picture that has a face. In addition, the electronic device may further include the foregoing video composition function. It may be understood that the electronic device may compose a plurality of materials, to obtain a segment of video.

The electronic device provided in embodiments of this application may include but is not limited to a device that has a display and a data processing function, for example, a smartphone, a tablet computer, a notebook computer, a handheld computer, a netbook, a personal digital assistant (personal digital assistant, PDA), a wearable electronic device, a virtual reality device, or an electric vehicle.

For ease of understanding, an example in which the electronic device is a smartphone is used for description subsequently, but should not be construed as a limitation on an application scenario of the electronic device and a device.

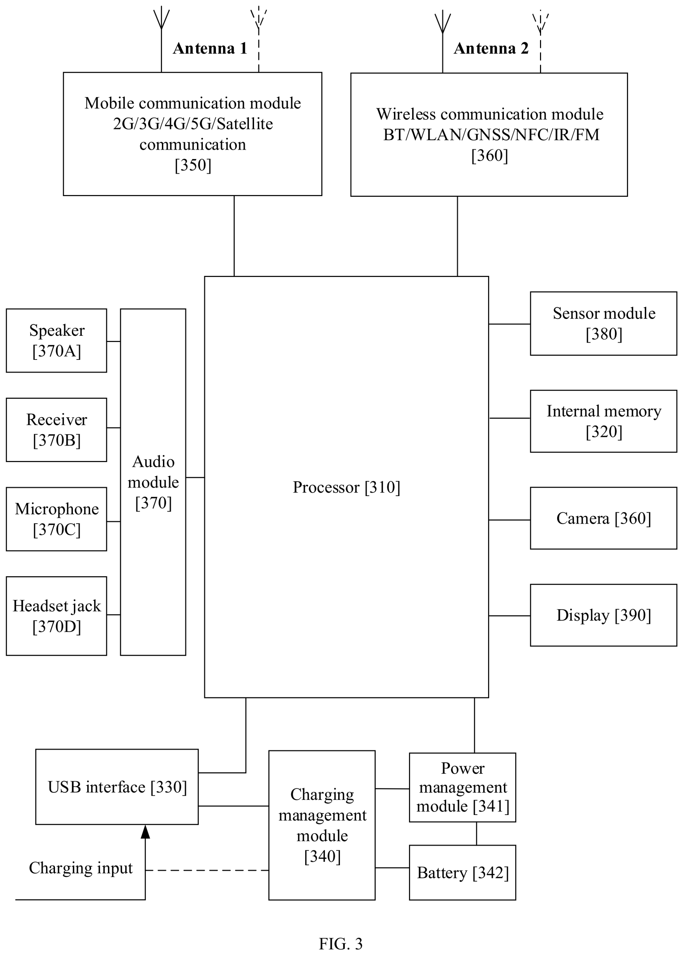

FIG. 3 is a schematic diagram of a hardware structure of an electronic device according to an embodiment of this application. As shown in FIG. 3, a smartphone 300 may include a processor 310, an internal memory 320, a universal serial bus (universal serial bus, USB) interface 330, a charging management module 340, a power management module 341, a battery 342, an antenna 1, an antenna 2, a mobile communication module 351, a wireless communication module 352, a camera 360, an audio module 370, a speaker 370A, a receiver 370B, a microphone 370C, a headset jack 370D, a sensor module 380, and a display 390.

It can be understood that the structure illustrated in this embodiment does not constitute a specific limitation on the smartphone. In some other embodiments, the smartphone may include more or fewer components than those shown in the figure, some components may be combined, some components may be split, or the components are arranged in different manners. The components in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the smartphone 300. The controller may generate an operation control signal based on instruction operation code and a timing signal, and control instruction fetching and instruction execution.

A memory may be further disposed in the processor 310, to store instructions and data. In some embodiments, the memory in the processor 310 is a cache. The memory may store instructions or data that is just used or is cyclically used by the processor 310. If the processor 310 needs to use the instruction or the data again, the processor 310 may directly invoke the instruction or the data from the memory. This avoids repeated access, and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, and/or a USB interface.

The internal memory 320 may be configured to store a computer-executable program code, where the executable program code includes instructions. The processor 310 runs the instruction stored in the internal memory 320, to perform various function applications and data processing of the smartphone 300. The internal memory 320 may include a program storage area and a data storage area. The program storage area may store an operating system, an application (for example, the foregoing album application or the foregoing voice assistant application) required by at least one function, and the like. The data storage area may store data (for example, a picture or a video that is stored by a user in the album application) created in a process of using the smartphone 300. In addition, the internal memory 320 may include a high-speed random access memory, and may also include a nonvolatile memory, for example, at least one magnetic disk storage device, a flash memory device, or a universal flash storage (universal flash storage, UFS).

The USB interface 330 is an interface that conforms to a USB standard specification, and may be specifically a Mini USB interface, a Micro USB interface, a USB Type C interface, or the like. The USB interface 330 may be configured to be connected to a charger to charge the smartphone 300, or may be configured to transmit data between the smartphone 300 and a peripheral device, may be connected to a headset to play audio through the headset. The interface may be further configured to be connected to another electronic device, for example, a tablet computer.

The charging management module 340 is configured to receive a charging input from the charger. The charger may be a wireless charger or a wired charger. The power management module 341 is configured to be connected to the battery 342, the charging management module 340, and the processor 310. The power management module 341 receives an input from the battery 342 and/or the charging management module 340, and supplies power to the processor 310, the internal memory 320, an external memory, the display 390, the mobile communication module 351, the wireless communication module 352, and the like.

A wireless communication function of the smartphone 300 may be implemented through the antenna 1, the antenna 2, the mobile communication module 351, the wireless communication module 352, and the like. The antenna 1 and the antenna 2 are configured to transmit and receive an electromagnetic wave signal.

The mobile communication module 351 may provide a cellular communication (for example, 2G/3G/4G/5G) solution applied to the smartphone. The mobile communication module 351 may include at least one filter, a switch, a power amplifier, and a low noise amplifier (low noise amplifier, LNA), and the like. The mobile communication module 351 may receive electromagnetic waves by the antenna 1, perform processing such as filtering and amplifying on the received electromagnetic waves, and transmit the processed electromagnetic waves to the baseband processor for demodulation. The mobile communication module 351 may also amplify the signal modulated by the baseband processor and convert the signal into electromagnetic waves through the antenna 1 for radiation.

The wireless communication module 352 may provide wireless communication solutions applied to the smartphone 300, including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 352 may be one or more devices into that integrate at least one communication processing module. The wireless communication module 352 receives an electromagnetic wave through the antenna 2, performs frequency modulation and filtering processing on the electromagnetic wave signal, and sends the processed signal to the processor 310. The wireless communication module 352 may further receive a to-be-sent signal from the processor 310, perform frequency modulation and amplification on the to-be-sent signal, and convert an amplified signal into an electromagnetic wave for radiation via the antenna 2.

The electronic device 100 implements a display function through the GPU, the display 390, the application processor, and the like. The GPU is a microprocessor for image processing, and connects the display 390 and the application processor. The GPU is configured to perform mathematical and geometric computation, and is configured for graphics rendering and composition. The processor 310 may include one or more GPUs, and the GPU executes program instructions to generate or change display information.

The display 390 is configured to display an image, a video, and the like. The display 390 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the smartphone 300 may include one or N displays 390, where N is a positive integer greater than 1.

The smartphone 300 may implement a photographing function by using the ISP, the camera 360, the video codec, the GPU, the display 390, the application processor, and the like.

The ISP is configured to process data fed back by the camera 360. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and color temperature of a photographed scene. In some embodiments, the ISP may be provided in the camera 360.

The camera 360 is configured to capture a still image or a video. An optical image is generated for an object by using the lens and is projected onto the photosensitive element. The light-sensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in standard RGB and YUV formats. In some embodiments, the smartphone 300 may include one or N cameras 360, and N is a positive integer greater than 1.

The digital signal processor is configured to process a digital signal, and in addition to a digital image signal, the digital signal processor may further process another digital signal. For example, when the smartphone 300 selects a frequency, the digital signal processor is configured to perform Fourier transform and the like on frequency energy.

The video codec is configured to compress or decompress a digital video. The smartphone 300 can support one or more video codecs. In this way, the smartphone 300 may play or record videos in a plurality of encoding formats, for example, moving picture experts group (moving picture experts group, MPEG) 1, MPEG2, MPEG3, and MPEG4.

The NPU is a neural-network (neural-network, NN) computing processor, and quickly processes input information with reference to a structure of a biological neural network, for example, a transfer mode between human brain neurons, and may further continuously perform self-learning. The NPU may be used to implement an application such as intelligent cognition of the smartphone 300.

For example, the NPU may analyze a plurality of pictures in the album application stored in the internal memory 320, to identify a facial image in the picture. For another example, the NPU may recognize a voice that is sent by the user and that is collected by the voice assistant application, to obtain a text corresponding to the voice.

The smartphone may implement an audio function, for example, music playing and recording, by using the audio module 270, the speaker 270A, the receiver 270B, the microphone 270C, the headset jack 270D, the application processor, and the like. In some embodiments, in a process of communication through a cellular network or a satellite network, the smartphone may collect the voice of the user through the microphone 270C, and play a voice from a peer end through a headset connected to the speaker 270A, the receiver 270B, or the headset jack 270D.

In some embodiments, the voice assistant application may collect the voice of the user through the microphone 270C, and receive an instruction entered by the user. In addition, the voice assistant application may play the voice for the user through the speaker 270A, to output a voice message to the user, thereby implementing voice interaction between the smartphone 300 and the user. Certainly, in some other embodiments, after the user inserts the headset into the headset jack 270D, the voice assistant application may also perform voice interaction with the user through a microphone and a speaker on the headset.

A software system of the electronic device may use a layered architecture, an event-driven architecture, a micro core architecture, a micro service architecture, or a cloud architecture. In embodiments of this application, an example in which a software system is an Android^{™} system of a hierarchical architecture is used to describe a software structure of a terminal.

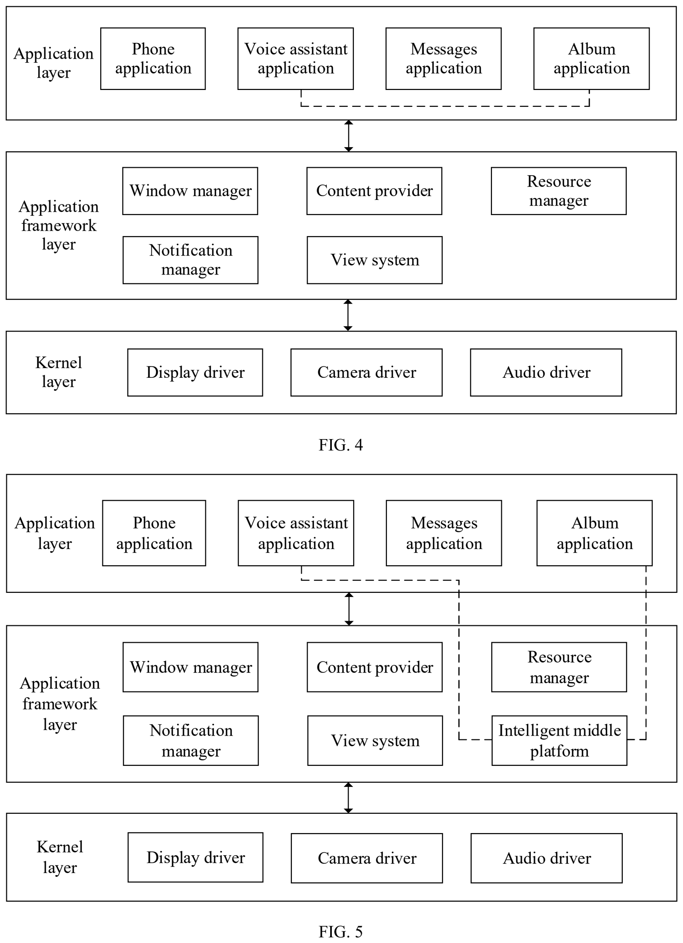

FIG. 4 is an architectural diagram of a software system of an electronic device according to an embodiment of this application. FIG. 5 is an architectural diagram of another software system of an electronic device according to an embodiment of this application.

As shown in FIG. 4 and FIG. 5, in a hierarchical architecture, the software system of the electronic device may be divided into several layers, and each layer has a clear role and task. The layers communicate with each other by using a software interface. In some embodiments, an Android^{™} system is divided into three layers: an application layer (application layer), an application framework layer (application framework layer), and a kernel layer (kernel layer) from top to bottom.

It should be understood that the software system layer of the electronic device shown in FIG. 4 and FIG. 5 is merely an example. In actual implementations, the software system of the electronic device may include more or fewer layers. For example, between the application framework layer and the kernel layer, a system library is further included. For another example, a hardware abstraction layer is further included between the application framework layer and the kernel layer.

The application layer may include a series of application packages, for example, system applications such as a Phone application, a Messages application, a Browser application, a voice assistant application, and an album application; and may further include a third-party application downloaded and installed by a user.

Because both the voice assistant application and the album application are system applications, when the album application has a face clustering capability, as shown in FIG. 4, the voice assistant application may directly obtain at least one face group of a plurality of pictures in an album from the album application.

The application framework layer provides an application programming interface (application programming interface, API) and a programming framework for an application at the application layer. The application framework layer includes some predefined functions.

The application framework layer may include a notification manager, a window manager, a resource manager, a content provider, a view system, and the like.

As shown in FIG. 5, the application framework layer may further include an intelligent middle platform. The intelligent middle platform may provide an API and a programming framework for the voice assistant application. The intelligent middle platform can also be connected to the album application.

When the album application has a face clustering capability, the intelligent middle platform may obtain at least one face group of a plurality of pictures in an album from the album application, and then forward the at least one face group to the voice assistant application.

When the album application does not have a face clustering capability, the intelligent middle platform may analyze a plurality of pictures in the album application, to obtain at least one face group of the plurality of pictures in the album application. Then, the at least one face group is sent to the voice assistant application.

The kernel layer is a layer between hardware and software. The kernel layer may include a display driver, a camera driver, an audio driver, and the like. It should be noted herein that in a video composition procedure performed in this embodiment of this application, the kernel layer is mainly configured to transmit display data of an upper layer (a layer above the kernel layer) to a display.

Based on the foregoing hardware structure and software architecture of the smartphone, the following describes in detail a specific process of video composition in embodiments of this application. In the following, an example in which a video composition function is integrated into the voice assistant application is used for description. It should be understood that, in another feasible embodiment, the video composition function may also be an application independent of the voice assistant application. This is not limited in this embodiment of this application.

It should be noted that, because the video composition function is integrated into the voice assistant application, an instruction or an operation that is input by the user into the smartphone in the procedure may be considered to be completed by the user by sending a voice. In addition, because the display also displays a voice assistant window in a running process of the voice assistant application, an instruction or an operation input by the user into the smartphone in the procedure may also be considered to be completed by the user by touching the display by using a finger.

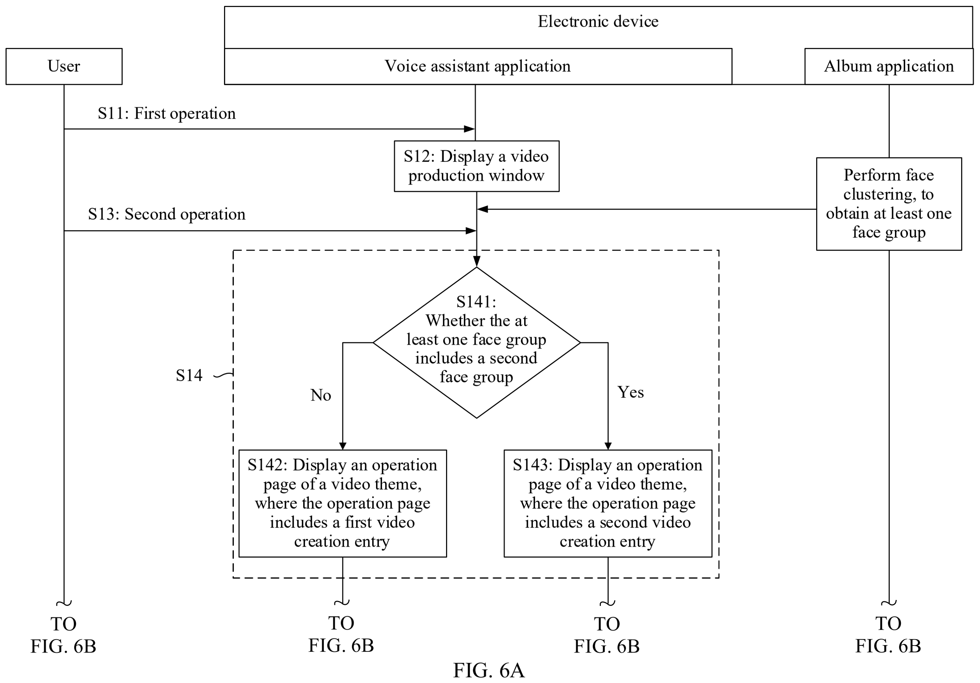

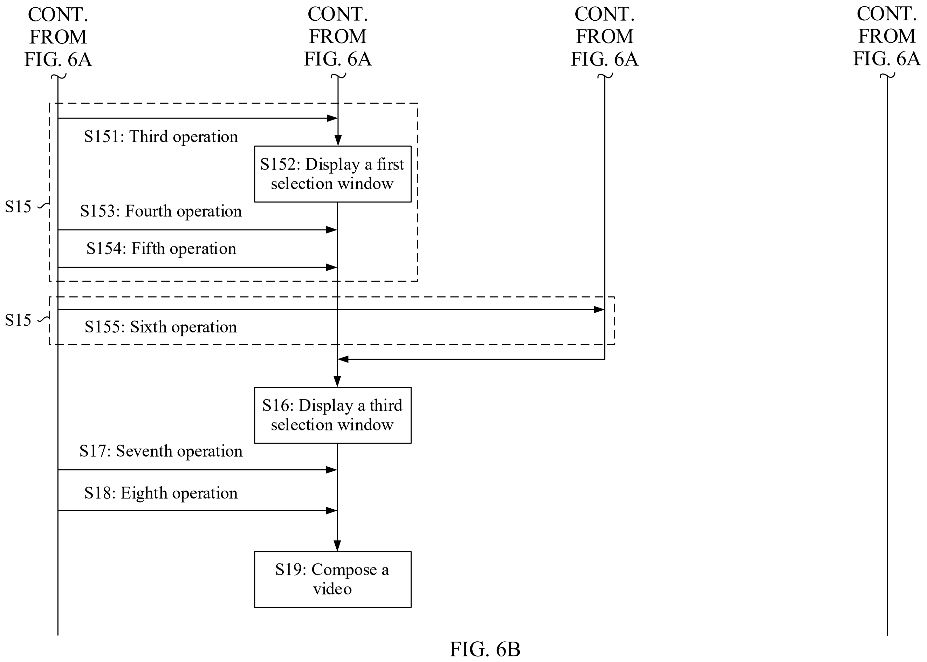

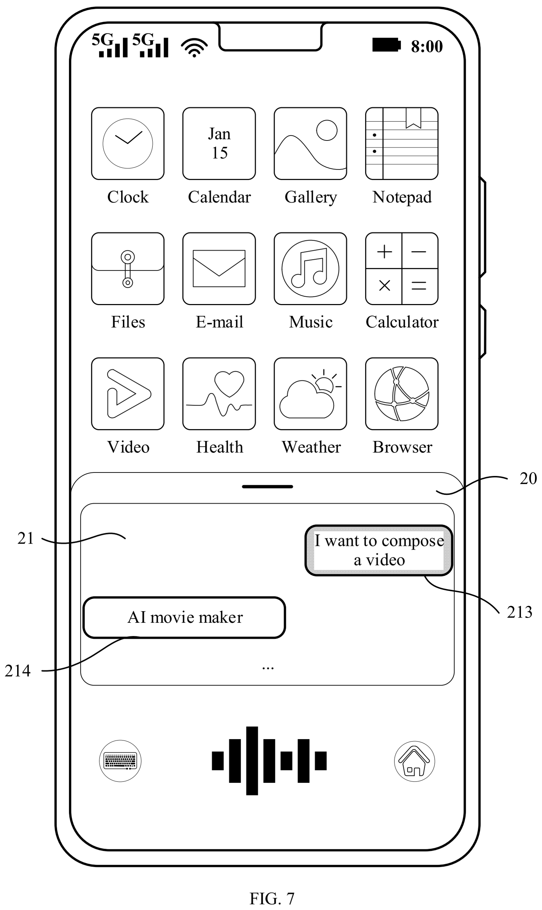

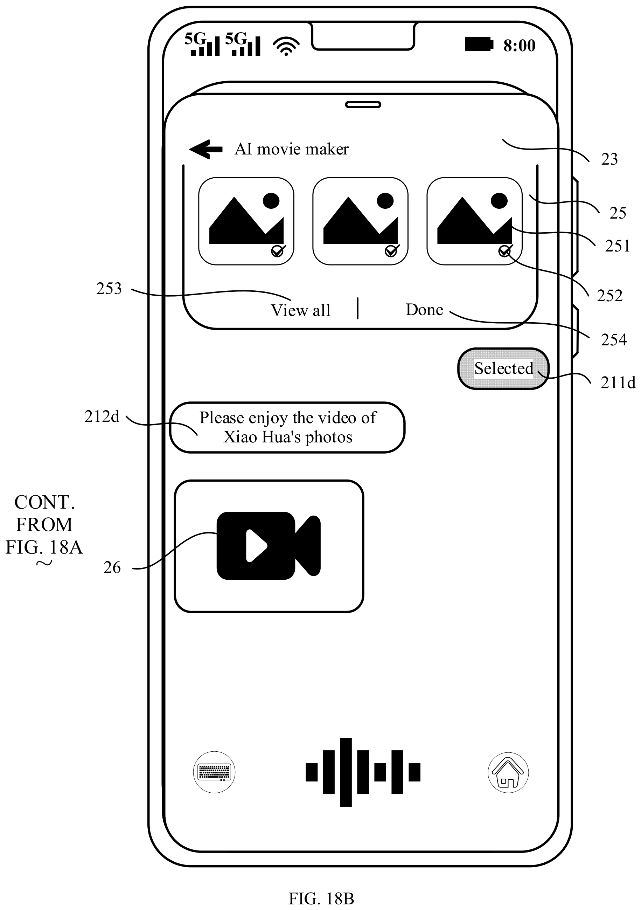

FIG. 6A and FIG. 6B are a flowchart of a video generation method according to an embodiment of this application. FIG. 7 to FIG. 18A and FIG. 18B are schematic interaction diagrams of a display of an electronic device in an execution process in FIG. 6A and FIG. 6B.

As shown in FIG. 6A and FIG. 6B, the video generation method provided in this embodiment of this application includes S11-S19.

S11: A user inputs a first operation for a video composition function into the electronic device.

For example, when a voice assistant application in the electronic device is started, the user may send a voice "I want to compose a video" to a smartphone, which is used as the first operation input by the user for the video composition function into the voice assistant application. Certainly, the operation is not limited to a specific vocabulary of the voice, and another voice that can enable the voice assistant application to identify the video composition function may be considered as an input operation for the video composition function. For example, the voice may be "Create a video" or "I want to make a video".

It may be understood that, subsequently, an input of different voices into the voice assistant application by the use is not limited to a specific vocabulary of the voice. Details are not described below.

S12: The voice assistant application displays a video production window on the display in response to the first operation.

As shown in FIG. 7, after receiving the first operation, a voice assistant may display a first chat message 213 corresponding to the first operation in a voice chat window 21; in response to the first operation, display, in the voice chat window 21, a second chat message 214 used to reply to the first chat message 213; and play a voice of the second chat message 214 through a speaker.

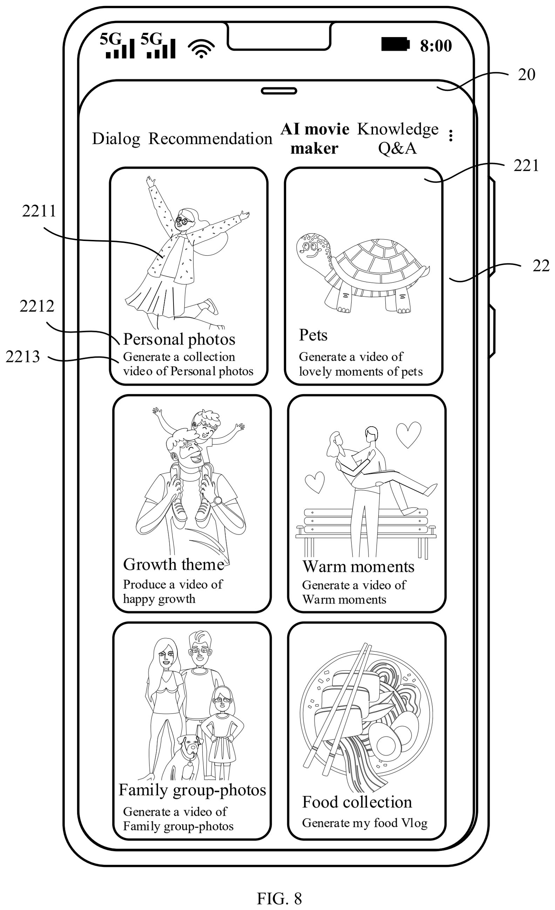

After displaying the second chat message 214, as shown in FIG. 8, the voice assistant application may display a video production window 22 in a voice assistant window 20. The video production window 22 may display a plurality of theme cards 221, each theme card 221 corresponds to a video theme, and different theme cards 221 correspond to different video themes.

In a possible implementation, an interface in FIG. 8 may be further invoked in another manner. This application is not limited to the foregoing manner. For example, after a function such as a dialog or recommendation is invoked in another manner, a switch to a function of "AI movie maker" (video production window 22) is manually performed.

The theme card 221 may include at least one of a theme material 2211, a theme name 2212, and a theme recommendation text 2213. It may be understood that the theme card 221 may include one or more of a theme material 2211, a theme name 2212, and a theme recommendation text 2213.

The theme material 2211 may be a representative picture or video that can represent a video theme corresponding to the theme card 221, and is configured to intuitively present the video theme to the user. For example, the theme material 2211 may be a picture or a video that is preset by the electronic device for each video theme; or the theme material 2211 may be a picture or a video that conforms to a video theme and that is stored in an album application.

The theme name 2212 may be a text description that can represent the video theme corresponding to the theme card 221, so that the user can understand and locate theme content corresponding to each theme card 221, for example, "Personal photos", "Growth theme", "Family group-photos", and the like in FIG. 8, which is not limited to the examples in FIG. 8, for example, may further be "Daily vlog", "Travel vlog", and "Birthday party".

The theme recommendation text 2213 may be a text used to attract the user to try a video theme to which the text belongs. For example, the theme recommendation text 2213 may be a recommendation text that is preset by the electronic device for each video theme.

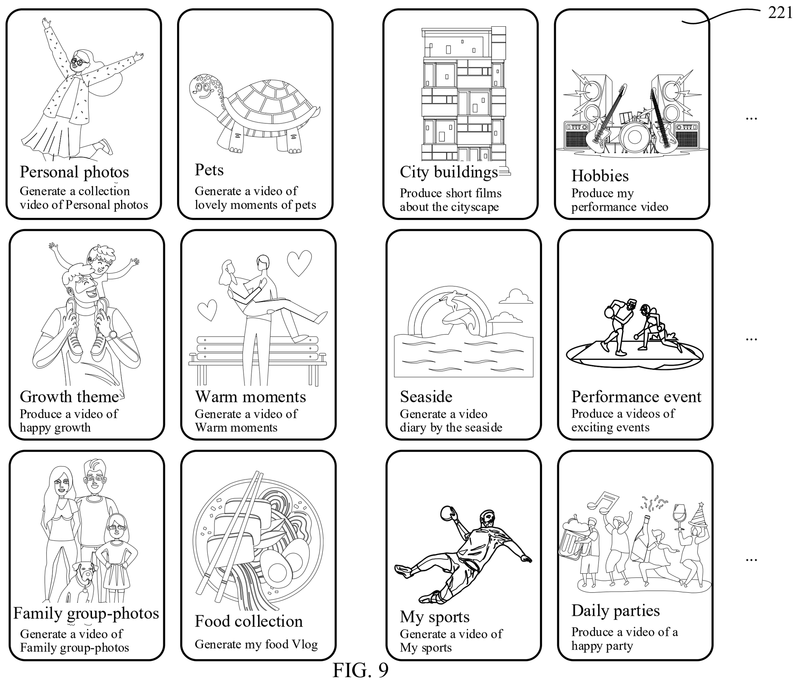

As shown in FIG. 8 and FIG. 9, the video production window 22 may display a plurality of theme cards 221. In some examples, the video production window 22 may display 12, 24, or more theme cards 221. In some other examples, the video production window 22 may display fewer theme cards 221.

S13: The user inputs a second operation for a target theme card into the electronic device.

For example, when the electronic device displays the video production window 22, the user may send a voice "I select Personal photos" to the smartphone; or the user may tap a theme card 221 corresponding to "Personal photos", which is used as the second operation input by the user for a Personal photos card (the target theme card) into the voice assistant application. The second operation may also be performed for another video theme such as Growth theme or Family group-photos. Personal photos is merely used as an example for description herein.

For ease of understanding, a procedure of S11-S19 in this embodiment is described by using an example in which Personal photos is a target theme. It should be noted that, because Personal photos is for only one person, in this embodiment, a third face group 10c in the album application is not used, and only a first face group 10a and a second face group 10b are used for description.

S14: The electronic device displays an operation window of a target video theme in response to the second operation performed by the user on the target theme card. For example, the electronic device displays an operation window of Personal photos in response to an operation performed by the user on the Personal photos card.

Before displaying an operation window of a video theme of Personal photos, the voice assistant application of the electronic device may obtain at least one face group corresponding to a plurality of portrait materials in the album application. As described above, performing face clustering on a plurality of facial images to obtain a plurality of face groups may be completed by the album application, or may be completed by an intelligent middle platform. Details are not described herein again.

It should be noted that, that the voice assistant application obtains the at least one face group corresponding to the plurality of portrait materials in the album application may be completed before S14 or even before S11; or may be completed after the second operation is received and before the operation window of the target video theme is displayed. This is not limited in this embodiment of this application.

An example in which the album application provides the at least one face group for the voice assistant application is used. The at least one face group may include the first face group 10a and does not include the second face group 10b; or the at least one face group may include the second face group 10b and does not include the first face group 10a; or the at least one face group may include both the first face group 10a and the second face group 10b.

When the at least one face group includes the first face group 10a and does not include the second face group 10b, the operation window displayed by the electronic device may include a first video creation entry corresponding to the first face group 10a; or when the at least one face group includes the second face group 10b and does not include the first face group 10a, the operation window displayed by the electronic device may include a second video creation entry corresponding to the second face group 10b; or when both the first face group 10a and the second face group 10b are included, the operation window displayed by the electronic device may include only a second video creation entry corresponding to the second face group 10b, or may include both a second video creation entry corresponding to the second face group 10b and a first video creation entry corresponding to the first face group 10a.

As shown in FIG. 6A and FIG. 6B, in some examples, to distinguish whether the second video creation entry exists in the operation window, S14 may include S141-S143.

S141: The electronic device determines whether the at least one face group includes the second face group.

S141 is equivalent to determining whether a person who has name data exists in persons corresponding to the at least one face group.

When the at least one face group does not include the second face group, all the persons corresponding to the at least one face group lack name data, and the electronic device performs S142.

When the at least one face group includes the second face group, at least one of the persons corresponding to the at least one face group has name data, and the electronic device performs S143.

S142: The electronic device displays the operation window of the target video theme, where the operation window includes the first video creation entry.

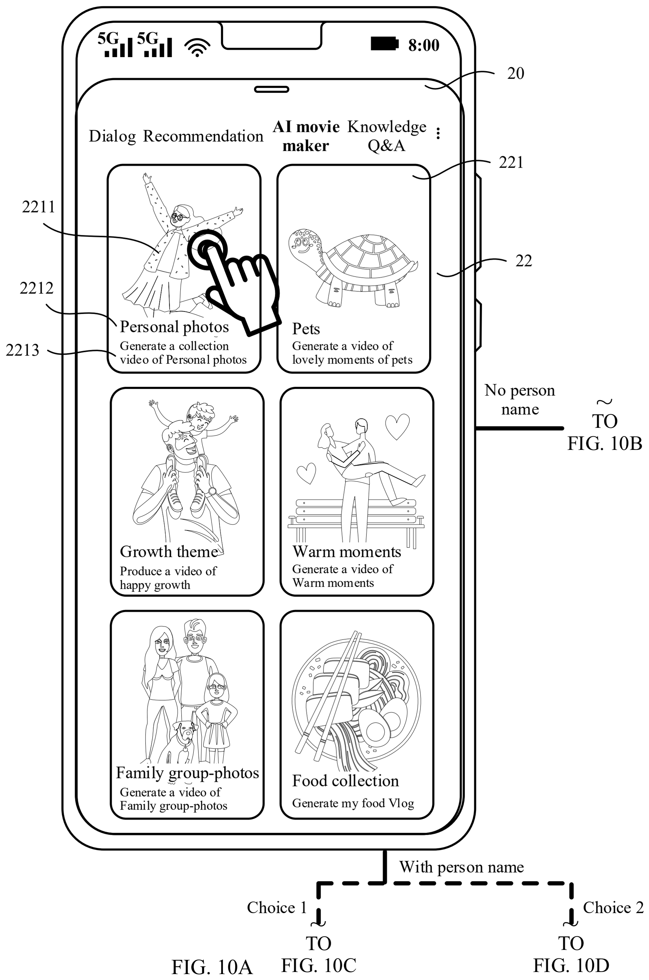

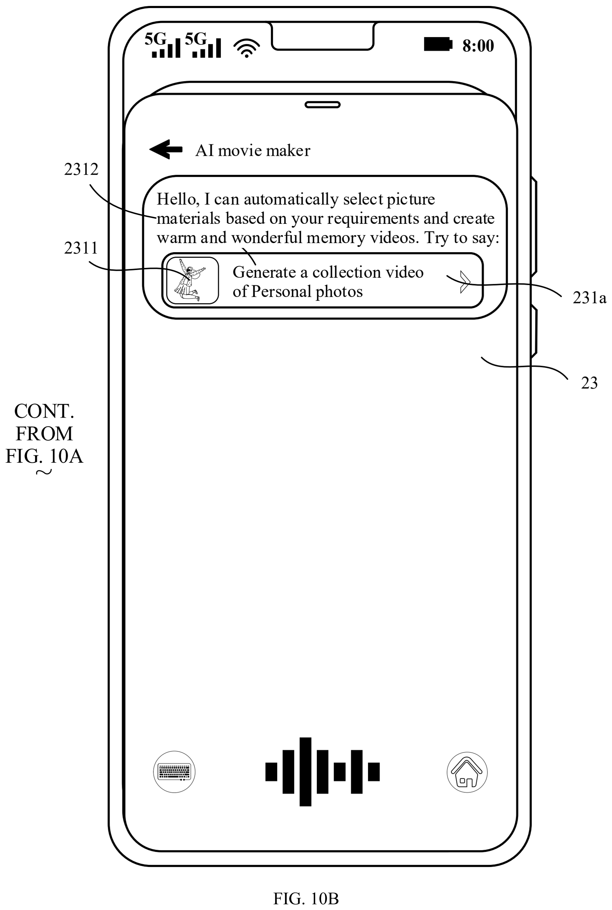

When the plurality of face groups obtained by the voice assistant application each are the first face group 10a (no person corresponding to the face groups includes name data, as shown in FIG. 1B): The voice assistant application responds to the second operation performed by the user on the Personal photos card, and the display of the electronic device switches from the video production window 22 shown in FIG. 10A to an operation window 23 of "Personal photo" that displays and includes one video creation entry (the first video creation entry) 231a and that is shown in FIG. 10B. The first video creation entry 231a is associated with a plurality of persons who lack name data.

The first video creation entry 231a may include at least one of an entry material 2311 and/or an entry recommendation text 2312.

Because the first video creation entry 231a is associated with the person who lacks name data and has no name data, the entry material 2311 displayed in the first video creation entry 231a and the theme material 2211 displayed on the theme card 221 of Personal photos may be the same, and both are a picture or video that is preset by the electronic device for Personal photos.

Similarly, the entry recommendation text 2312 displayed in the first video creation entry 231a and the theme recommendation text 2213 displayed on the theme card 221 of Personal photos may be the same, and both are a recommendation text that is preset by the electronic device for Personal photos.

When the operation window of the target video theme is shown in FIG. 10B, as shown in FIG. 6A and FIG. 6B, S15 in the procedure may include S151-S154.

S151: The user inputs a third operation for the first video creation entry into the electronic device.

The user may send a voice "Generate a collection video of Personal photos" to the smartphone or tap the first video creation entry 231a, which is used as the third operation input by the user for the first video creation entry 231a into the voice assistant application.

S152: The electronic device displays a first selection window in response to the third operation performed by the user on the first video creation entry.

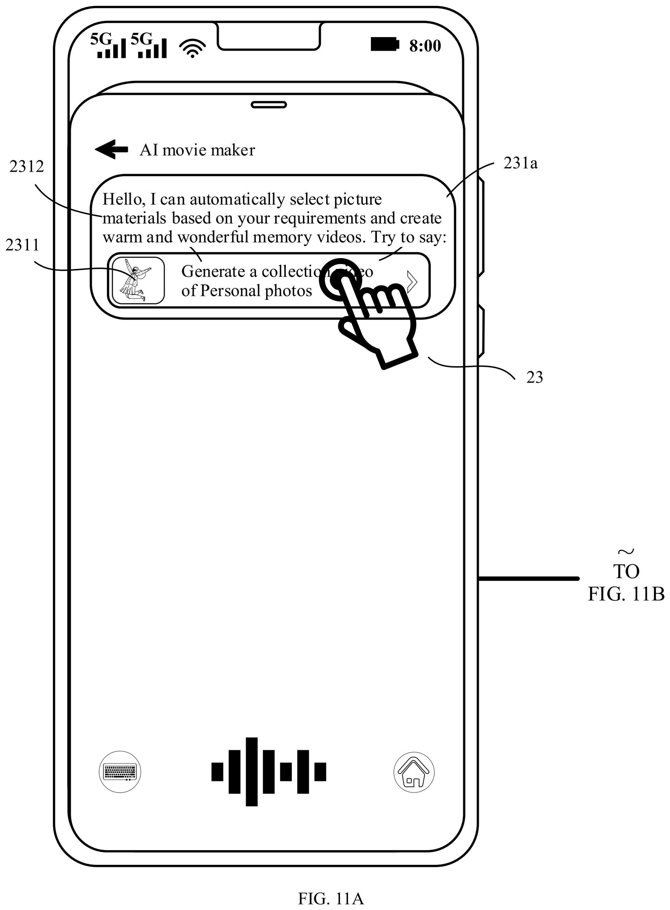

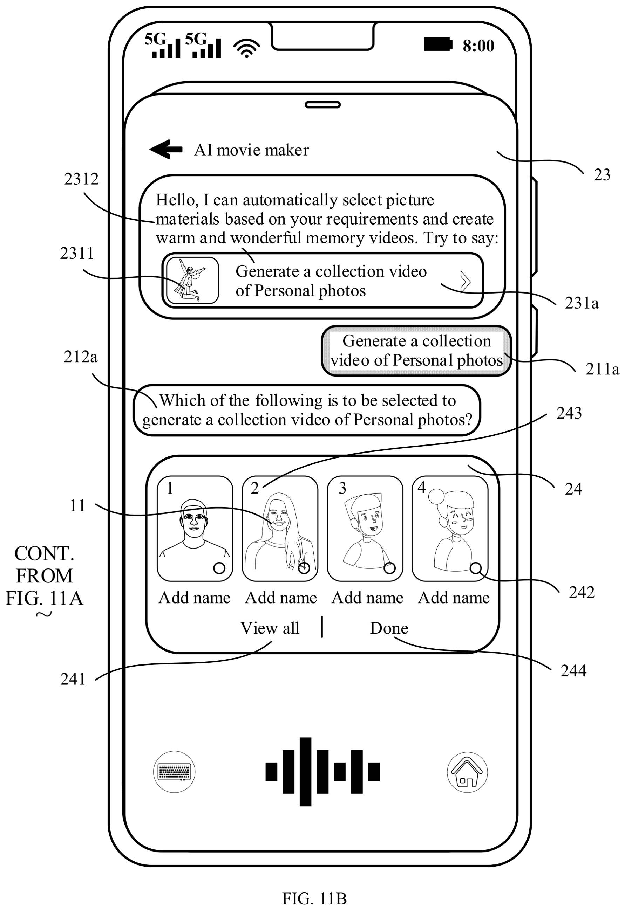

In some feasible implementations, after the user inputs the third operation into the electronic device, the display of the electronic device switches from the operation window 23 of Personal photos shown in FIG. 11A to that shown in FIG. 11B, and the voice assistant application may display a first chat message 211a corresponding to a voice in the operation window 23 of Personal photos based on the voice sent by the user. The first chat message 211a may be displayed below the first video creation entry 231a. An interface shown in FIG. 11A is the same as an interface shown in FIG. 10B.

In some feasible implementations, the electronic device responds to the first chat message 211a. As shown in FIG. 11B, the voice assistant application may display a second chat message 212a for the first chat message 211a before displaying the first selection window 24, to reply to the first chat message 211a. Then, the first selection window 24 is displayed below the second chat message 212a.

The voice assistant application of the electronic device responds to the third operation performed by the user on the first video creation entry 231a. As shown in FIG. 11B, the display displays the first selection window 24. The first selection window 24 may be an independent display window, or the first selection window 24 may be displayed in the operation window 23 of Personal photos. This is not limited in this embodiment of this application. For ease of description, both the first selection window 24 and another display window are displayed in a form of the operation window 23 in subsequent accompanying drawings. In an actual scenario, the another display window may also be an independent display window.

The first selection window 24 may include one or more facial images 11, and different facial images 11 correspond to different persons and first face groups 10a. All persons corresponding to the facial images in the first selection window 24 lack name data. Therefore, as shown in FIG. 11B, the first selection window 24 may further display a text "Add name" below the facial image 11, to attract the user to name a person.

A quantity of facial images 11 displayed in the first selection window 24 may be M. M may be a positive integer such as 1, 2, 3, 4, .... This is not limited in this embodiment of this application. For example, the quantity M of facial images 11 displayed in the first selection window 24 shown in FIG. 11B may be less than or equal to a quantity K of first face groups 10a in the album application shown in FIG. 1B.

In some examples, when M=K, the first selection window 24 may display facial images 11 of all of the first face groups 10a.

In some other examples, when M<K, the first selection window 24 may display facial images 11 of a part of the first face groups 10a.

For example, the voice assistant application may pre-obtain a quantity of portrait materials included in each first face group 10a, and determine M first face groups 10a whose quantities of portrait materials are greater than a preset material threshold. When the voice assistant application displays the first selection window 24, facial images 11 of the M first face groups 10a with largest quantities of materials are displayed in the first selection window 24.

For another example, the voice assistant application may pre-obtain a quantity of portrait materials included in each first face group 10a, and determine M first face groups 10a with largest quantities of portrait materials. When the voice assistant application displays the first selection window 24, facial images 11 of the M first face groups 10a with the largest quantities of materials are displayed in the first selection window 24.

For example, the voice assistant application may pre-obtain a quantity of recently (for example, within two days or a week) added portrait materials in each first face group 10a, and determine M first face groups 10a with largest quantities of added portrait materials. When the voice assistant application displays the first selection window 24, facial images 11 of the M first face groups 10a with the largest quantities of added materials are displayed in the first selection window 24.

Certainly, the voice assistant application may alternatively select, in another manner, facial images 11 of M first face groups 10a displayed in the first selection window 24. This is not limited in this embodiment of this application.

S153: The user inputs a fourth operation for one facial image into the electronic device.

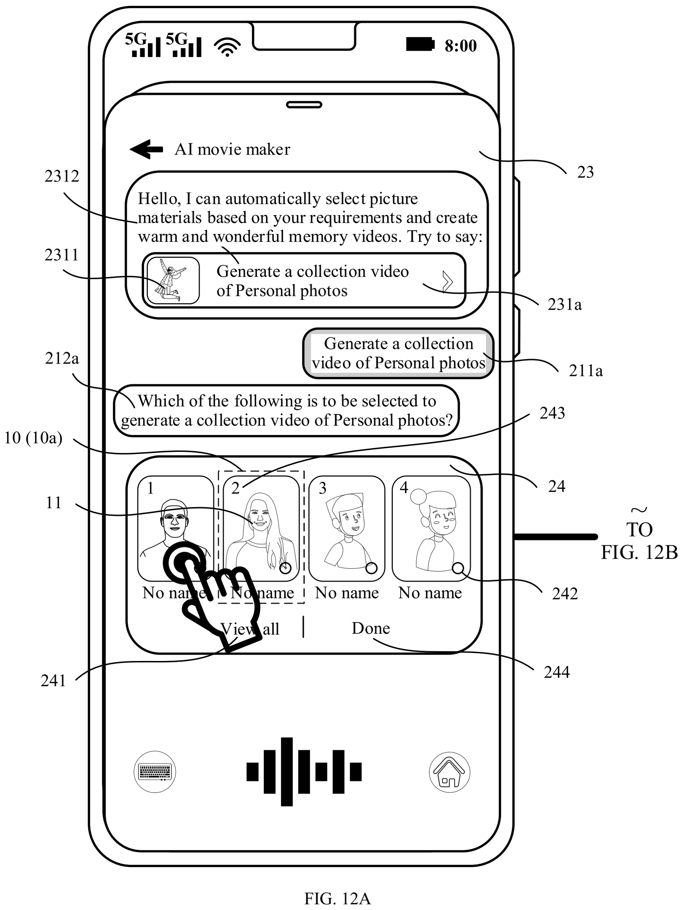

As shown in FIG. 12A, an interface shown in FIG. 12A is the same as an interface shown in FIG. 11B. The first selection window 24 may further include a plurality of first selection controls 242, the plurality of first selection controls 242 are in one-to-one correspondence with the plurality of facial images 11, and each first selection control 242 is located in a display area of the facial image 11. Each first selection control 242 corresponds to two display states. Specifically, the first selection control 242 may include a "selected" display state and an "unselected" display state. In terms of display content of the display, compared with the "unselected" display state, the "selected" display state has an additional selection flag of "√".

If the user performs the fourth operation on the first selection control 242 in the "unselected" display state, the first selection control 242 is displayed in the "selected" display state.

In addition, the first selection window 24 further includes a plurality of arrangement sequence numbers 243. The plurality of arrangement sequence numbers 243 are in one-to-one correspondence with the plurality of facial images 11, and each arrangement sequence number 243 is located in the display area of the facial image 11. The plurality of arrangement sequence numbers 243 are different from each other, and may be used to distinguish between different facial images 11.

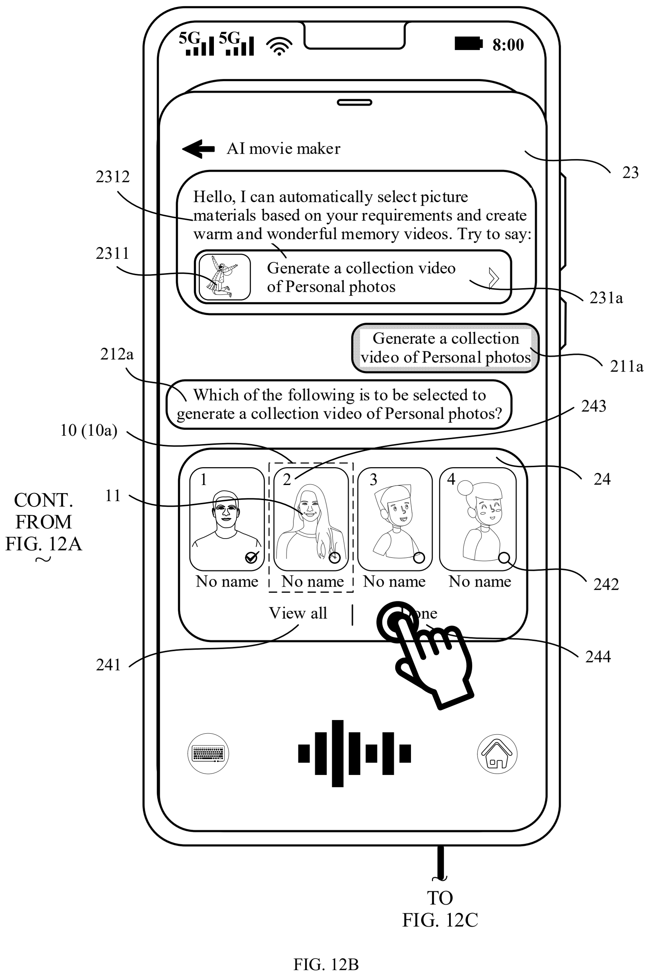

In this way, the user may send a voice "Select the 1^{st} one" to the smartphone or tap a first selection control 242 corresponding to a 1^{st} facial image 11, which is used as the fourth operation input by the user for one facial image 11 into the voice assistant application. In this case, the display of the electronic device switches from displaying the first selection window 24 shown in FIG. 12A to displaying that shown in FIG. 12B, and the first selection control 242 corresponding to the facial image 11 whose arrangement sequence number is 1 changes from the "unselected" display state to the "selected" display state. If the user selects a first selection control corresponding to another facial image 11, the electronic device controls the first selection control corresponding to the facial image 11 whose arrangement sequence number is 1 to be displayed in the unselected state. That is, the user can select only one facial image 11 to generate Personal photos.

The first selection window 24 may further include a first expansion control 241. The first expansion control 241 may be displayed below the M first face groups 10a. The user may perform an operation on the first expansion control 241 when a facial image of a person who the user wants to select does not exist in the first selection window 24.

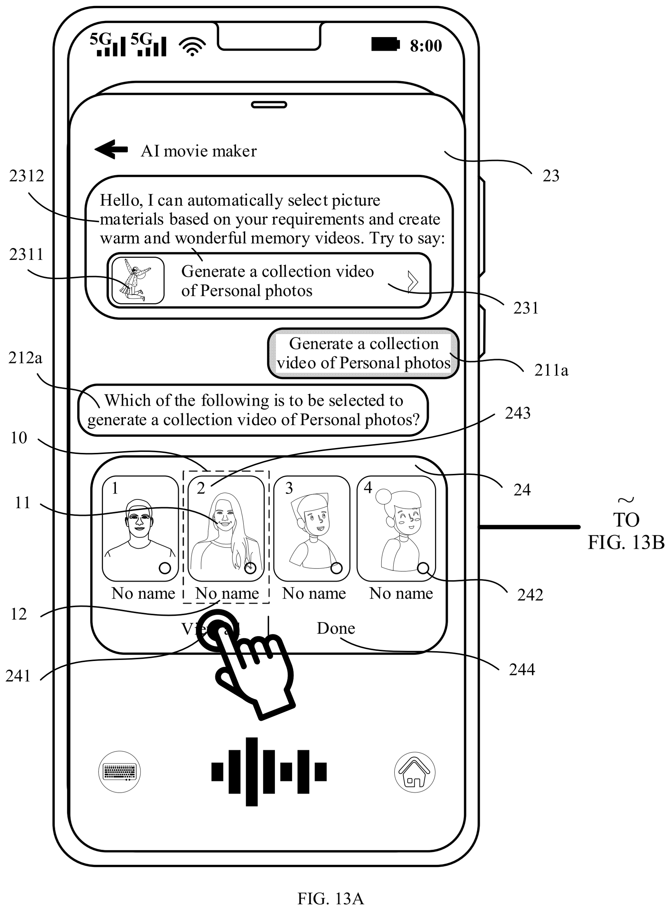

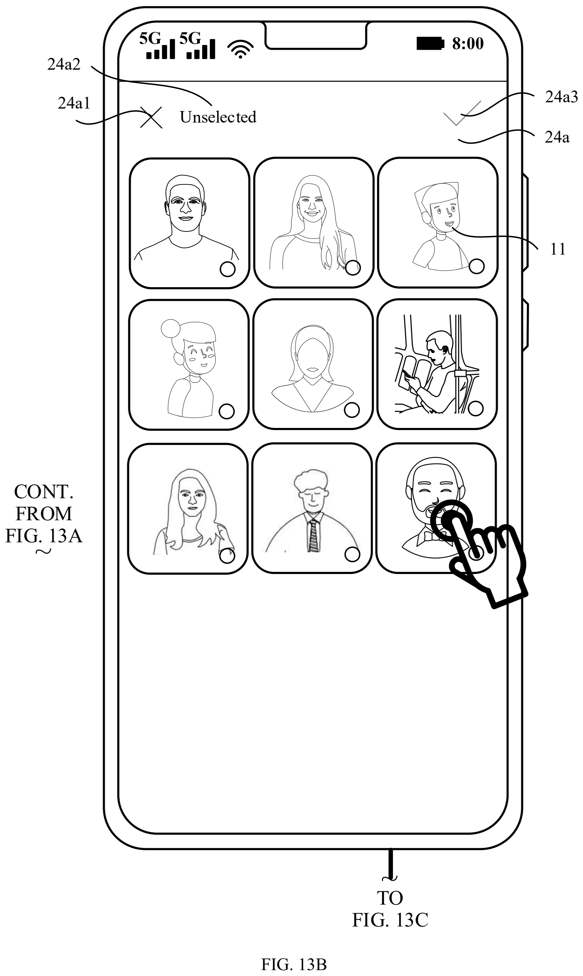

In some examples, if the user performs an operation on the first expansion control 241, the display of the electronic device switches from the first selection window 24 shown in FIG. 13A to a selection interface 24a shown in FIG. 13B. The selection interface 24a may include a facial image 11 displayed in the first selection window 24 and more facial images 11, to increase a quantity of displayed facial images 11. In the selection interface 24a, each facial image 11 corresponds to one person and one first face group 10a, and different facial images 11 correspond to different persons and first face groups 10a. An interface shown in FIG. 13A is the same as the interface shown in FIG. 11B.

Each facial image 11 in the selection interface 24a also corresponds to a first selection control 242 that has a same function as the first selection control 242 in the first selection window 24. Details are not described herein again. Similarly, if the user selects a facial image 11 and then selects a first selection control 241 corresponding to another facial image 11, a first selection control corresponding to the previously selected facial image 11 is displayed in an unselected state.

The selection interface 24a may include a first cancellation control 24a1. When the user does not find, in the selection interface 24a, a facial image of a video that the user wants to generate, or when the user touches the first expansion control 242 in the first selection window 24 by mistake and the selection interface 24a is entered, the user may perform an operation on the first cancellation control 24a1, to exit the selection interface 24a and returning to the first selection window 24.

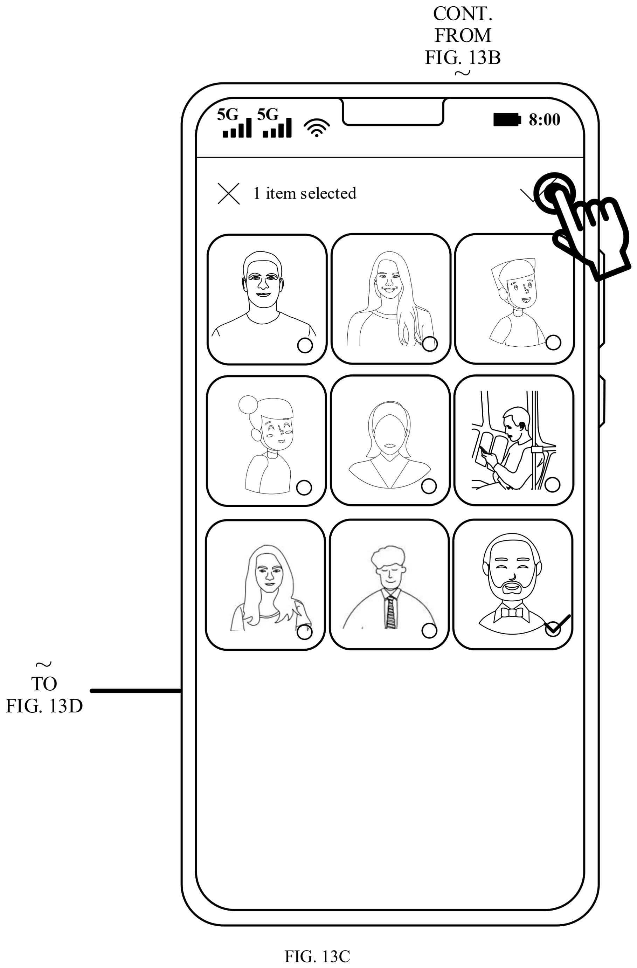

The selection interface 24a may further include selection information 24a2. When the user selects the facial image 11, so that the first selection control 242 of the facial image 11 is displayed in the selected state, the selection information 24a2 displays a quantity of selected facial images 11 in the selection interface 24a. For example, after the user selects a facial image 11 in the selection interface 24a, a selection interface displayed on the display switches from displaying FIG. 13B to displaying FIG. 13C, a first selection control 242 of the selected facial image 11 is displayed in a "selected" display state, and the selection information 24a1 is displayed as "1 item selected".

Because a video theme is Personal photos, only one facial image 11 is selected for Personal photos. Therefore, in the selection interface 24a corresponding to Personal photos, the selection information 24a1 only indicates two cases: "Unselected" and "1 item selected".

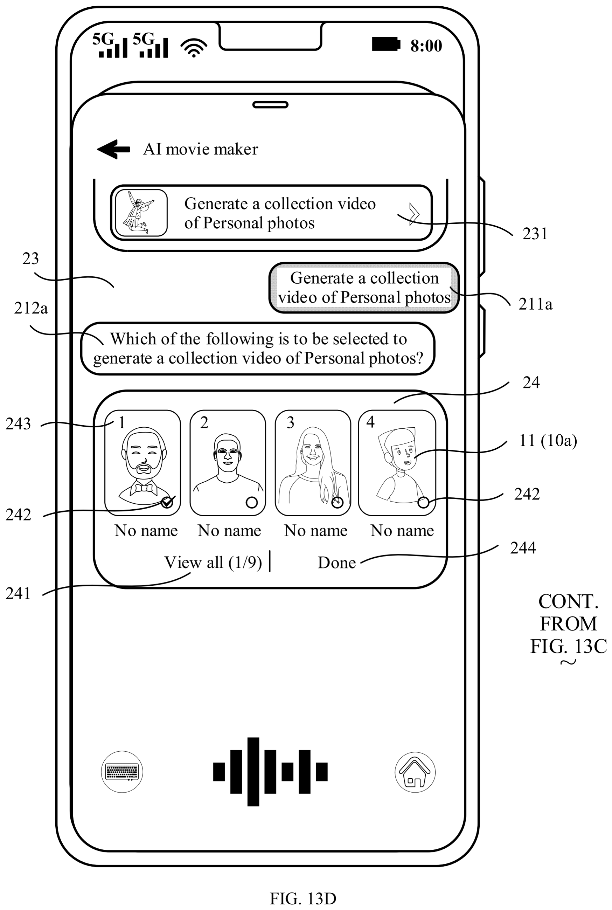

The selection interface 24a may further include a determining control 24a3. After the user has selected the facial image 11 in the selection interface 24a, the user may perform an operation on the determining control 24a3, to confirm that selection of the facial image 11 is completed in the selection interface 24a. The display switches from displaying the selection interface displayed in FIG. 13C to displaying the first selection window 24 shown in FIG. 13D. In this case, the selected facial image 11 in the selection interface 24a exists in the first selection window 24, and the corresponding first selection control 242 is displayed in a "selected" display state.

When the user does not select the facial image 11, the determining control 24a3 may be displayed in gray, and the electronic device does not perform any step if the user taps the determining control 24a3.

Further, in the first selection window 24 shown in FIG. 13D, the first expansion control 241 may further display a quantity of selected facial images 11 and a total quantity of facial images, to prompt the user of a quantity of selected persons.

In this case, the first selection window 24 shown in FIG. 13D is basically the same as the first selection window 24 shown in FIG. 12B. In other words, selection of the facial image 11 is completed in the first selection window 24 by using the fourth operation.

S154: The user inputs a fifth operation for one facial image into the electronic device. For example, the user inputs a fifth operation for the selected facial image 11 in the first selection window 24 into the electronic device.

As shown in FIG. 12A, the first selection window 24 may further include a first selection determining control 244. The user may perform an operation on the first selection determining control 244, which is used as a first selection determining operation input by the user for one first face group 10a into the voice assistant application.

Alternatively, the user may send a "selected" voice to the smartphone or tap the first selection determining control 244 in the first selection window 24, which is used as the fifth operation input by the user for the selected facial image 11 in the first selection window 24 into the voice assistant application.

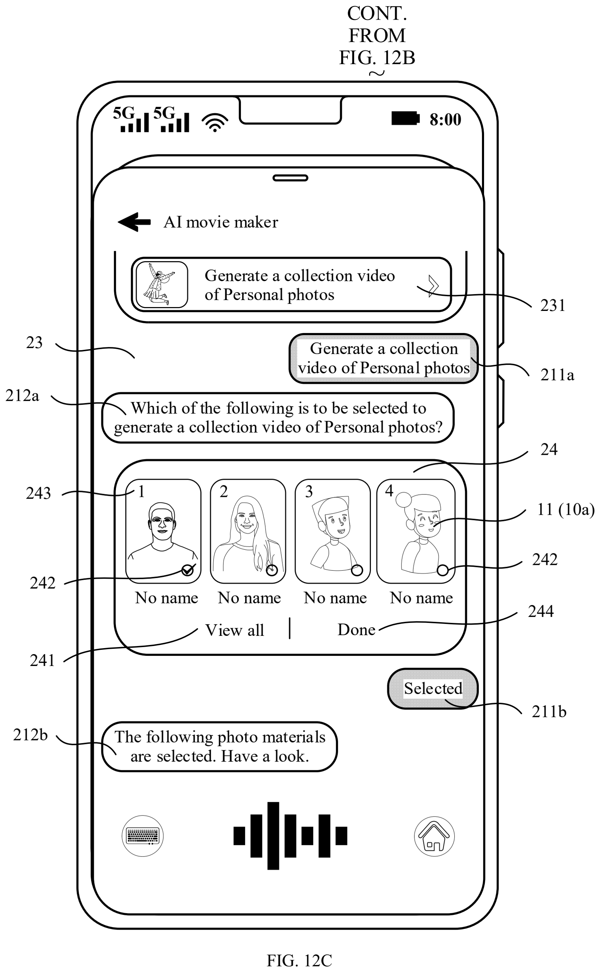

In some feasible implementations, after the user inputs the fifth operation into the electronic device, the display of the electronic device switches from the first selection window 24 shown in FIG. 12B to that shown in FIG. 12C, and the voice assistant application may display a first chat message 211b corresponding to the voice in the operation window 23 of Personal photos based on a voice sent by the user. The first chat message 211b may be displayed below the first selection window 24.

In some feasible implementations, the electronic device responds to the first chat message 211b. As shown in FIG. 12C, the voice assistant application may display a second chat message 212b for the first chat message 211b before performing S16, to reply to the first chat message 211b.

The electronic device responds to a first selection determining operation performed by the user on one facial image, and then performs S16. For example, the electronic device responds to the fifth operation performed by the user on the facial image 11 whose arrangement sequence number is 1 in the first selection window 24, determines a person and a first face group 10a that correspond to Personal photos, and then performs S16.

The foregoing is a specific procedure of S14 and S15 when the at least one face group obtained by the voice assistant application in S14 includes only the first face group 10a.

S143: The electronic device displays an operation page of the target video theme, where the operation page includes the second video creation entry.

When the plurality of face groups 10 obtained by the voice assistant application include the second face group 10b (at least one of a plurality of persons corresponding to the face group includes name data, as shown in FIG. 1C):

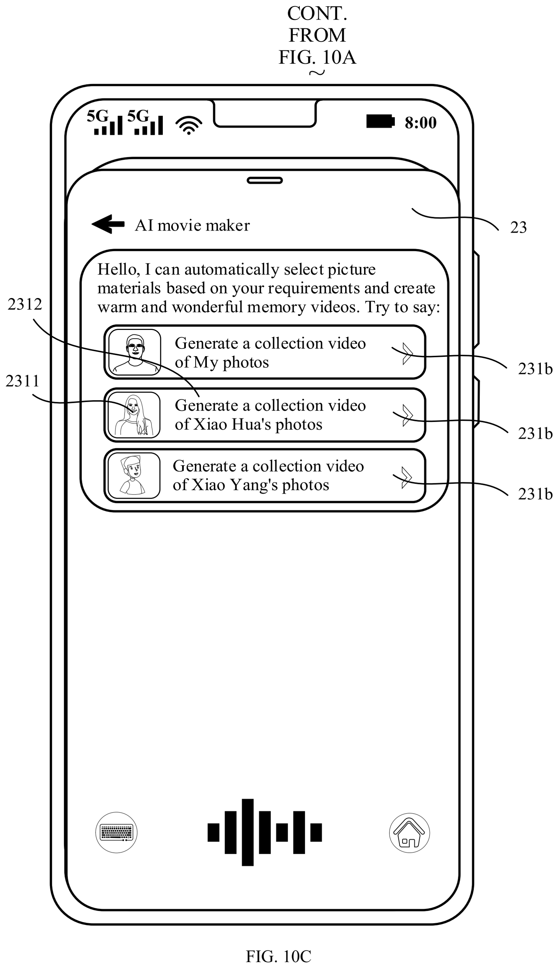

In some examples, the voice assistant application responds to the second operation performed by the user on the Personal photos card, and the display of the electronic device switches from the video production window 22 shown in FIG. 10A to an operation window 23 of "Personal photo" that displays and includes N (N is a positive integer greater than 1) video creation entries (the second video creation entry) 231b and that is shown in FIG. 10C. Each second video creation entry 231b is associated with one second face group 10b that has name data, and different second video creation entries 231b correspond to different second face groups 10b.

For example, when the persons corresponding to the at least one face group each have name data, the voice assistant application responds to the second operation performed by the user on the Personal photos card, and the display of the electronic device switches from the video production window 22 shown in FIG. 10A to an operation window 23 that displays and includes N second video creation entries 231b and that is shown in FIG. 10C.

A quantity N of second video creation entries 231b displayed in the personal write operation window 23 may be less than or equal to a quantity P of second face groups 10b in the album application.

In some examples, when N=P, the N second video creation entries 231b displayed in the operation window 23 may correspond to all second face groups 10b.

In some other examples, when N<P, the N second video creation entries 231b displayed in the operation window 23 may correspond to a part of second face groups 10b. In this case, the operation window 23 may further display a second expansion control (not shown in the figure), and after the user performs an operation on the second expansion control, the operation window 23 may expand and display more second video creation entries 231b, so that the user more comprehensively selects the second video creation entries 231b in the operation window 23.

The second video creation entry 231b may include at least one of an entry material 2311 and/or an entry recommendation text 2312.

Because the second video creation entry 231b is associated with the second face group 10b, in each second video creation entry 231b, a portrait material in a corresponding second face group 10 is used as a displayed entry material 2311. In this case, the theme material 2211 displayed on the target theme card 221 may be a material that is preset by the electronic device, or may be a picture or a video stored in the album application. For example, the theme material displayed on the target theme card 221 may be an entry material 2311 displayed in any second video creation entry 231b in the operation window 23 of Personal photos.

Similarly, the entry recommendation text 2312 displayed in the second video creation entry 231b may include name data 12 in a corresponding second face group 10b. For example, for a second video creation entry 231b corresponding to a second face group 10b whose name data is "Xiao Yang", an entry recommendation text 2312 in the second video creation entry 231b may be "Generate a collection video of Xiao Yang's photos".

When the operation window 23 of the target video theme is shown in FIG. 10C, as shown in FIG. 6A and FIG. 6B, S15 in the procedure may include S155.

S155: The user inputs a sixth operation for the second video creation entry into the electronic device.

As shown in FIG. 10C, the operation window 23 of Personal photos includes N video creation entries (the second video creation entry) 231b.

An example in which the second video creation entry 231b includes the entry recommendation text 2312 is used. The user may send a voice "Generate a collection video of Xiao Hua's photos" to the electronic device or tap the corresponding second video creation entry 231b, which is used as a sixth operation input by the user for a 2^{nd} second video creation entry 231b in the operation window 23 of Personal photos shown in FIG. 10C into the voice assistant application.

Because each second video creation entry 231b in the operation window 23 of Personal photos shown in FIG. 10C corresponds to one person who has name data, a second face group 10b corresponding to Personal photos may be determined by using the sixth operation for the 2^{nd} second video creation entry 231b. This is actually equivalent to the foregoing manner of determining the first face group 10a corresponding to the first video creation entry 231a in S151-S154. Therefore, after S155, the electronic device may perform S16.

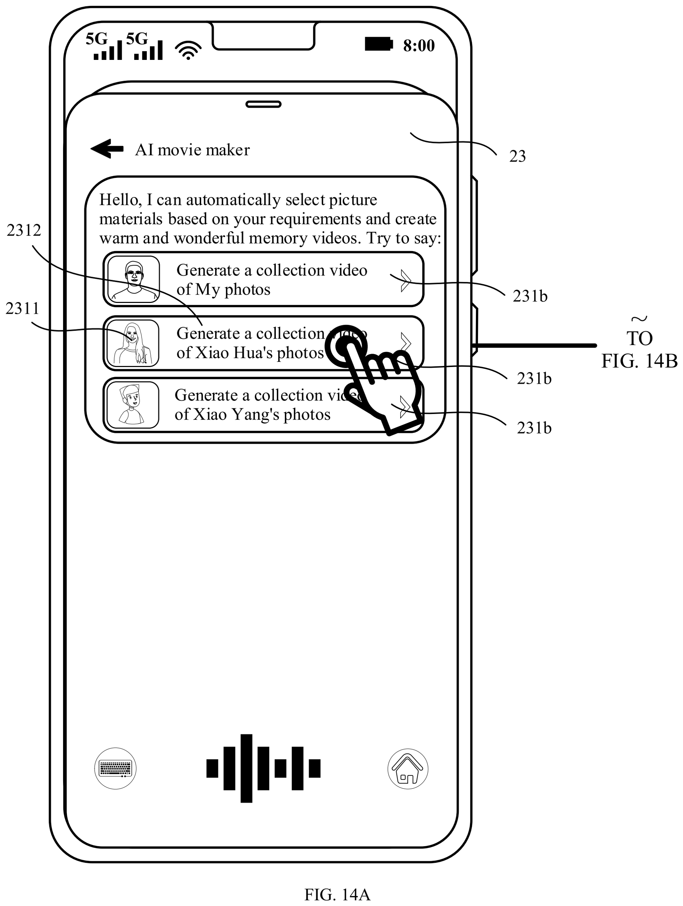

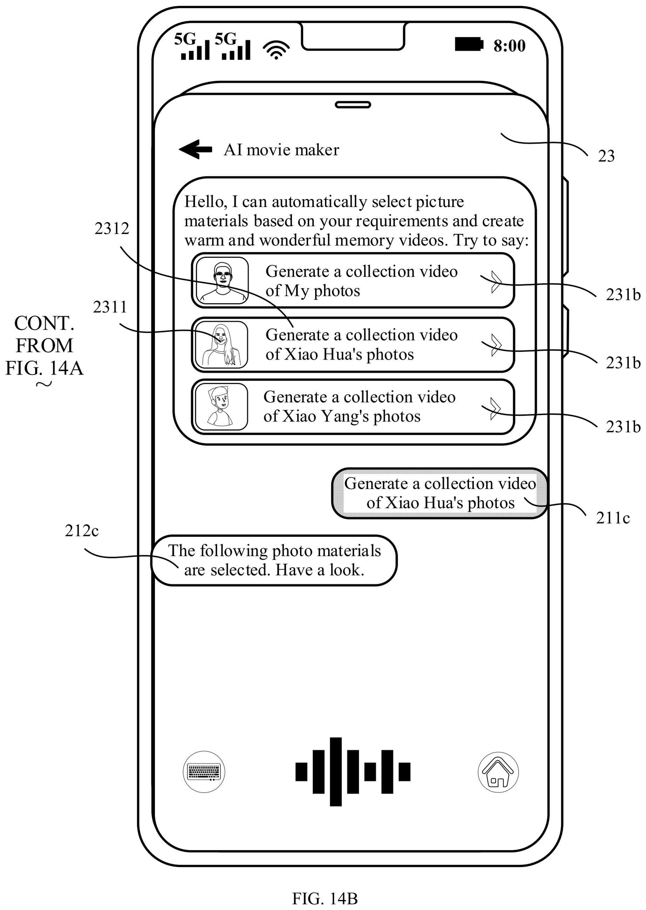

In some feasible implementations, after the user inputs the second selection operation into the electronic device, the display of the electronic device switches from the operation window 23 of Personal photos shown in FIG. 14A to that shown in FIG. 14B, and the voice assistant application may display a first chat message 211c corresponding to a voice in the operation window 23 of Personal photos based on the voice sent by the user. The first chat message 211c may be displayed below the N video creation entries 231b.

In some feasible implementations, the electronic device responds to the first chat message 211c. As shown in FIG. 14B, the voice assistant application may display a second chat message 212c for the first chat message 211c before performing S16, to reply to the first chat message 211c.

The foregoing is a specific procedure of S14-S15 when the at least one face group obtained by the voice assistant application in S14 includes only the second face group 10b.

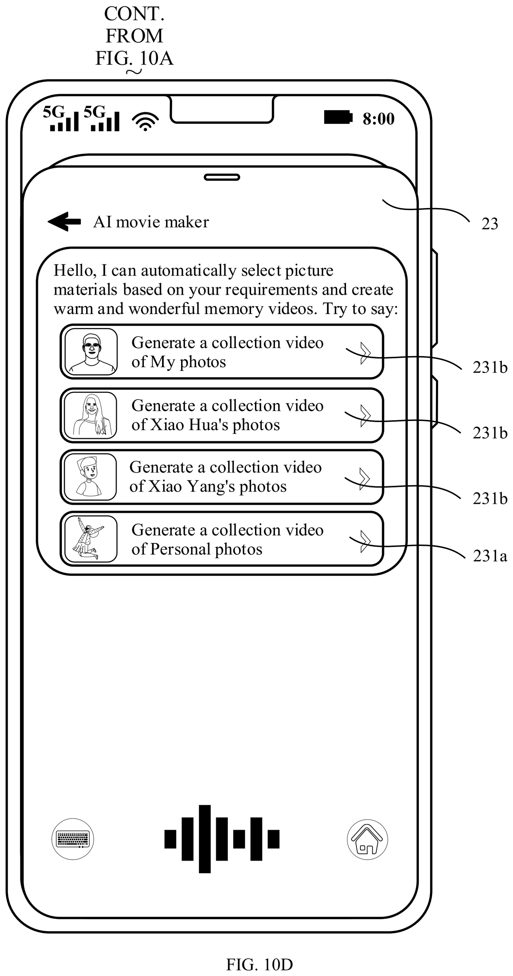

In some other examples, the voice assistant application responds to the second operation performed by the user on the Personal photos card, and the display of the electronic device switches from the video production window 22 shown in FIG. 10A to an operation window 23 that displays and includes N second video creation entries 231b and one first video creation entry 231a and that is shown in FIG. 10D. Each second video creation entry 231b is associated with one person who has name data, and different second video creation entries 231b correspond to different persons. The first video creation entry 231a is associated with a plurality of persons who lack name data.

For example, when a part of the persons corresponding to the at least one face group has name data, and the other part of the persons lacks name data, the voice assistant application responds to the second operation performed by the user on the Personal photos card, and the display of the electronic device switches from the video production window 22 shown in FIG. 10A to an operation window 23 that displays and includes N second video creation entries 231b and one first video creation entry 231a and that is shown in FIG. 10D.

For a procedure in which the user selects the first video creation entry 231a in the operation window 23 shown in FIG. 10D, refer to the foregoing descriptions of S151-S154. For a procedure in which the user selects the second video creation entry 231b in the operation window 23 shown in FIG. 10D, refer to the foregoing descriptions of S155. In addition, the operation window 23 shown in FIG. 10D may also have the foregoing second expansion control and have a same function and effect. Details are not described herein again.

After S15 ends, the electronic device may perform S16.

S16: The electronic device displays a third selection window.

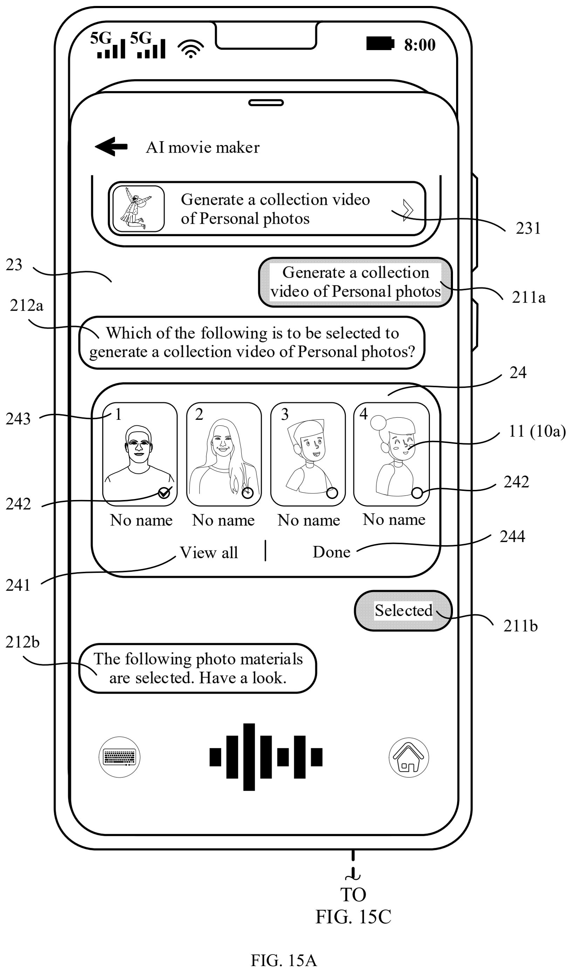

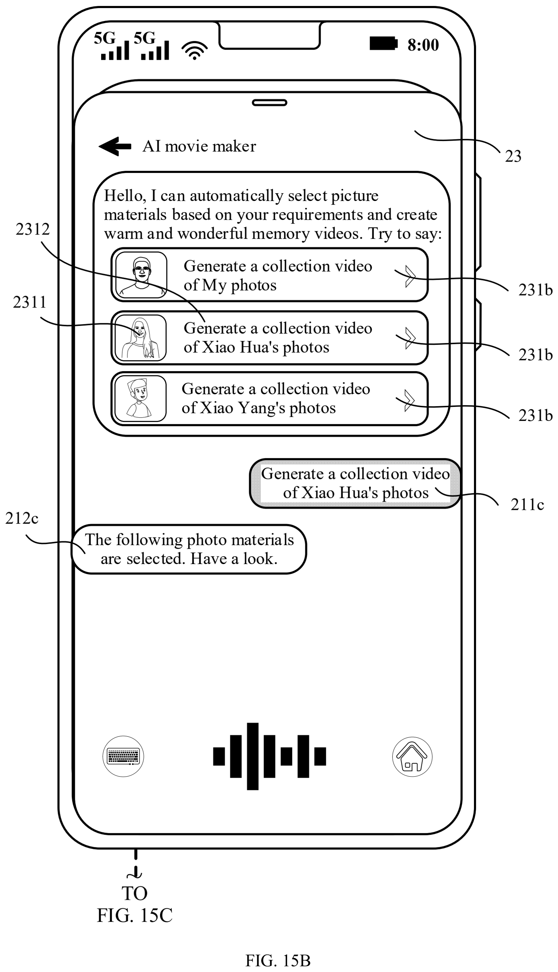

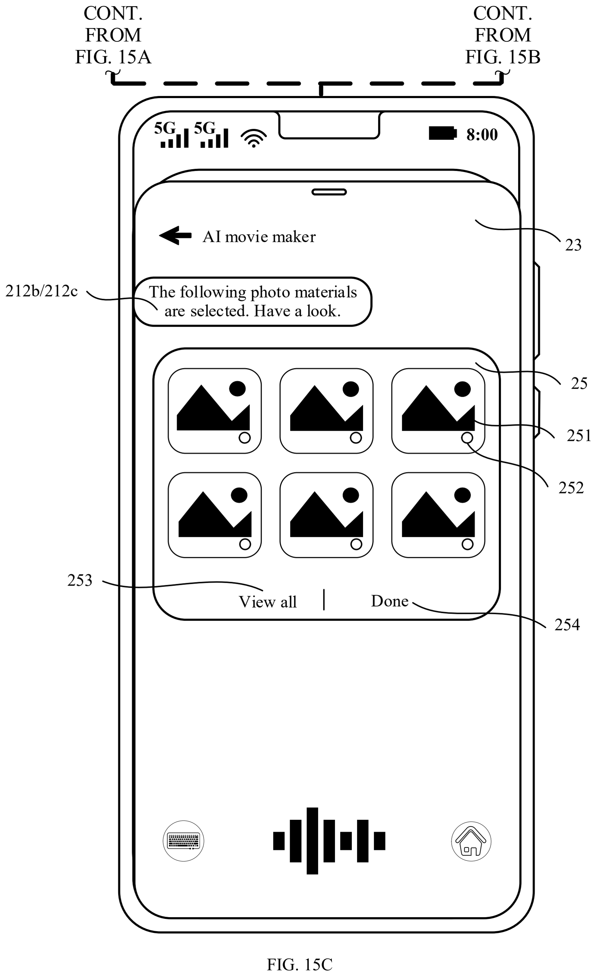

It may be understood that, when the display of the electronic device displays the first selection window 24 shown in FIG. 15A, in response to the fifth operation, after determining a person corresponding to the video theme of Personal photos, the display may switch to display the third selection window 25 shown in FIG. 15C. Alternatively, when the display of the electronic device displays the operation window 23 of Personal photos shown in FIG. 15B, in response to the sixth operation, after determining a person corresponding to the video theme of Personal photos, the display may switch to display the third selection window 25 shown in FIG. 15C. An interface shown in FIG. 15A is the same as an interface shown in FIG. 12C. An interface shown in FIG. 15B is the same as an interface shown in FIG. 14B.

The third selection window 25 may display a plurality of candidate portrait materials 251. The candidate portrait material 251 may be a picture, or may be a video. This is not limited in this embodiment of this application. It should be noted that the plurality of candidate portrait materials 251 displayed in the third selection window 25 are all portrait materials that include a same person (corresponding to the second face group 10b or corresponding to the first face group 10a). In addition to the facial image corresponding to the face group, the portrait material may include a facial image of another person.

In some examples, a quantity of candidate portrait materials 251 displayed in the third selection window 25 may be a fixed value. For example, the quantity of candidate portrait materials 251 displayed in the third selection window 25 is 3, 4, 6, 8, and 9. This is not limited herein. In some other examples, if there is a small quantity of candidate portrait materials 251 in which a person exists, the third selection window 25 may display all portrait materials.

The third selection window 25 may display a third selection control 252. A plurality of third selection controls 252 are in one-to-one correspondence with the plurality of candidate portrait materials 251, and each third selection control 252 is located in a display area of the candidate portrait material 251. A function of the third selection control 252 for the candidate portrait material 251 is the same as or similar to a function of the first selection control 242 for the first face group 10a. Details are not described herein again.

The plurality of candidate portrait materials 251 in the third selection window 25 may be arranged in a time sequence, or may be arranged in descending order of aesthetic scores after aesthetic scoring is performed on all the candidate portrait materials, or may be arranged in another arrangement manner. This is not limited in this embodiment of this application.

In addition, the plurality of candidate portrait materials 251 in the third selection window 25 may display all portrait materials that meet a condition in an album, or may display a part of portrait materials. For example, the voice assistant application performs deduplication processing on portrait pictures in the album, and then performs display. For another example, after performing aesthetic scoring on all materials, the voice assistant application displays a portrait picture whose aesthetic score is higher than a preset score threshold.

S17: The user inputs a seventh operation for one or more candidate portrait materials into the electronic device.

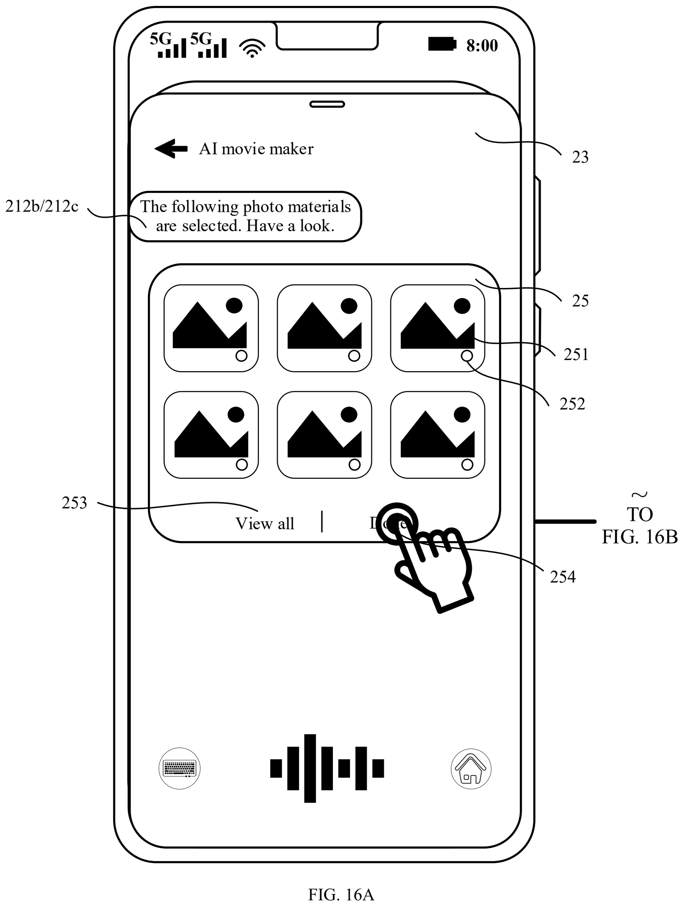

For example, the user may send a voice "Select all" to the smartphone or manually select each candidate portrait material 251 in the third selection window 25, which is used as the seventh operation input by the user for the one or more candidate portrait materials 251 into the voice assistant application. In this case, the display of the electronic device switches from the third selection window 25 shown in FIG. 16A to that shown in FIG. 16A, and a third selection control 252 located in each material 251 changes from an "unselected" display state to a "selected" display state. An interface shown in FIG. 16A is the same as an interface shown in FIG. 15C.

When the third selection window 25 displays only a part of the candidate portrait materials 251, the third selection window 25 may further include a third expansion control 253. The third expansion control 253 may be displayed below the plurality of candidate portrait materials 251. The user may perform an operation on the third expansion control 253, so that the screen of the electronic device displays more candidate portrait materials 251.

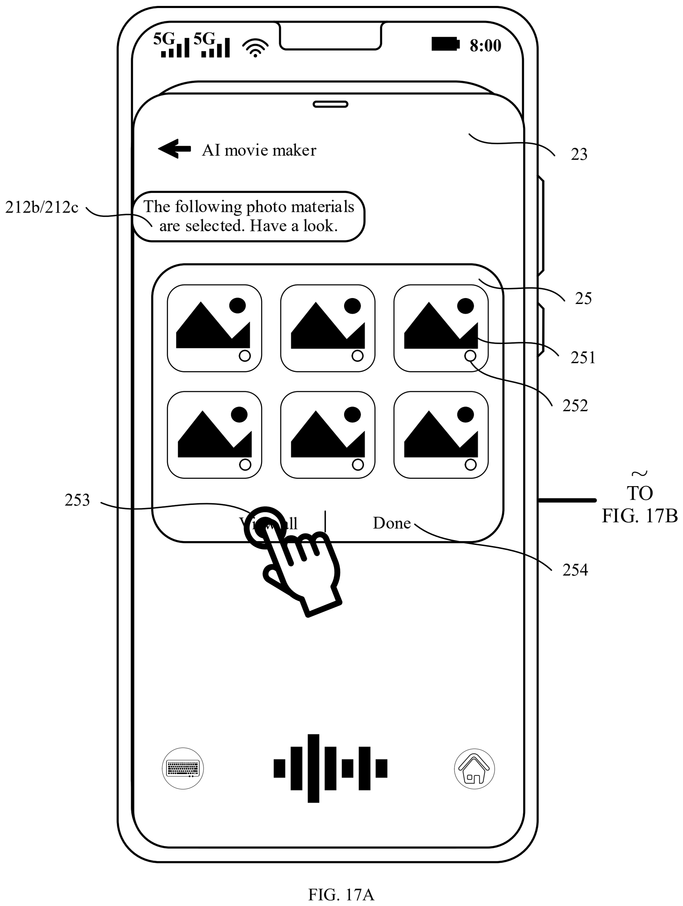

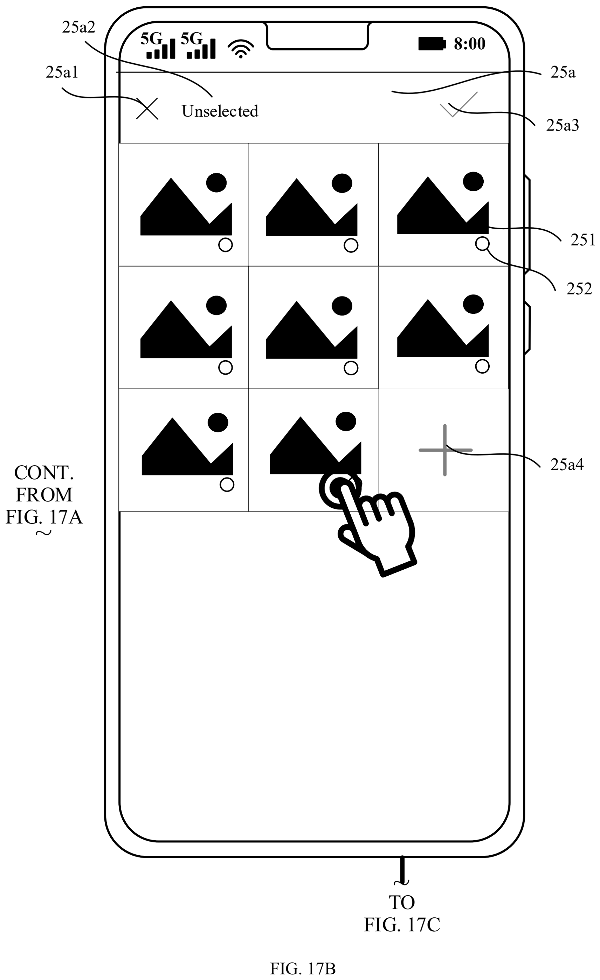

In some examples, if the user performs an operation on the third expansion control 253 in the third selection window 25, the display of the electronic device switches from the third selection window 25 shown in FIG. 17A to a person material interface corresponding to one person (or one face group 10) shown in FIG. 17B. The person material interface may display the candidate person material displayed in the third selection window 25 and more candidate person materials, to increase a quantity of displayed candidate person material. Candidate person materials in the person material interface 25a are all candidate portrait materials 251 that include a same person (corresponding to the second face group 10b or corresponding to the first face group 10a). An interface shown in FIG. 17A is the same as an interface shown in FIG. 15C.

Each candidate portrait material 251 in the person material interface 25a also corresponds to a third selection control 252 that has a same function as the first selection control 242 in the first selection window 24. Details are not described herein again. The user may select one or more candidate portrait materials 251 from the person material interface 25a, and a third selection control 252 of the selected candidate portrait material 251 is displayed in a "selected" display state.

The person material interface 25a may include a second cancellation control 25al. When the user does not find, in the person material interface 25a, a candidate portrait material 251 of a video that the user wants to generate, or when the user touches the third expansion control 252 in the third selection window 25 by mistake and the person material interface 25a is entered, the user may perform an operation on the second cancellation control 25a1, so that the person material interface 25a exits and returns to the third selection window 25.

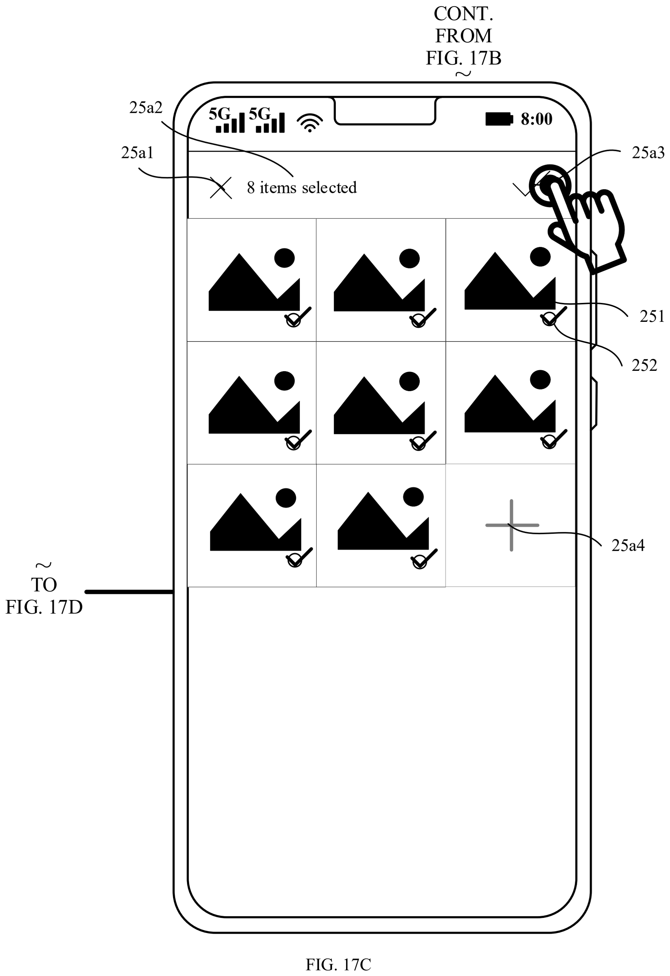

The person material interface 25a may further include selection information 25a2. When the user selects the candidate portrait material 251, so that a second selection control 252 of the candidate portrait material 251 is displayed in a "selected" display state, the selection information 25a2 displays a quantity of selected candidate portrait material 251 in the person material interface 25a. For example, after the user selects a plurality of candidate portrait materials 251 from the person material interface 25a, the person material interface 25a displayed on the display switches from displaying FIG. 17B to displaying FIG. 17C, a second selection control 252 of the selected candidate portrait material 251 is displayed in the "selected" display state, and the selection information 25a1 is displayed as "T items selected". T is a quantity of person materials displayed in the selected state in the person material interface 25a.

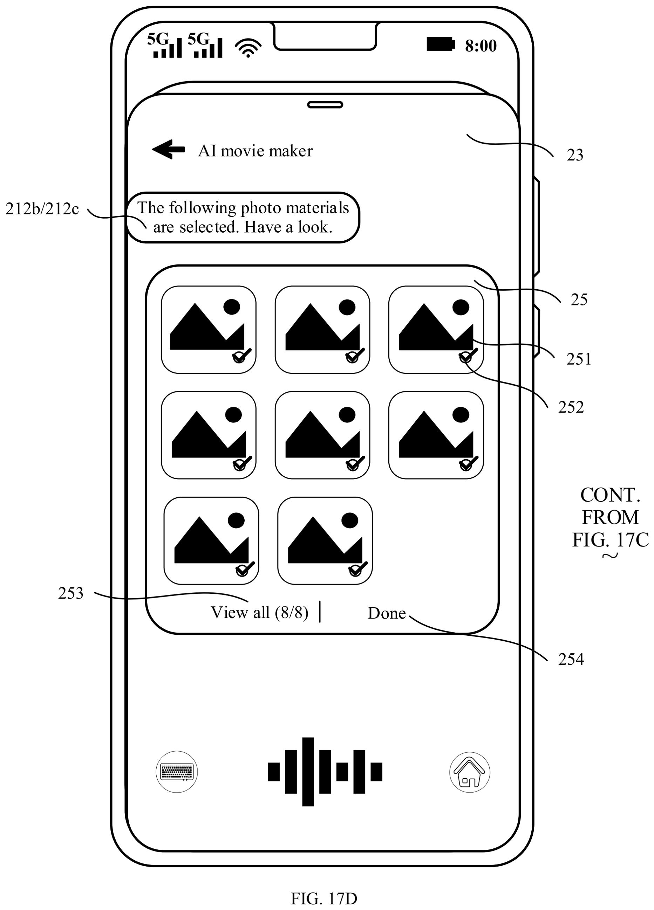

The person material interface 25a may further include a determining control 25a3. After the user has selected the candidate portrait material 251 from the person material interface 25a, the user may perform an operation on the determining control 25a3, to confirm that selection of the candidate portrait material 251 is completed in the person material interface 25a. The display switches from displaying the selection interface displayed in FIG. 17C to displaying the first selection window 24 shown in FIG. 17D. In this case, the selected candidate portrait material 251 in the person material interface 25a exists in the third selection window 25, and the corresponding third selection control 252 is displayed in a "selected" display state.

When the user does not select the candidate portrait material 251, the determining control 25a3 may be displayed in gray, and the electronic device does not perform any step if the user taps the determining control 25a3.

Further, in the third selection window 25 shown in FIG. 17D, the third expansion control 252 may further display a quantity of selected candidate portrait materials 251 and a total quantity of candidate portrait materials 251, to prompt the user of a quantity of selected candidate portrait materials 251.

In some feasible implementations, the person material interface 25a shown in FIG. 17C may further include an add control 25a4. The user may perform an operation on the add control 25a4, to further select a portrait material of another person from the album, or select another non-portrait material. This is not limited herein.

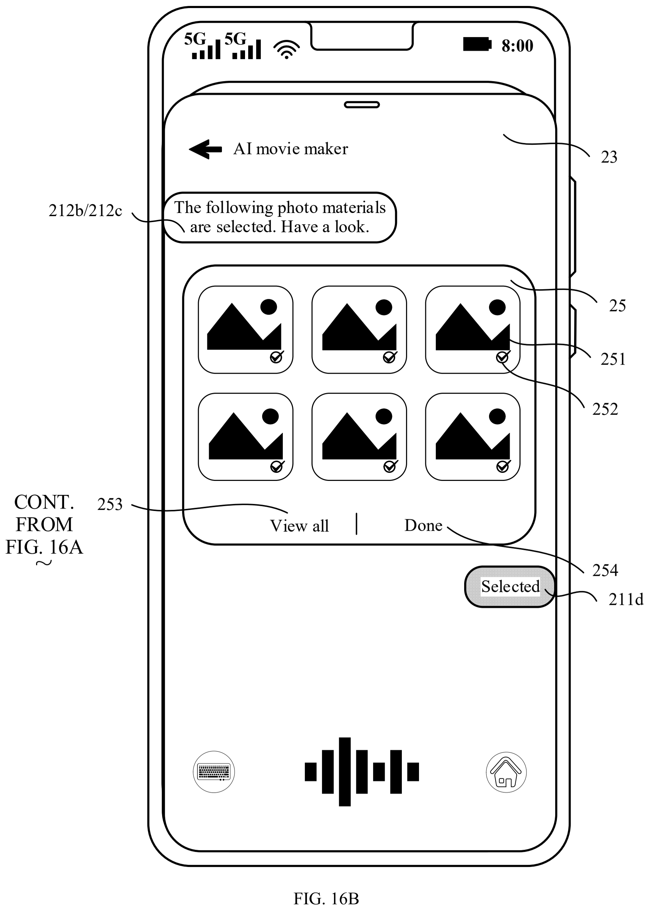

In this case, the third selection window 25 shown in FIG. 17D is basically the same as the third selection window 25 shown in FIG. 16B. In other words, selection of the candidate portrait material 251 is completed in the third selection window 25 by using the seventh operation.

S18: The user inputs an eighth operation for the one or more candidate portrait materials into the electronic device. For example, the user inputs a third selection determining operation for the selected candidate portrait material 251 into the electronic device.

As shown in FIG. 16B, the third selection window 25 may further include a third selection determining control 254.

The user may send a voice "Selected" to the smartphone or the user taps the third selection determining control 254, which is used as the eighth operation input by the user for the plurality of selected candidate portrait materials 251 into the voice assistant application.

In some feasible implementations, after the user inputs the eighth operation into the electronic device, as shown in FIG. 16B, the voice assistant application may display a first chat message 211d corresponding to the voice in the operation window 23 of Personal photos based on a voice sent by the user. The first chat message 211d may be displayed below the third selection window 25.

S19: The electronic device generates a video in response to the eighth operation performed by the user on the one or more candidate portrait materials.

After determining a plurality of selected materials in response to the eighth operation performed by the user on the one or more candidate portrait materials 251, the electronic device may generate the video based on the foregoing video composition function. Details are not described herein again.

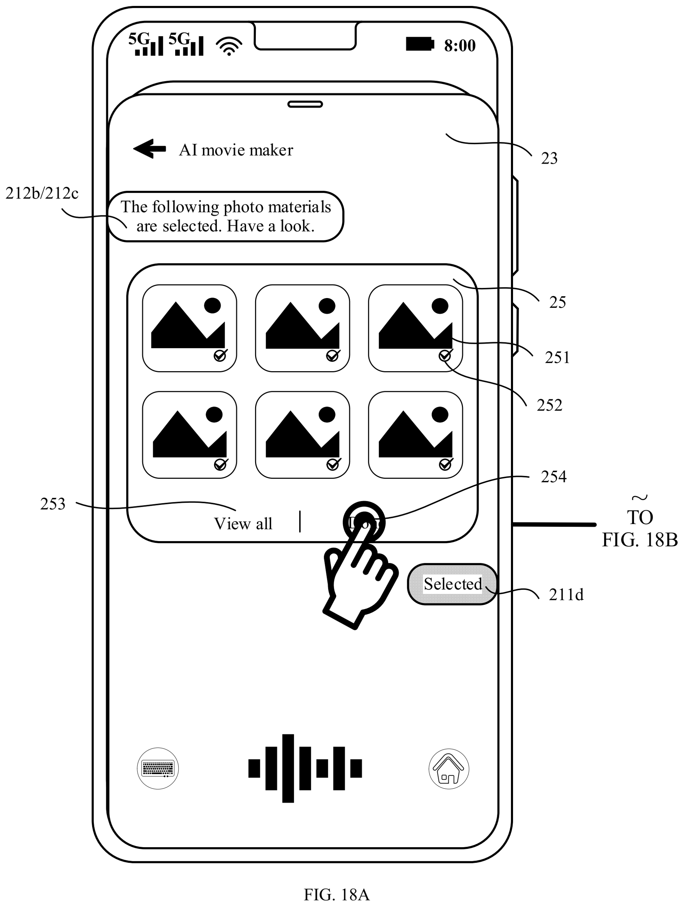

After the electronic device generates the video, the display of the electronic device switches from the third selection window 25 shown in FIG. 18A to a video operation window 23 of Personal photos shown in FIG. 18B, and the video operation window 23 of Personal photos displays a composed video 26. An interface shown in FIG. 18A is the same as an interface shown in FIG. 16B.

In some feasible implementations, the electronic device responds to the first chat message 211d. As shown in FIG. 18B, the voice assistant application may display a second chat message 212d for the first chat message 211d before displaying the video 26, to reply to the first chat message 211d. Then, the video 26 is displayed below the second chat message 212d.

In this way, according to the video generation method provided in this embodiment of this application, based on a feature that different persons have different facial features and based on a facial image existing in each portrait material, each portrait material may correspond to a face group in which a facial image exists. Further, with reference to a design that each video creation entry corresponds to one or more persons, and persons corresponding to different video creation entries are not completely the same, in the video generation method, a portrait material corresponding to one or more persons may be found at one time by using one second video creation entry, thereby improving efficiency of determining the portrait material in a composed video, and improving video generation efficiency.

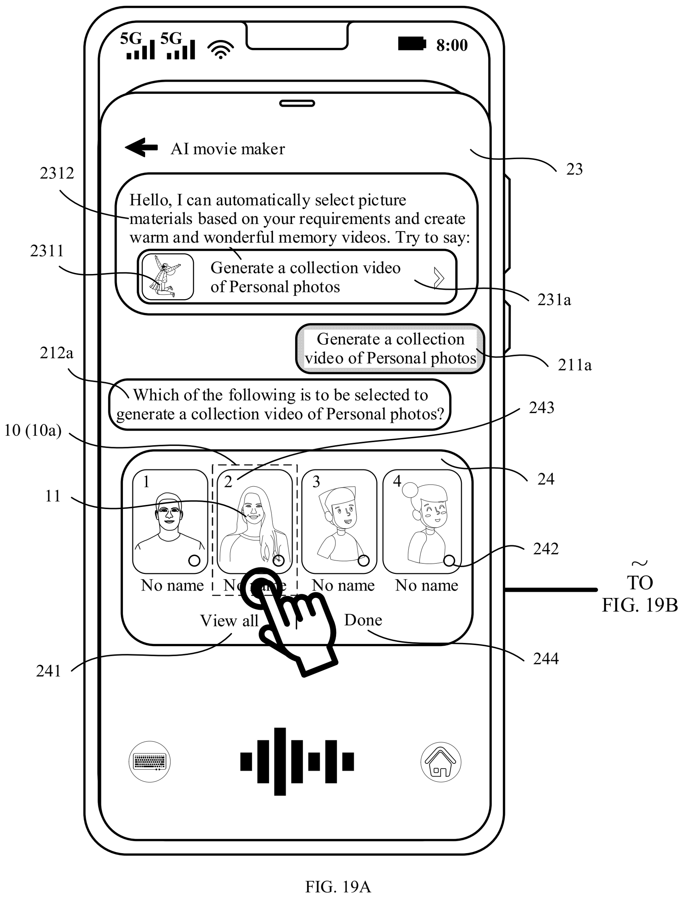

FIG. 19A to FIG. 19C are a schematic diagram of display of adding name data to a face group in a video composition procedure.

It can be learned from S11-S19 that, whether the at least one face group in the album application includes name data exerts great impact on the foregoing procedure. Generally, to add name data to the face group in the album application, the album application needs to be started on a home screen of the electronic device, and then a corresponding face group is found to add the name data. Such an operation is complex. In this embodiment of this application, a path of adding the name data of the face group to the video composition procedure is added, to conveniently add the name data of the face group.

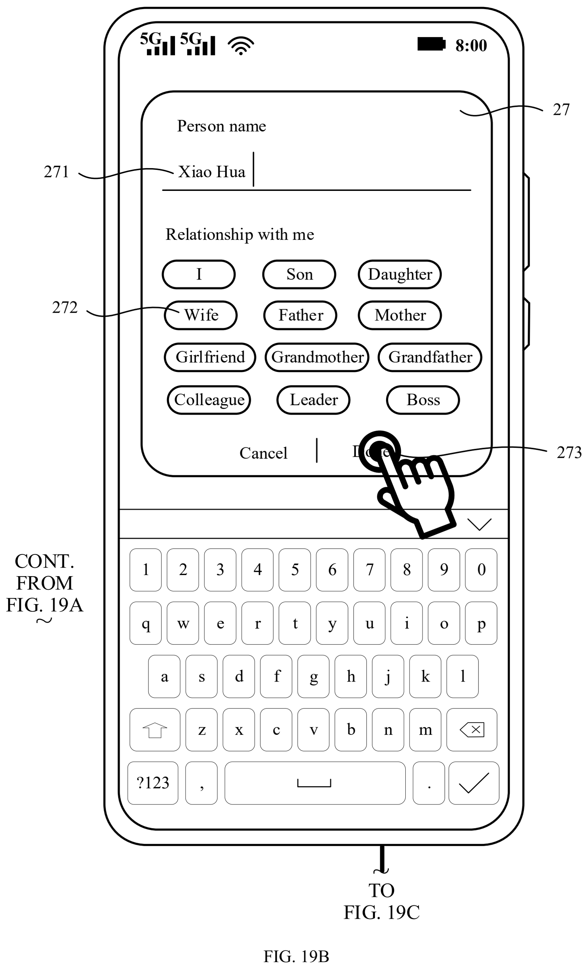

When the electronic device displays the first selection window 24 shown in FIG. 19A, a text "Add name" may be used as a name control. The user may perform a ninth operation on one or more name controls in the first selection window 24. When the user performs the ninth operation on a name control (the target name control) of a 2^{nd} facial image 11, the voice assistant application responds to the ninth operation, and the display of the electronic device switches from displaying FIG. 19A to displaying a name edit window 27 shown in FIG. 19B. An interface shown in FIG. 19A is the same as an interface shown in FIG. 11B.

The name edit window 27 may include a person name column 271. The user may edit, in the person name column 271, a name, a diminutive, a nickname, or an epithet of the 2^{nd} facial image 11 corresponding to the first selection window 24, which is used as name subdata of a person corresponding to a 2^{nd} face group 10.

The name edit window 27 may further include a relationship control 272. There may be a plurality of relationship controls 272, and each relationship control 272 corresponds to one relationship subdata used to represent a relationship between a person and an owner of the electronic device. The relationship control 272 may correspond to relationship subdata that represents a relative relationship, for example, relationship subdata that represents that the person is a father of the owner of the electronic device, or relationship subdata that represents that the person is a grandmother of the owner of the electronic device. The relationship control 272 may alternatively be relationship subdata that represents a workplace relationship, for example, relationship subdata that represents that the person is a colleague of the owner of the electronic device.

The user may select a relationship control 272 in a plurality of relationship controls 272 by using a selection operation. The electronic device determines relationship subdata of a person corresponding to the 2^{nd} facial image 11 in response to the selection operation.

It should be noted that shown in FIG. 19B, a user-defined relationship control may be further included. In response to that the user taps the user-defined relationship control and the user inputs relationship subdata, the electronic device may determine the relationship between the person and the owner of the electronic device.

It should be noted that, the user may perform an operation on both or only one of the person name column 271 and the relationship control 272. This is not limited in this embodiment of this application. When the user performs an operation only on the person name column 271, the name subdata may be used as the name data of the face group 10. When the user performs an operation only on the relationship control 272, the relationship subdata may be used as the name data of the face group 10. When the user performs an operation on both of the person name column 271 and the relationship control 272, the name subdata or the relationship subdata may be used as the name data of the face group 10.

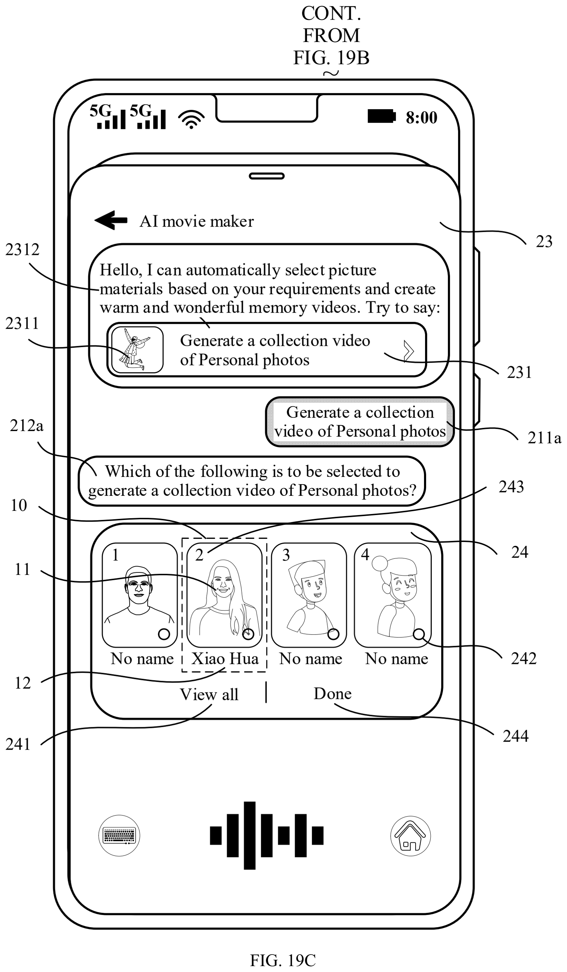

The name edit window 27 may further include a name determining control 273. After the user completes editing of the name subdata in the person name column 271 and/or determines the relationship subdata by performing an operation on the relationship control 272, the user may perform an operation on the name determining control 273, to complete a procedure of editing the name data. In response to an operation performed by the user on the name determining control 273, the display of the electronic device switches from displaying FIG. 19B to displaying a first selection window 24 shown in FIG. 19C. In this case, the first selection window 24 displays name data of the person corresponding to the 2^{nd} facial image 11.

In some examples, the name edit window 27 shown in FIG. 19B may be a window provided by the voice assistant application. After obtaining the name data in the name edit window 27, the voice assistant application may provide the name data to the album application, so that the name data of the face group 10 is synchronously added in the album application

In some other examples, the name edit window 27 shown in FIG. 19B may be a window provided by the album application. After the album application obtains the name data by using the name edit window 27, the name data of the face group 10 is directly added in the album application. In addition, the name data may be provided for the voice assistant application, so that the first selection window 24 may synchronously display the name data of the face group 10.

The foregoing provides descriptions in S11-S19 by using an example in which the video theme of Personal photos is used as the target video theme.

The following provides descriptions by using an example in which a video theme of Family group-photos is used as a target video theme.

As shown in FIG. 6A and FIG. 6B, a video generation method provided in an embodiment of this application includes S11-S19.

S11: A user inputs a first operation for a video composition function into an electronic device.

S12: A voice assistant application displays a video production window on a display in response to the first operation.

In this embodiment, for a specific process of S11-S12, refer to the descriptions of S11-S12 in the video theme of Personal photos. Details are not described herein again.

S13: The user inputs a second operation for a theme card of Family group-photos into the electronic device.

For example, when the electronic device displays a video production window 22, the user may send a voice "I select Family group-photos" to a smartphone; or the user may tap a theme card 221 corresponding to Family group-photos, which is used as the second operation input by the user for a Family group-photos card into the voice assistant application.

S14: The electronic device displays an operation window of a video theme of Family group-photos in response to the second operation performed by the user on the theme card of Family group-photos. For example, the electronic device displays an operation window of Family group-photos in response to an operation performed by the user on the Family group-photos card.

Before displaying the operation window of the video theme of Family group-photos, the voice assistant application of the electronic device may obtain at least one face group corresponding to a plurality of portrait materials in an album application. An example in which the album application provides the at least one face group for the voice assistant application is used. The at least one face group may include a first face group 10a and does not include a second face group 10b; or the at least one face group may include a second face group 10b and does not include a first face group 10a; or the at least one face group may include both a first face group 10a and a second face group 10b.

When the at least one face group includes the first face group 10a and does not include the second face group 10b, the operation window displayed by the electronic device may include a first video creation entry corresponding to the first face group 10a; or when the at least one face group includes the second face group 10b and does not include the first face group 10a, the operation window displayed by the electronic device may include a second video creation entry corresponding to the second face group 10b; or when both the first face group 10a and the second face group 10b are included, the operation window displayed by the electronic device may include only a second video creation entry corresponding to the second face group 10b, or may include both a second video creation entry corresponding to the second face group 10b and a first video creation entry corresponding to the first face group 10a.

As shown in FIG. 6A and FIG. 6B, in some examples, to distinguish whether the second video creation entry exists in the operation window, S14 may include S141-S143.

S141: The electronic device determines whether the at least one face group includes the second face group.

S141 is equivalent to determining whether a person who has name data exists in persons corresponding to the at least one face group.

When the at least one face group does not include the second face group, all the persons corresponding to the at least one face group lack name data, and the electronic device performs S142.

When the at least one face group includes the second face group, at least one of the persons corresponding to the at least one face group has name data, and the electronic device performs S143.

S142: The electronic device displays an operation page of the video theme, where the operation page includes the first video creation entry.

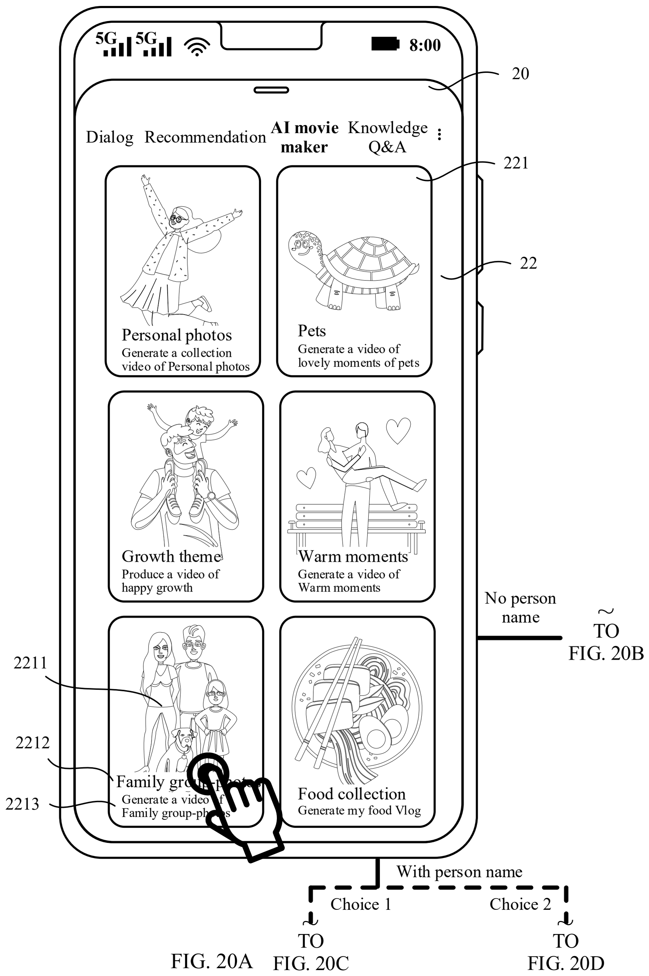

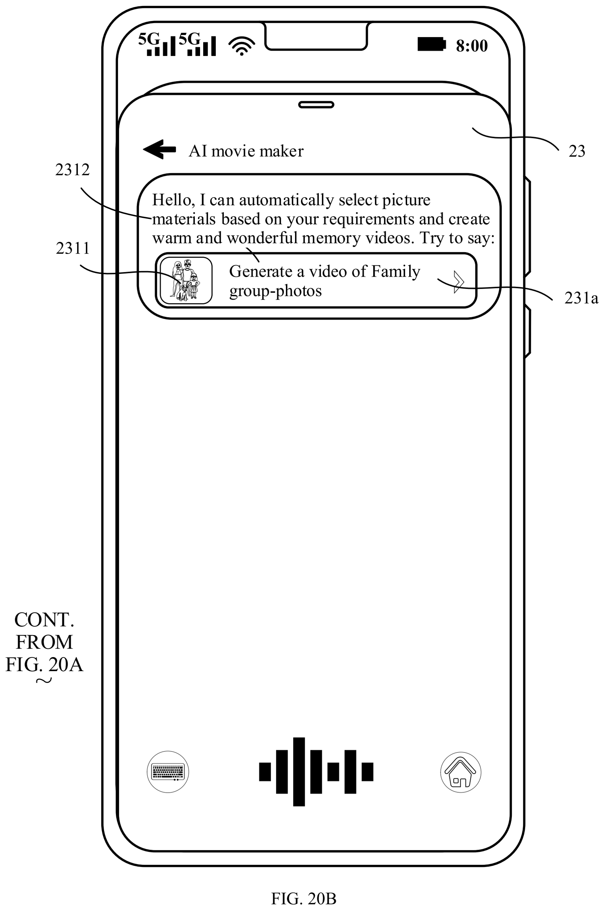

When a plurality of face groups obtained by the voice assistant application each are the first face group 10a (no person corresponding to the face groups includes name data, as shown in FIG. 1B), The voice assistant application responds to the second operation performed by the user on the Family group-photos card, and the display of the electronic device switches from the video production window 22 shown in FIG. 20A to an operation window 23 of Family group-photos that displays and includes one video creation entry (the first video creation entry) 231a and that is shown in FIG. 20B. The first video creation entry 231a is associated with a plurality of first face groups 10a.

When an operation window of the target video theme is shown in FIG. 10B, as shown in FIG. 6A and FIG. 6B, S15 in the procedure may include S151-S154.

S151: The user inputs a third operation for the first video creation entry into the electronic device.

The user may send a voice "Generate a video of Family group-photos" to the smartphone or tap the first video creation entry 231a, which is used as the third operation (a first selection operation) input by the user for the first video creation entry 231a into the voice assistant application.

S152: The electronic device displays a first selection window in response to the third operation performed by the user on the first video creation entry.

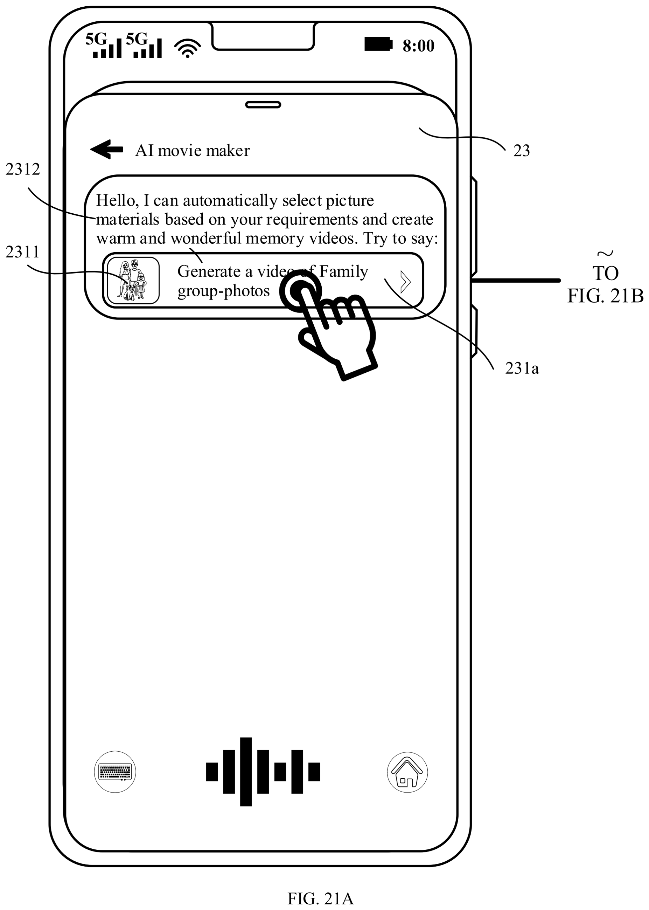

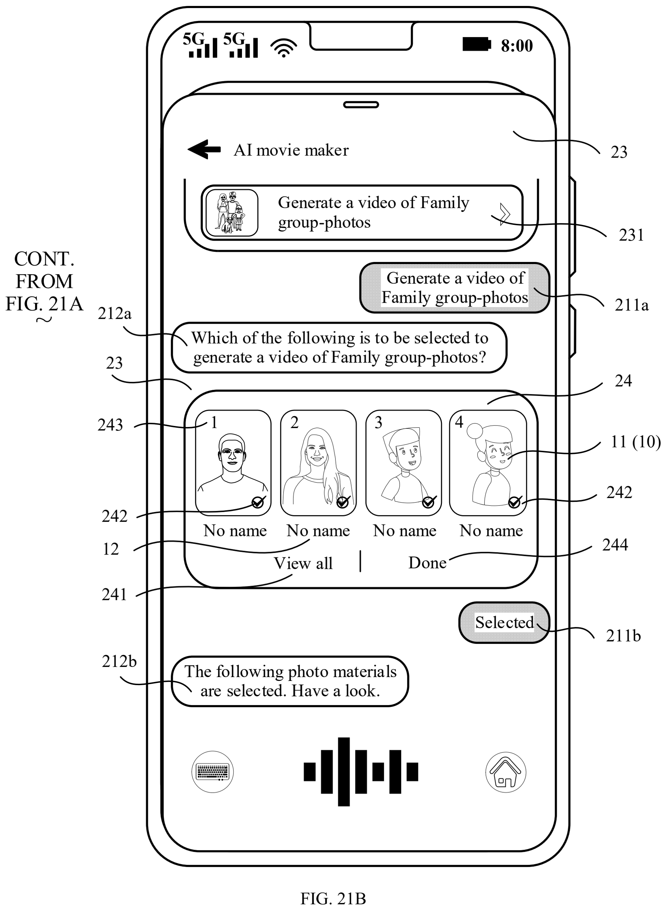

The voice assistant application of the electronic device responds to the first selection operation performed by the user on the first video creation entry 231a. The display of the electronic device switches from displaying the operation window 23 of Family group-photos displayed in FIG. 21A to displaying a first selection window 24 by the display in FIG. 21B. An interface displayed in FIG. 21A is the same as an interface displayed in FIG. 20B.

The first selection window 24 may include one or more facial images 11, different facial images 11 correspond to different persons and first face groups 10a, and no person includes name data 12. As shown in FIG. 21B, when the person does not include the name data 12, a text "Add name" is displayed below the facial image 11, to attract the user to name the person.

In this embodiment, the text "Add name" in the first selection window 24 may also be used as a name control, to perform a procedure of adding name data to the first face group 10a. A procedure of adding the name data is basically the same as a procedure shown in FIG. 19A to FIG. 19C, and details are not described herein again.

S153: The user inputs a fourth operation for at least two face groups 10 into the electronic device.

As shown in FIG. 21B, the first selection window 24 may further include a plurality of first selection controls 242, the plurality of first selection controls 242 are in one-to-one correspondence with a plurality of facial images 11, and each first selection control 242 is located in a display area of the facial image 11. The user may send a voice "Select all" to the smartphone or tap selection controls 242 corresponding to the plurality of face groups 10, which is used as a fourth operation input by the user for the plurality of first face groups 10a into the voice assistant application. In this case, the display of the electronic device is displayed as shown in FIG. 21B. First selection controls 242 corresponding to all first face groups 10a in the first selection window 24 change from an "unselected" display state to a "selected" display state.

It should be noted that the first selection window 24 shown in FIG. 21B may also include the foregoing first expansion control 241. The user may perform an operation on the first expansion control 241, and a selection interface is entered to select facial images 11 in the plurality of first face groups 10a. The user needs to select more than two persons in the selection interface. When a quantity of persons selected by the user is less than 2, the user performs an operation on a determining control, and the electronic device does not perform any step.

S154: The user inputs a fifth operation for at least two first face groups into the electronic device. For example, the user inputs a first selection determining operation for all first face groups 10a in FIG. 21B into the electronic device.

As shown in FIG. 21B, the first selection window 24 may further include a first selection determining control 244. The user may perform an operation on the first selection determining control 244, which is used as a first selection determining operation input by the user for at least two selected first face groups 10a into the voice assistant application.

Alternatively, the user may send a voice "Selected" to the smartphone or the user manually taps the facial image 11 displayed in the plurality of first face groups 10a, which is used as the first selection determining operation input by the user for the at least two selected first face groups 10a into the voice assistant application.

The electronic device responds to the first selection determining operation performed by the user for the at least two first face groups 10a, and then performs S16. For example, the electronic device responds to a first selection determining operation performed by the user on all the first face groups 10a in the first selection window 24, determines a face group 10 corresponding to Family group-photos, and then performs S16.

The foregoing is a specific procedure of S14 and S15 when the at least one face group obtained by the voice assistant application in S14 includes only the first face group 10a.

S143: The electronic device displays an operation page of a second video theme, where the operation page includes the second video creation entry.

When the plurality of face groups 10 obtained by the voice assistant application include the second face group 10b (at least one of a plurality of persons corresponding to the face group includes name data, as shown in FIG. 1C):

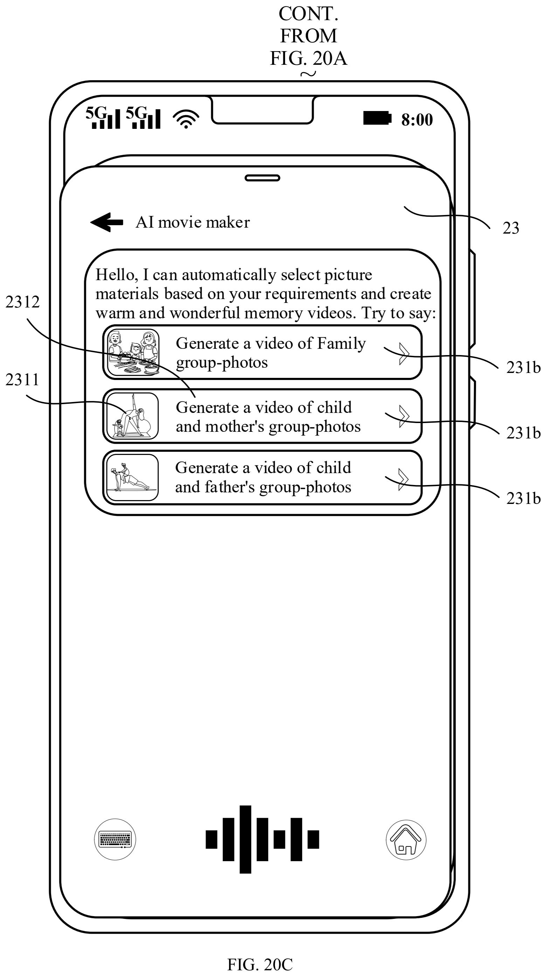

In some examples, the voice assistant application responds to the second operation performed by the user on the Family group-photos card, and the display of the electronic device switches from the video production window 22 shown in FIG. 20A to an operation window 23 of Family group-photos that displays and includes N (N is a positive integer greater than 1) video creation entries (the second video creation entry) 231b and that is shown in FIG. 20C. Each second video creation entry 231b is associated with at least two persons who have name data, and persons corresponding to different second video creation entries 231b are not completely the same.

For example, one second video creation entry 231b is associated with a total of three second face groups 10b of a child, a father, and a mother, another second video creation entry 231b is associated with a total of two second face groups 10b of a child and a father, and still another second video creation entry 231b is associated with a total of two second face groups 10b of a child and a mother. The three second video creation entries 231b each are associated with at least two second face groups 10b that have name data, and second face groups 10b corresponding to the three second video creation entries 231b are not completely the same.

For example, when the persons corresponding to the at least one face group each have name data, the voice assistant application responds to the second operation performed by the user on the Personal photos card, and the display of the electronic device switches from the video production window 22 shown in FIG. 20A to an operation window 23 that displays and includes N second video creation entries 231b and that is shown in FIG. 20C.

When the operation window 23 of the target video theme is shown in FIG. 20C, as shown in FIG. 6A and FIG. 6B, S15 in the procedure may include S155.

S155: The user inputs a sixth operation for the target video creation entry into the electronic device.

As shown in FIG. 20C, the operation window 23 of Family group-photos includes N video creation entries (the second video creation entry) 231b.

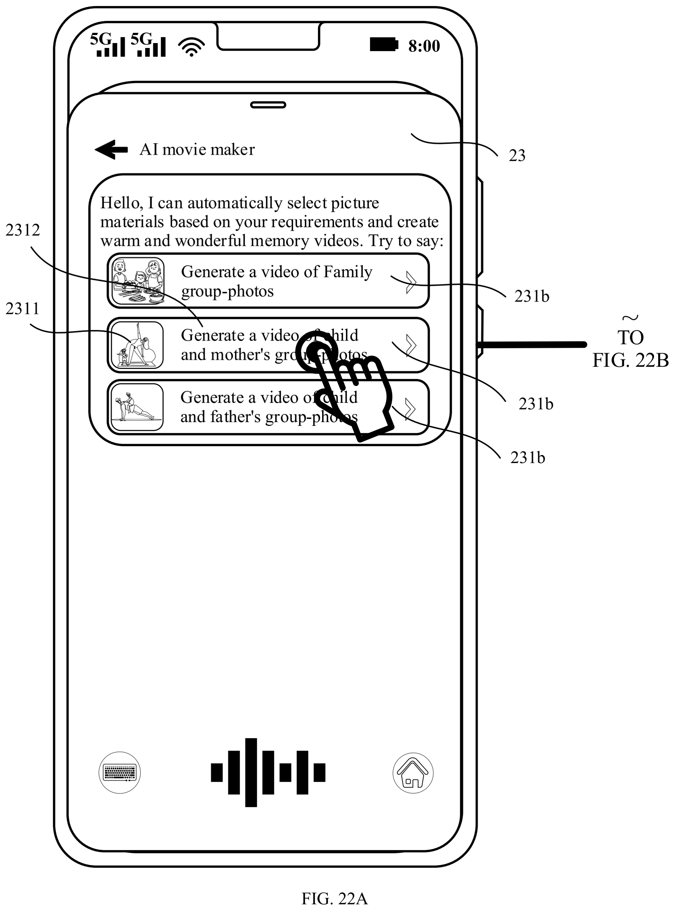

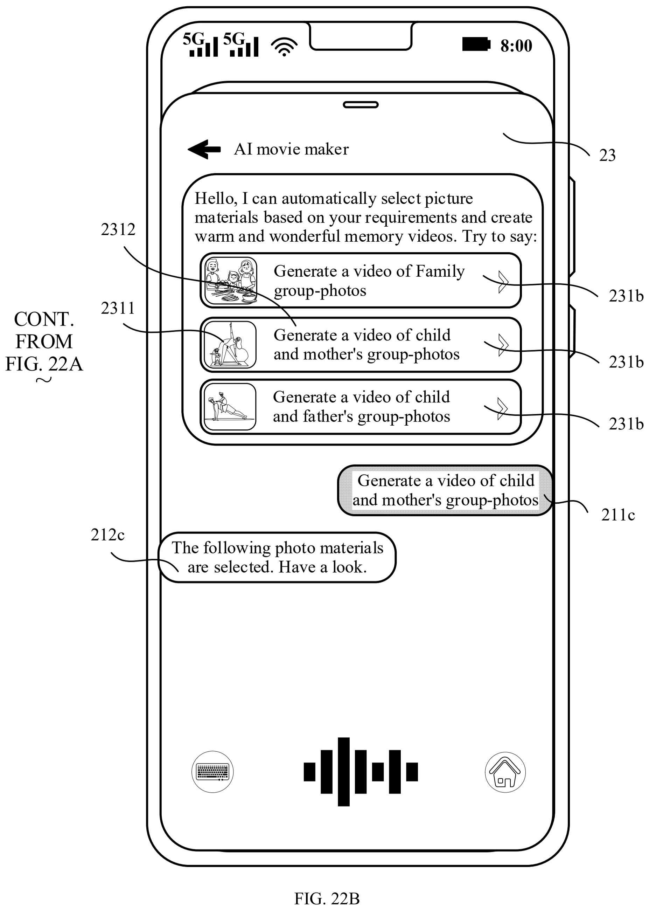

An example in which the second video creation entry 231b includes the entry recommendation text 2312 is used. The user may send a voice "Generate a video of child and mother's group-photos" to the electronic device or tap the corresponding second video creation entry, which is used as a sixth operation input by the user for a 2^{nd} second video creation entry 231b in the operation window 23 of Family group-photos shown in FIG. 20C into the voice assistant application. The display of the electronic device switches from displaying the operation window 23 of Family group-photos displayed in FIG. 22A to displaying that shown in FIG. 22B. The electronic device determines the second video creation entry 231b selected by the user.

Because each second video creation entry 231b in the operation window 23 of Family group-photos in FIG. 22A corresponds to a second face group 10b that includes at least two persons, the second face group 10b that includes at least two persons and that corresponds to Family group-photos may be determined by using a second selection operation for the 2^{nd} second video creation entry 231b. This is actually equivalent to the foregoing manner of determining the first face group 10a that includes at least two persons and that corresponds to the first video creation entry 231a in S151-S154. Therefore, after S155, the electronic device may perform S16.

The foregoing is a specific procedure of S14-S15 when the at least one face group obtained by the voice assistant application in S14 includes only the second face group 10b.

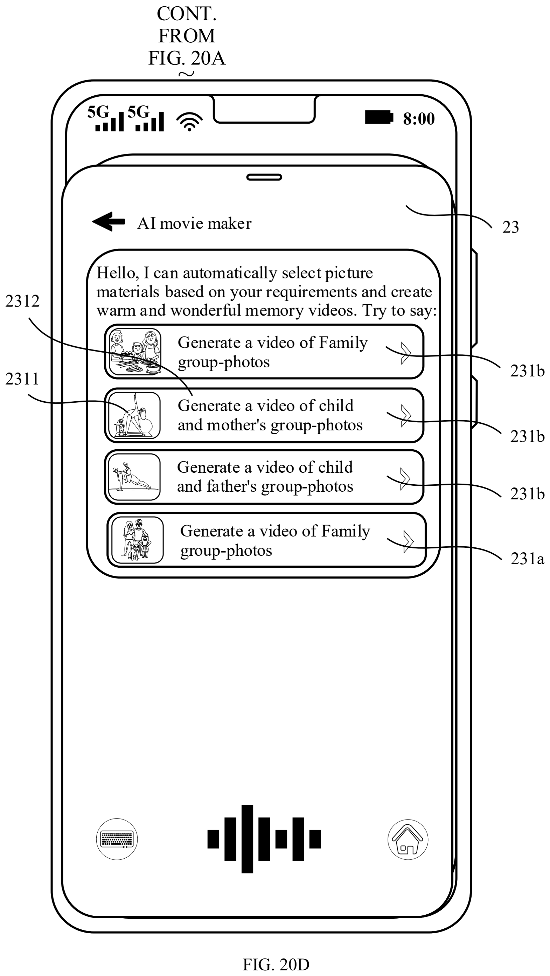

In some other examples, the voice assistant application responds to the second operation performed by the user on the Family group-photos card, and the display of the electronic device switches from the video production window 22 shown in FIG. 20A to an operation window 23 that displays and includes N second video creation entries 231b and one first video creation entry 231a and that is shown in FIG. 20D. Each second video creation entry 231b is associated with at least two persons who have name data, and different second video creation entries 231b correspond to different persons. The first video creation entry 231a is associated with a plurality of persons who lack name data.

For example, when a part of the persons corresponding to the at least one face group has name data, and the other part of the persons lacks name data, the voice assistant application responds to the second operation performed by the user on the Family group-photos card, and the display of the electronic device switches from the video production window 22 shown in FIG. 20A to an operation window 23 that displays and includes N second video creation entries 231b and one first video creation entry 231a and that is shown in FIG. 20D.

It should be noted that the face group 10 corresponding to the second video creation entry 231b includes only the second face group 10b, and does not correspond to the first face group 10a.

For a procedure in which the user selects the first video creation entry 231a in the operation window 23 shown in FIG. 20D, refer to the foregoing descriptions of S151-S154. For a procedure in which the user selects the second video creation entry 231b in the operation window 23 shown in FIG. 20D, refer to the foregoing descriptions of S155. Details are not described herein again.

In addition, because Family group-photos corresponds to a plurality of persons, a third face group may be applicable to the video theme of Family group-photos. For example, when determining a face group 10 corresponding to a composed video based on the third face group 10c, the first face group 10a and the second face group 10b may not be required.

For example, when a plurality of persons who have name data 12 exist in a plurality of persons corresponding to at least one face group 10 obtained by the electronic device from the album application, the plurality of persons who have name data 12 may be mutually combined to form a plurality of third face groups 10c. The production window 23 may display the second video creation entry 231b, and each second video creation entry 231b corresponds to one third face group 10c.

Certainly, on the basis of displaying the second video creation entry 231b, the production window 23 may further display the first video creation entry 231a. The first video creation entry 231a corresponds to a plurality of persons who lack name data.

It should be noted that the third face group 10c corresponding to the second video creation entry 231b corresponds to a person who has name data.

After determining the face group, the electronic device may perform S16.

S16: The electronic device displays a third selection window.

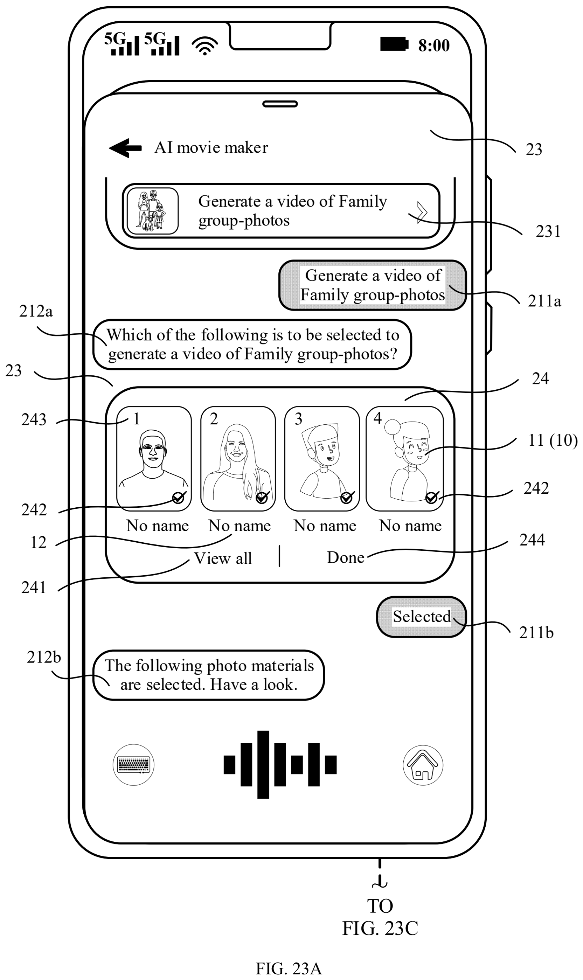

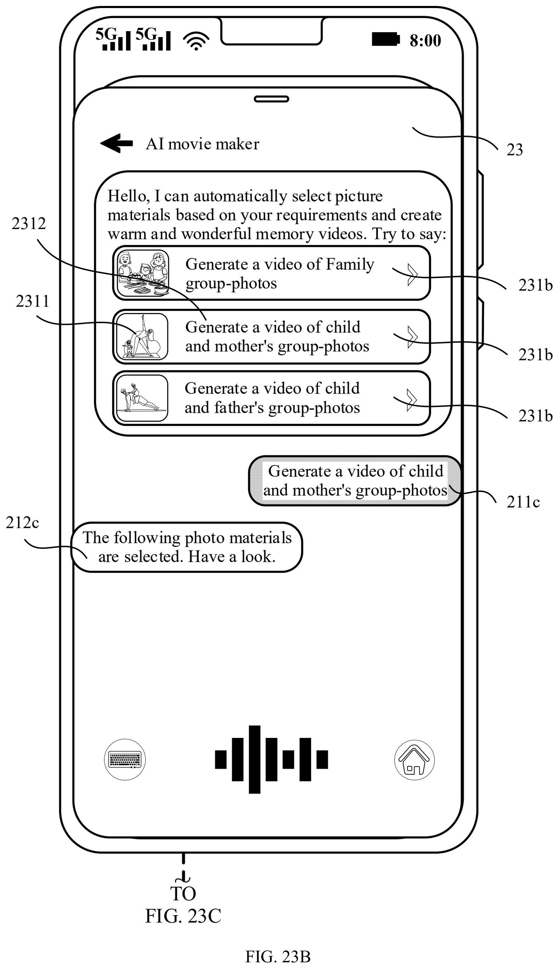

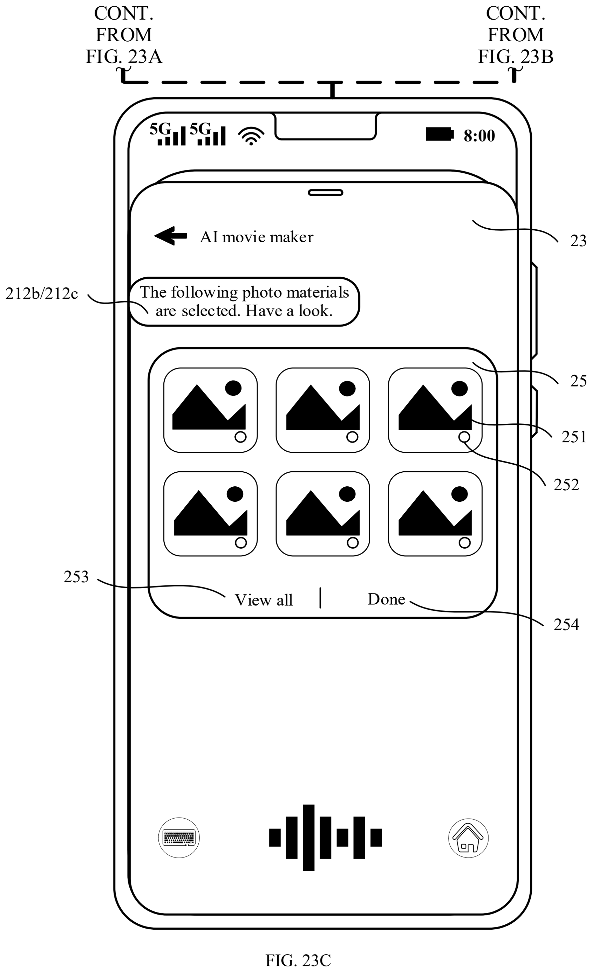

It may be understood that, when the display of the electronic device displays the first selection window 24 shown in FIG. 23A, in response to the first selection determining operation, after determining the first face group 10a corresponding to the video theme of Family group-photos, the display may switch to display the third selection window 25 shown in FIG. 23C. Alternatively, when the display of the electronic device displays the operation window 23 of Family group-photos shown in FIG. 23B, in response to the second selection operation, after determining the at least two second face groups 10b corresponding to the video theme of Family group-photos, the display may switch to display the third selection window 25 shown in FIG. 23C.

The third selection window 25 may display a plurality of candidate portrait materials 251. The candidate portrait material 251 may be a picture, or may be a video. This is not limited in this embodiment of this application. It should be noted that the plurality of candidate portrait materials 251 displayed in the third selection window 25 are all an intersection of portrait materials of several (for example, two or three) same persons (a second face group 10b corresponding to the second selection operation or a first face group 10a corresponding to the first selection determining operation).

An example in which the second video creation entry 231b corresponds to a second face group 10b1 of a person 1, a second face group 10b2 of a person 2, and a second face group 10b3 of a person 3 is used. Each candidate portrait material 251 in the third selection window 25 is a portrait material of the second face group 10b1, a portrait material of the second face group 10b2, and a portrait material of the third face group 10b3. It may be understood that each candidate portrait material 251 includes all of a facial image of the person 1, a facial image of the person 2, and a facial image of the person 3.

S17: The user inputs a seventh operation for one or more candidate portrait materials into the electronic device.

For example, the user may send a voice "Select all" to the smartphone, which is used as the seventh operation input by the user for the one or more candidate portrait materials 251 into the voice assistant application. In this case, the display of the electronic device switches from the third selection window 25 shown in FIG. 16A to that shown in FIG. 16B, and a third selection control 252 located in each material 251 changes from an "unselected" display state to a "selected" display state.

It should be noted that the first selection window 24 shown in FIG. 23C may also include the foregoing third expansion control 252. The user may perform an operation on the third expansion control 252, and select a plurality of candidate person materials from a person material interface. Details are not described herein again.

S18: The user inputs an eighth operation for the one or more candidate portrait materials into the electronic device. For example, the user inputs an eighth operation for a selected candidate person material into the electronic device.

As shown in FIG. 23C, the third selection window 25 may further include a third selection determining control 254.

The user may send a voice "Selected" to the smartphone or manually taps the third selection determining control 254, which is used as the eighth operation input by the user for the plurality of selected candidate portrait materials 251 into the voice assistant application.

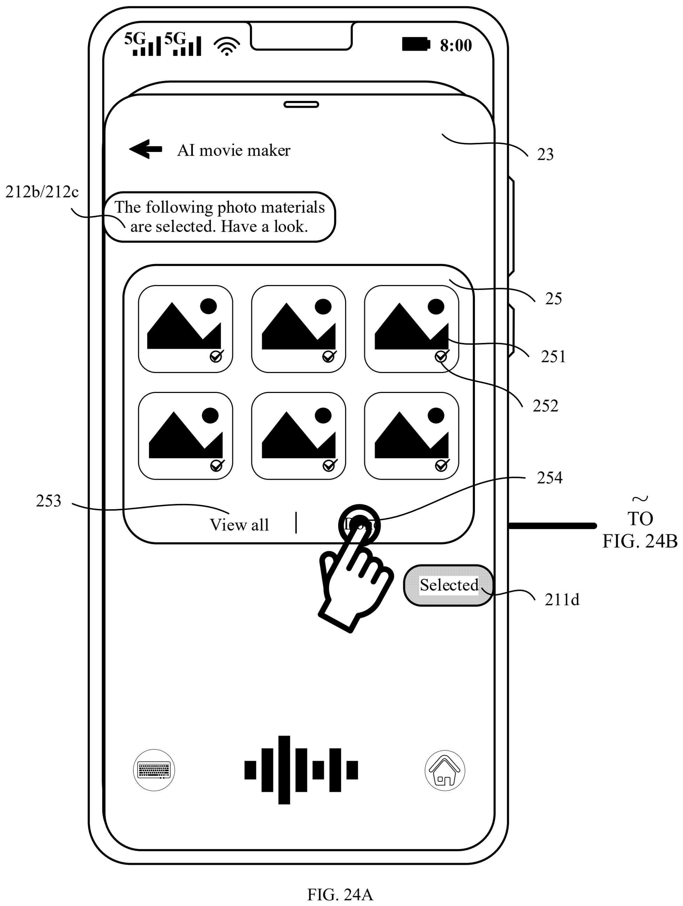

In some feasible implementations, after the user inputs the eighth operation into the electronic device, as shown in FIG. 24A, the voice assistant application may display a first chat message 211d corresponding to the voice in the operation window 23 of Family group-photos based on a voice sent by the user. The first chat message 211d may be displayed below the third selection window 25.

S19: The electronic device generates a video in response to the eighth operation performed by the user on the one or more candidate portrait materials.

After determining a plurality of selected portrait materials in response to the eighth operation performed by the user on the one or more candidate portrait materials 251, the electronic device may compose the video based on the foregoing video composition function. Details are not described herein again.

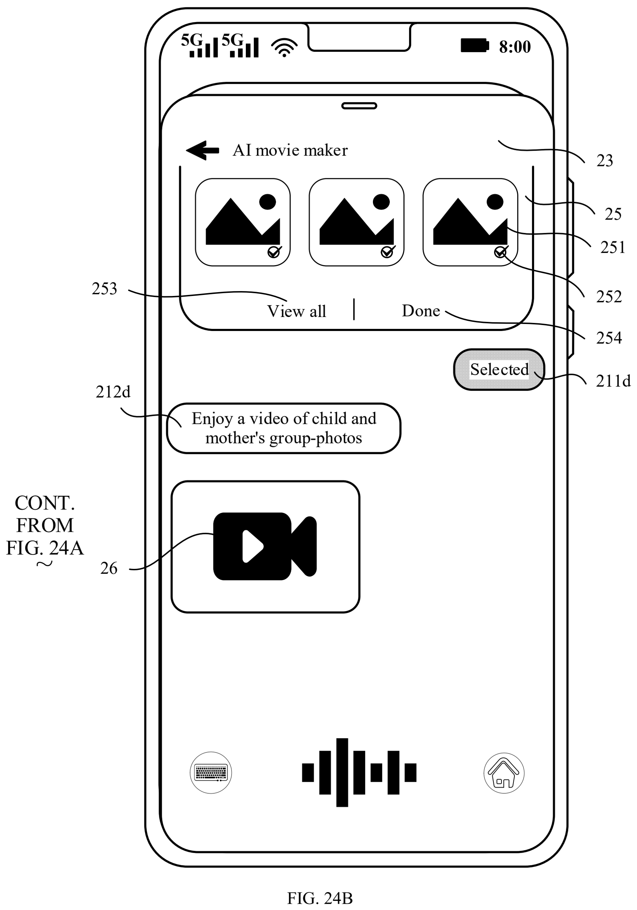

After the electronic device composes the video, the display of the electronic device switches from the third selection window 25 shown in FIG. 24A to a video operation window 23 of Family group-photos shown in FIG. 24B, and the video operation window 23 of Family group-photos displays a composed video 26.

The foregoing provides descriptions in S11-S19 by using an example in which the video theme of Family group-photos is used as a target video theme.

The following provides descriptions by using an example in which a video theme of Warm moments is used as a target video theme.

As shown in FIG. 6A and FIG. 6B, a video generation method provided in an embodiment of this application includes S11-S19.

S11: A user inputs a first operation for a video composition function into an electronic device.

S12: A voice assistant application displays a video production window on a display in response to the first operation.

In this embodiment, for a specific process of S11-S12, refer to the descriptions of S11-S12 in the video theme of Personal photos. Details are not described herein again.

S13: The user inputs a second operation for a theme card of Warm moments into the electronic device.

For example, when the electronic device displays a video production window 22, the user may send a voice "I select Warm moments" to a smartphone; or the user may tap a theme card 221 corresponding to Warm moments, which is used as the second operation input by the user for a Warm moments card into the voice assistant application.

S14: The electronic device displays an operation window of a video theme of Warm moments in response to the second operation performed by the user on the theme card of Warm moments. For example, the electronic device displays an operation window of Warm moments in response to an operation performed by the user on the Warm moments card.

Before displaying the operation window of the video theme of Warm moments, the voice assistant application of the electronic device may obtain at least one face group corresponding to a plurality of portrait materials in an album application. An example in which the album application provides the at least one face group for the voice assistant application is used. The at least one face group may include a first face group 10a and does not include a second face group 10b; or the at least one face group may include a second face group 10b and does not include a first face group 10a; or the at least one face group may include both a first face group 10a and a second face group 10b.

When the at least one face group includes the first face group 10a and does not include the second face group 10b, the operation window displayed by the electronic device may include a first video creation entry corresponding to the first face group 10a; or when the at least one face group includes the second face group 10b and does not include the first face group 10a, the operation window displayed by the electronic device may include a second video creation entry corresponding to the second face group 10b; or when both the first face group 10a and the second face group 10b are included, the operation window displayed by the electronic device may include only a second video creation entry corresponding to the second face group 10b, or may include both a second video creation entry corresponding to the second face group 10b and a first video creation entry corresponding to the first face group 10a.

As shown in FIG. 6A and FIG. 6B, in some examples, to distinguish whether the second video creation entry exists in the operation window, S14 may include S141-S143.

S141: The electronic device determines whether the at least one face group includes the second face group.

S141 is equivalent to determining whether a person who has name data exists in persons corresponding to the at least one face group.

When the at least one face group does not include the second face group, all the persons corresponding to the at least one face group lack name data, and the electronic device performs S142.

When the at least one face group includes the second face group, at least one of the persons corresponding to the at least one face group has name data, and the electronic device performs S143.

S142: The electronic device displays an operation page of the video theme, where the operation page includes the first video creation entry.

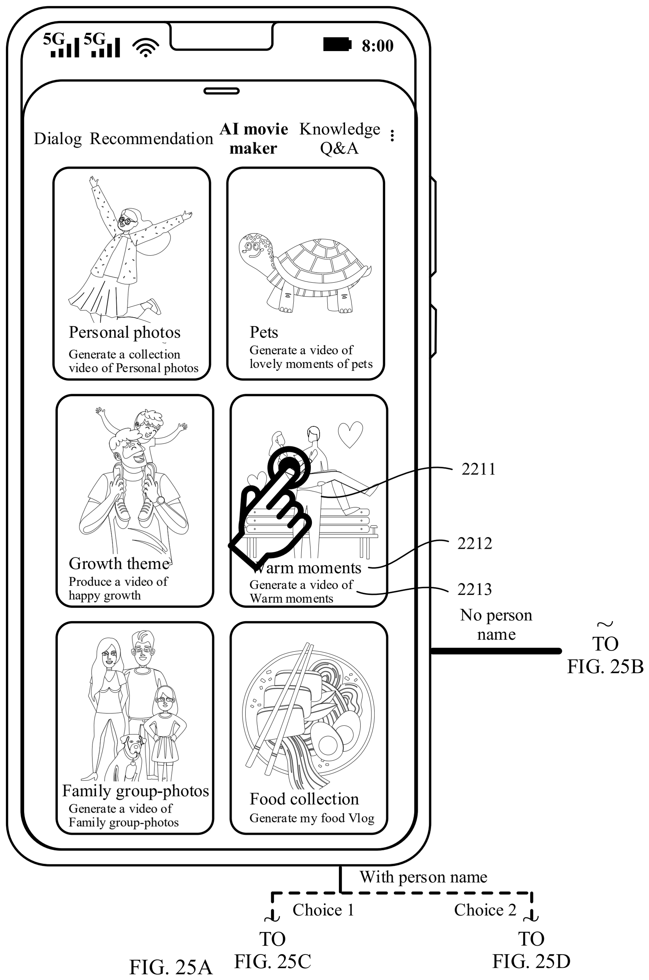

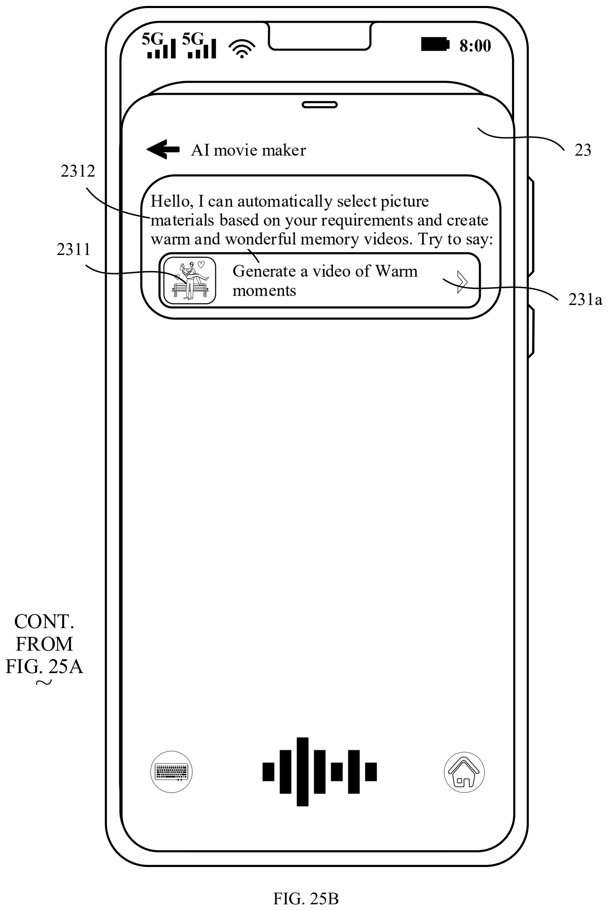

When a plurality of face groups obtained by the voice assistant application each are the first face group 10a (no person corresponding to the face groups includes name data, as shown in FIG. 1B), The voice assistant application responds to the second operation performed by the user on the Warm moments card, and the display of the electronic device switches from the video production window 22 shown in FIG. 25A to an operation window 23 of Warm moments that displays and includes one video creation entry (the first video creation entry) 231a and that is shown in FIG. 25B. The first video creation entry 231a is associated with a plurality of first face groups 10a.

When an operation window of the target video theme is shown in FIG. 20B, as shown in FIG. 6A and FIG. 6B, S15 in the procedure may include S151-S154.

S151: The user inputs a third operation for the first video creation entry into the electronic device.

The user may send a voice "Generate a video of Warm moments" to the smartphone or tap the first video creation entry 231a, which is used as the third operation input by the user for the first video creation entry 231a into the voice assistant application.

S152: The electronic device displays a first selection window in response to the third operation performed by the user on the first video creation entry.

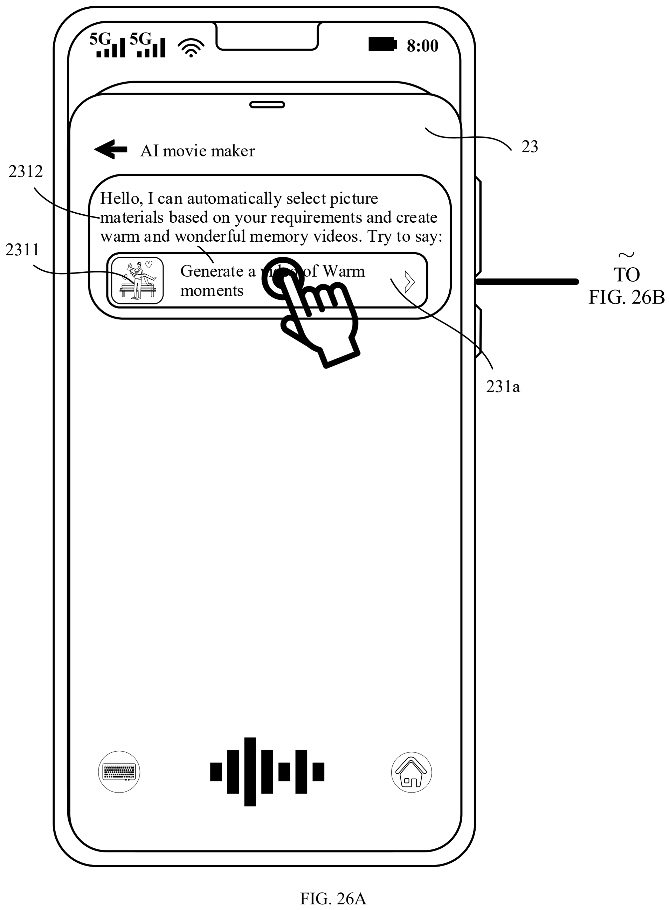

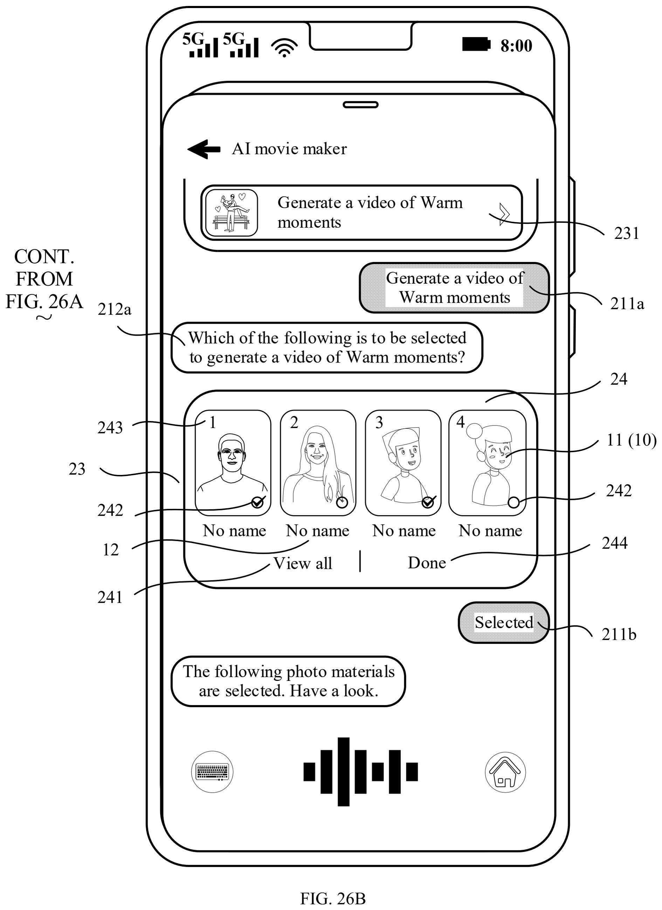

The voice assistant application of the electronic device responds to the third operation performed by the user on the first video creation entry 231a. The display of the electronic device switches from displaying the operation window 23 of Warm moments displayed in FIG. 26A to displaying a first selection window 24 by the display in FIG. 26B.

The first selection window 24 may include one or more facial images 11, different facial images 11 correspond to different persons and first face groups 10a, and no person includes name data 12. As shown in FIG. 21B, when the person does not include the name data 12, a text "Add name" is displayed below the facial image 11, to attract the user to name the person.

In this embodiment, the text "Add name" in the first selection window 24 may also be used as a name control, to perform a procedure of adding name data to the first face group 10a. A procedure of adding the name data is basically the same as a procedure shown in FIG. 19A to FIG. 19C, and details are not described herein again.

S153: The user inputs a fourth operation for at least one face group 10 into the electronic device.

As shown in FIG. 26B, the first selection window 24 may further include a plurality of first selection controls 242, the plurality of first selection controls 242 are in one-to-one correspondence with a plurality of facial images 11, and each first selection control 242 is located in a display area of the facial image 11. The user may send a voice "Select the 1^{st} one and the 3^{rd} one" to the smartphone or tap selection controls 242 corresponding to a 1^{st} face group 10 and a 3^{rd} face group 10, which is used as a fourth operation input by the user for the plurality of first face groups 10a into the voice assistant application. In this case, the display of the electronic device is displayed as shown in FIG. 26B. First selection controls 242 corresponding to all first face groups 10a in the first selection window 24 change from an "unselected" display state to a "selected" display state.

It should be noted that the first selection window 24 shown in FIG. 26B may also include the foregoing first expansion control 241. The user may perform an operation on the first expansion control 241, and a selection interface is entered to select facial images 11 in the plurality of first face groups 10a. The user needs to select more than one person in the selection interface. When a quantity of persons selected by the user is less than 1, the user performs an operation on a determining control, and the electronic device does not perform any step.

S154: The user inputs a fifth operation for at least one first face group into the electronic device. For example, the user inputs a first selection determining operation for a 1^{st} first face group 10a and a 3^{rd} first face group 10a in FIG. 26B into the electronic device.

As shown in FIG. 26B, the first selection window 24 may further include a first selection determining control 244. The user may perform an operation on the first selection determining control 244, which is used as the fifth operation input by the user for the at least one selected first face group 10a into the voice assistant application.

Alternatively, the user may send a voice "Selected" to the smartphone, which is used as the fifth operation input by the user for the at least one selected first face group 10a into the voice assistant application.

The electronic device responds to the first selection determining operation performed by the user for the at least one first face group 10a, and then performs S16. For example, the electronic device responds to a fifth operation performed by the user on the 15¹ first face group 10a and the 3^{rd} first face group 10a in the first selection window 24, determines a face group 10 corresponding to Warm moments, and then performs S16.

The foregoing is a specific procedure of S14 and S15 when the at least one face group obtained by the voice assistant application in S14 includes only the first face group 10a.

S143: The electronic device displays an operation page of the target video theme, where the operation page includes the second video creation entry.

When the plurality of face groups 10 obtained by the voice assistant application include the second face group 10b (at least one of a plurality of persons corresponding to the face group includes name data, as shown in FIG. 1C):

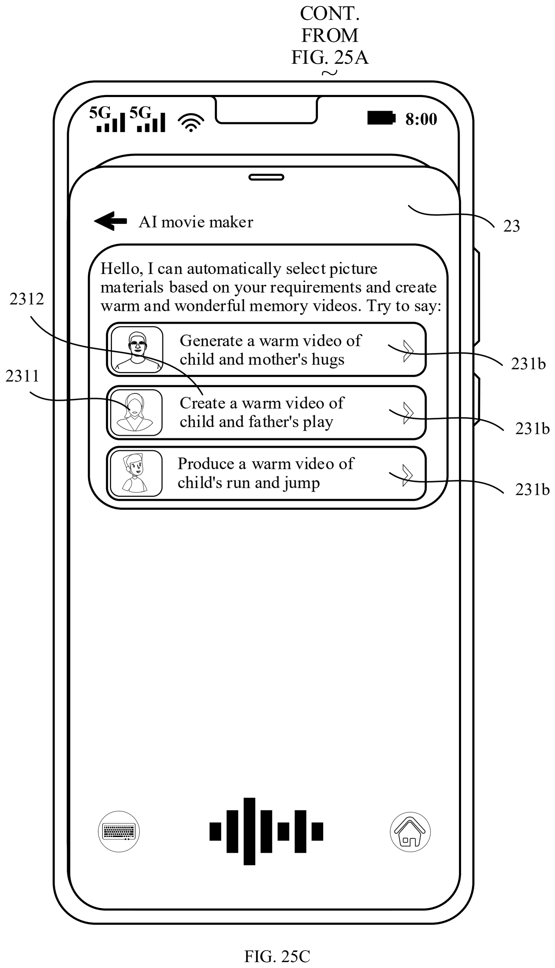

In some examples, the voice assistant application responds to the second operation performed by the user on the Warm moments card, and the display of the electronic device switches from the video production window 22 shown in FIG. 25A to an operation window 23 of Family group-photos that displays and includes N (N is a positive integer greater than 1) video creation entries (the second video creation entry) 231b and that is shown in FIG. 25C. Each second video creation entry 231b is associated with at least one person who has name data, and persons corresponding to different second video creation entries 231b are not completely the same.

For example, one second video creation entry 231b is associated with a total of three second face groups 10b of a child, a father, and a mother, another second video creation entry 231b is associated with a total of two second face groups 10b of a child and a father, and still another second video creation entry 231b is associated with a total of two second face groups 10b of a child and a mother. The three second video creation entries 231b each are associated with at least one second face group 10b that has name data, and second face groups 10b corresponding to the three second video creation entries 231b are not completely the same.

For example, when the persons corresponding to the at least one face group each have name data, the voice assistant application responds to the second operation performed by the user on the Personal photos card, and the display of the electronic device switches from the video production window 22 shown in FIG. 25A to an operation window 23 that displays and includes N second video creation entries 231b and that is shown in FIG. 25C.

When the operation window 23 of the target video theme is shown in FIG. 25C, as shown in FIG. 6A and FIG. 6B, S15 in the procedure may include S155.

S155: The user inputs a sixth operation for the target video creation entry into the electronic device.

As shown in FIG. 25C, the operation window 23 of Warm moments includes N video creation entries (the second video creation entry) 231b.

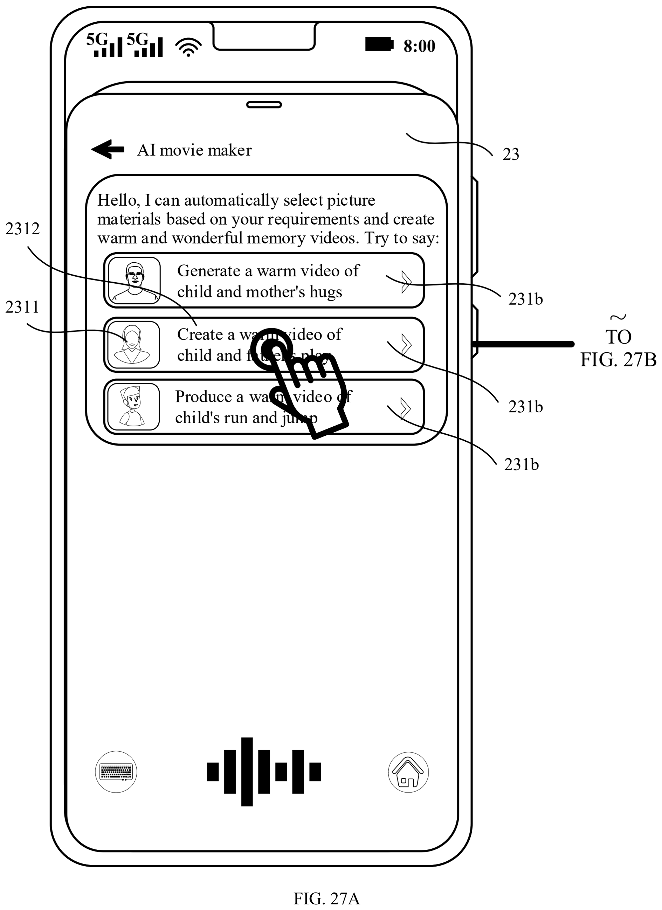

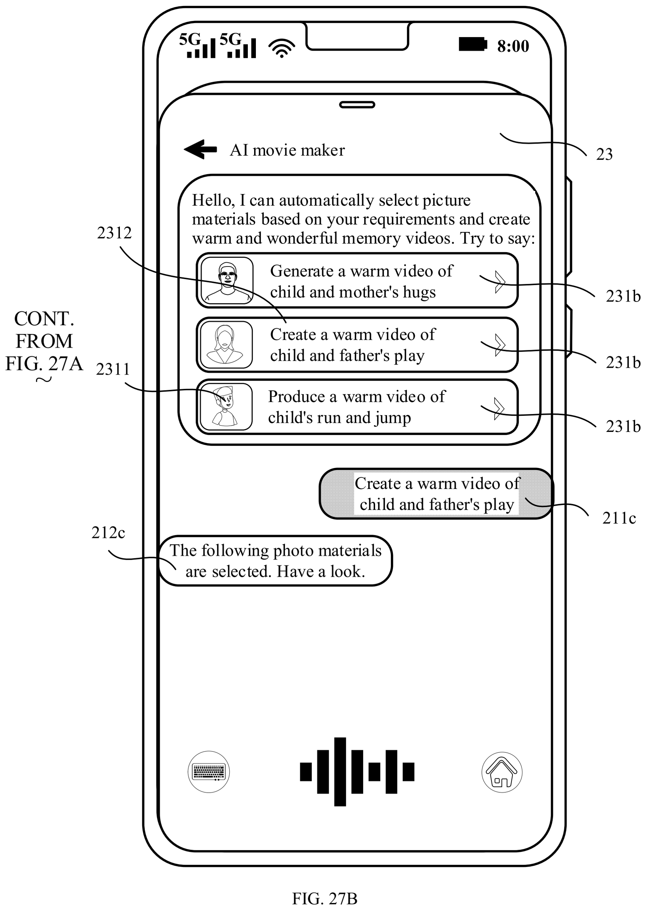

An example in which the second video creation entry 231b includes the entry recommendation text 2312 is used. The user may send a voice "Create a warm video of child and father's play" to the electronic device or tap the corresponding video creation entry, which is used as a sixth operation (second selection operation) input by the user for a 2^{nd} second video creation entry 231b in the operation window 23 of Warm moments shown in FIG. 25C into the voice assistant application. The display of the electronic device switches from displaying the operation window 23 of Warm moments displayed in FIG. 27A to displaying that shown in FIG. 27B. The electronic device determines the second video creation entry 231b selected by the user.

Because each second video creation entry 231b in the operation window 23 of Warm moments shown in FIG. 27A corresponds to at least one second face group 10b, at least one second face group 10b corresponding to Warm moments may be determined by using the second selection operation for the 2^{nd} second video creation entry 231b. This is actually equivalent to the foregoing manner of determining the at least one first face group 10a corresponding to the first video creation entry 231a in S151-S154. Therefore, after S155, the electronic device may perform S16.

The foregoing is a specific procedure of S14-S15 when the at least one face group obtained by the voice assistant application in S14 includes only the second face group 10b.

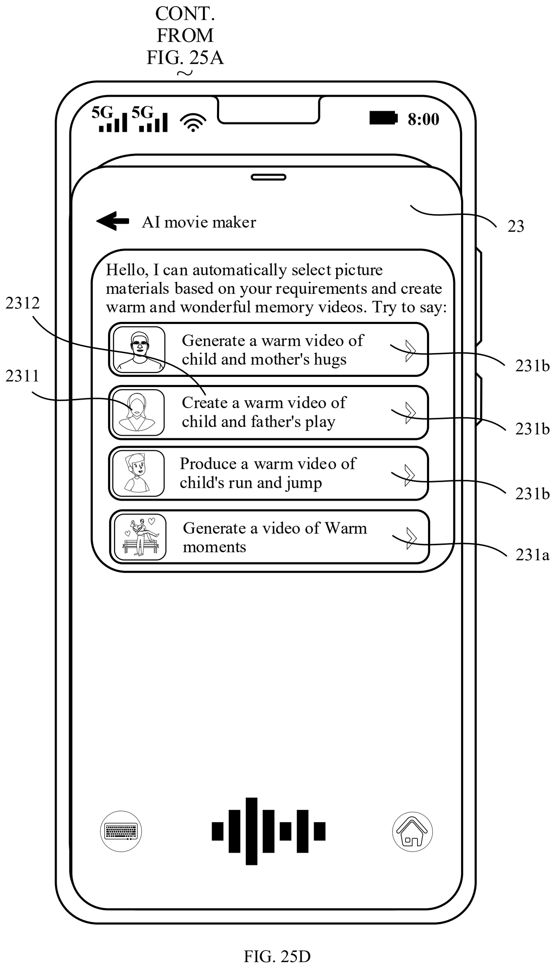

In some other examples, the voice assistant application responds to the second operation performed by the user on the Warm moments card, and the display of the electronic device switches from the video production window 22 shown in FIG. 25A to an operation window 23 that displays and includes N second video creation entries 231b and one first video creation entry 231a and that is shown in FIG. 25D. Each second video creation entry 231b is associated with at least one person who has name data, and different second video creation entries 231b correspond to different persons. The first video creation entry 231a is associated with a plurality of persons who lack name data.

For example, when a part of the persons corresponding to the at least one face group has name data, and the other part of the persons lacks name data, the voice assistant application responds to the second operation performed by the user on the Warm moments card, and the display of the electronic device switches from the video production window 22 shown in FIG. 25A to an operation window 23 that displays and includes N second video creation entries 231b and one first video creation entry 231a and that is shown in FIG. 25D.

It should be noted that the face group 10 corresponding to the second video creation entry 231b includes only the second face group 10b, and does not correspond to the first face group 10a.

For a procedure in which the user selects the first video creation entry 231a in the operation window 23 shown in FIG. 25D, refer to the foregoing descriptions of S151-S154. For a procedure in which the user selects the second video creation entry 231b in the operation window 23 shown in FIG. 25D, refer to the foregoing descriptions of S155. Details are not described herein again.

In addition, because Warm moments corresponds to a plurality of persons, a third face group may be applicable to the video theme of Warm moments. For example, when determining a face group 10 corresponding to a composed video based on the third face group 10c, the first face group 10a and the second face group 10b may not be required.

For example, when a plurality of persons who have name data 12 exist in a plurality of persons corresponding to at least one face group 10 obtained by the electronic device from the album application, the plurality of persons who have name data 12 may be mutually combined to form a plurality of third face groups 10c. The production window 23 may display the second video creation entry 231b, and each second video creation entry 231b corresponds to one third face group 10c.

Certainly, on the basis of displaying the second video creation entry 231b, the production window 23 may further display the first video creation entry 231a. The first video creation entry 231a corresponds to a plurality of persons who lack name data.

It should be noted that the third face group 10c corresponding to the second video creation entry 231b corresponds to a person who has name data. After determining the face group, the electronic device may perform S16.

S16: The electronic device displays a third selection window.

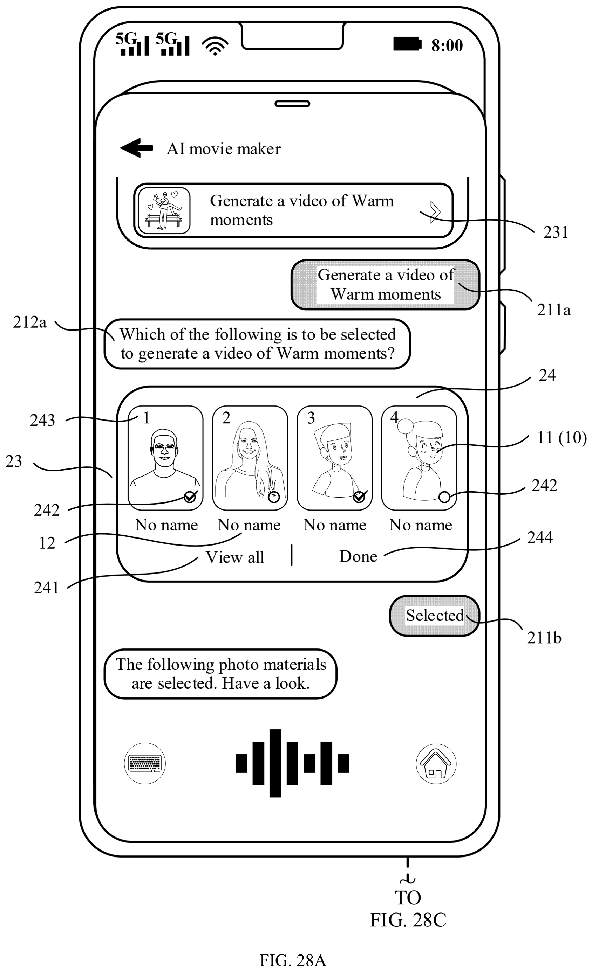

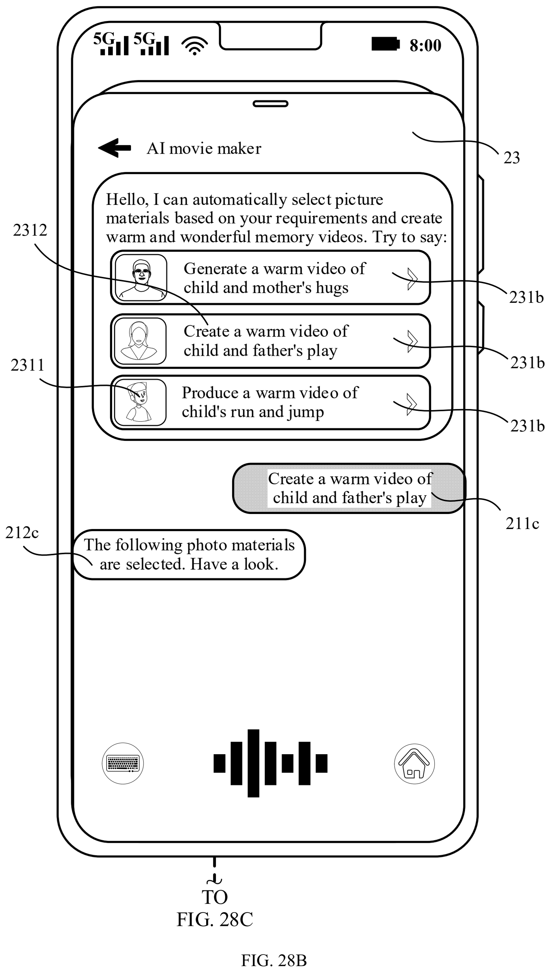

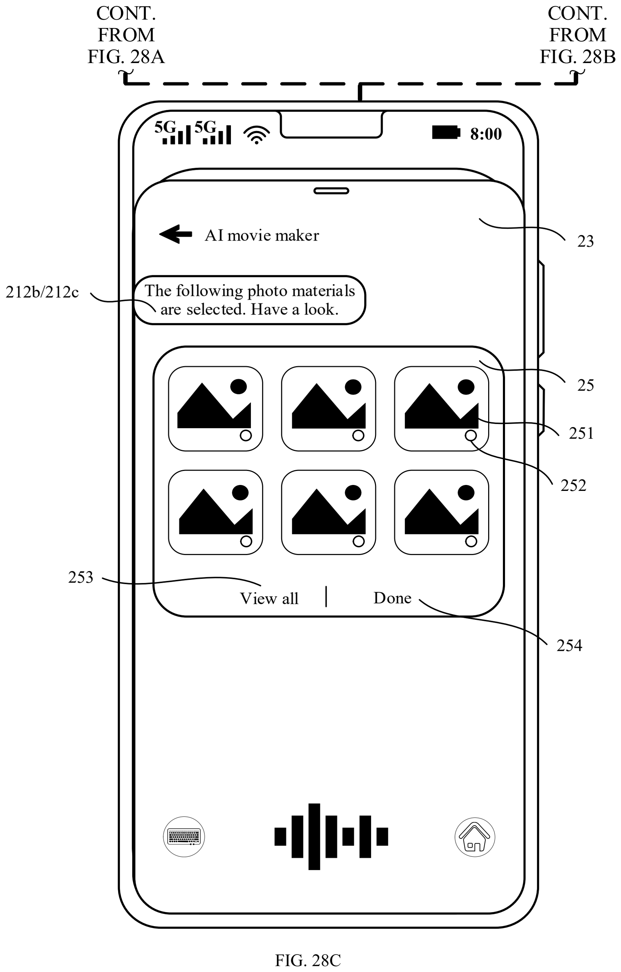

It may be understood that, when the display of the electronic device displays the first selection window 24 shown in FIG. 28A, in response to the first selection determining operation, after determining the first face group 10a corresponding to the video theme of Warm moments, the display may switch to display the third selection window 25 shown in FIG. 28C. Alternatively, when the display of the electronic device displays the operation window 23 of Warm moments shown in FIG. 28B, in response to the second selection operation, after determining at least one second face group 10b corresponding to the video theme of Warm moments, the display may switch to display the third selection window 25 shown in FIG. 28C.

The third selection window 25 may display a plurality of candidate portrait materials 251. The candidate portrait material 251 may be a picture, or may be a video. This is not limited in this embodiment of this application. It should be noted that the plurality of candidate portrait materials 251 displayed in the third selection window 25 are all portrait materials of one face group 10; or the plurality of candidate portrait materials 251 displayed in the third selection window 25 are all an intersection of portrait materials of a plurality of same persons (a second face group 10b corresponding to the second selection operation or a first face group 10a corresponding to the first selection determining operation).

S17: The user inputs a seventh operation for one or more candidate portrait materials into the electronic device.

For example, the user may send a voice "Select all" to the smartphone, which is used as the seventh operation input by the user for the one or more candidate portrait materials 251 into the voice assistant application. In this case, the display of the electronic device switches from the third selection window 25 shown in FIG. 16A to that shown in FIG. 16B, and a third selection control 252 located in each material 251 changes from an "unselected" display state to a "selected" display state.

It should be noted that the third selection window 25 shown in FIG. 28C may also include the foregoing third expansion control 252. The user may perform an operation on the third expansion control 252, and select a plurality of candidate person materials from a person material interface. Details are not described herein again.

S18: The user inputs an eighth operation for the one or more candidate portrait materials into the electronic device. For example, the user inputs an eighth operation for a selected material into the electronic device.

As shown in FIG. 28C, the third selection window 25 may further include a third selection determining control 254.

The user may send a voice "Selected" to the smartphone, which is used as the eighth operation input by the user for the plurality of selected candidate portrait materials 251 into the voice assistant application.

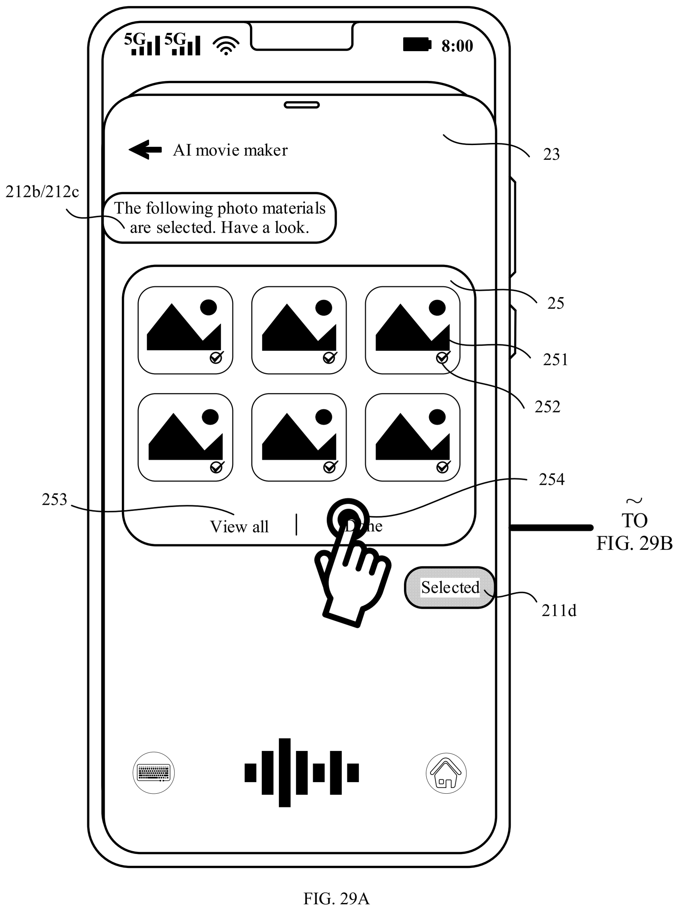

In some feasible implementations, after the user inputs the eighth operation into the electronic device, as shown in FIG. 29A, the voice assistant application may display a first chat message 211d corresponding to the voice in the operation window 23 of Warm moments based on a voice sent by the user. The first chat message 211d may be displayed below the third selection window 25.

S19: The electronic device creates a video in response to a third selection determining operation performed by the user on the one or more candidate portrait materials.

After determining a plurality of selected portrait materials in response to the third selection determining operation performed by the user on the one or more candidate portrait materials 251, the electronic device may compose the video based on the foregoing video composition function. Details are not described herein again.

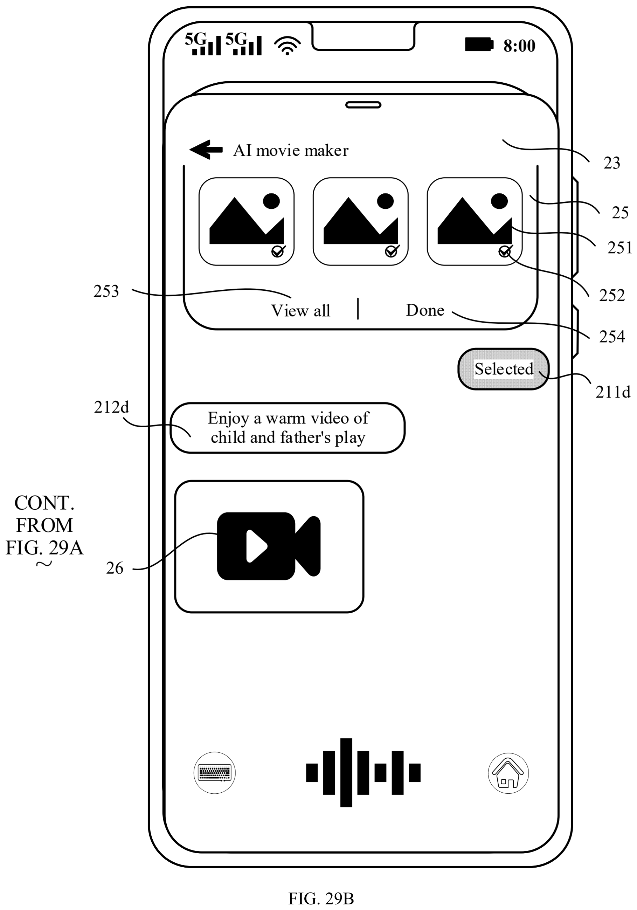

After the electronic device composes the video, the display of the electronic device switches from the third selection window 25 shown in FIG. 29A to a video operation window 23 of Warm moments shown in FIG. 29B, and the video operation window 23 of Warm moments displays a composed video 26.

The foregoing provides descriptions in S11-S19 by using an example in which the video theme of Warm moments is used as a target video theme.

The following provides descriptions by using an example in which a video theme of Growth theme is used as a target video theme.

As shown in FIG. 6A and FIG. 6B, a video generation method provided in an embodiment of this application includes S11-S19.

S11: A user inputs a first operation for a video composition function into an electronic device.

S12: A voice assistant application displays a video production window on a display in response to the first operation.

In this embodiment, for a specific process of S11-S12, refer to the descriptions of S11-S12 in the video theme of Personal photos. Details are not described herein again.

S13: The user inputs a second operation for a theme card of Growth theme into the electronic device.

For example, when the electronic device displays the video production window 22, the user may send a voice "I select Growth theme" to the smartphone; or the user may tap a theme card 221 corresponding to Growth theme, which is used as the second operation input by the user for Growth theme card (a target theme card) into the voice assistant application.

S14: The electronic device displays an operation window of a video theme of Growth theme in response to the second operation performed by the user on the theme card of Warm moments. For example, the electronic device displays an operation window of Growth theme in response to an operation performed by the user on Growth theme card.

Before displaying the operation window of the video theme of Growth theme, the voice assistant application of the electronic device may obtain at least one face group corresponding to a plurality of portrait materials in an album application. An example in which the album application provides the at least one face group for the voice assistant application is used. The at least one face group may include a first face group 10a and does not include a second face group 10b; or may include a second face group 10b and does not include a first face group 10a.

Before displaying the operation window of the video theme of Growth theme, the voice assistant application of the electronic device may obtain at least one face group corresponding to a plurality of portrait materials in an album application. An example in which the album application provides the at least one face group for the voice assistant application is used. The at least one face group may include a first face group 10a and does not include a second face group 10b; or the at least one face group may include a second face group 10b and does not include a first face group 10a; or the at least one face group may include both a first face group 10a and a second face group 10b.

When the at least one face group includes the first face group 10a and does not include the second face group 10b, the operation window displayed by the electronic device may include a first video creation entry corresponding to the first face group 10a; or when the at least one face group includes the second face group 10b and does not include the first face group 10a, the operation window displayed by the electronic device may include a second video creation entry corresponding to the second face group 10b; or when both the first face group 10a and the second face group 10b are included, the operation window displayed by the electronic device may include only a second video creation entry corresponding to the second face group 10b, or may include both a second video creation entry corresponding to the second face group 10b and a first video creation entry corresponding to the first face group 10a.

As shown in FIG. 6A and FIG. 6B, in some examples, to distinguish whether the second video creation entry exists in the operation window, S14 may include S141-S143.

S141: The electronic device determines whether the at least one face group includes the second face group.

S141 is equivalent to determining whether a person who has name data exists in persons corresponding to the at least one face group.

When the at least one face group does not include the second face group, all the persons corresponding to the at least one face group lack name data, and the electronic device performs S142.

When the at least one face group includes the second face group, at least one of the persons corresponding to the at least one face group has name data, and the electronic device performs S143.

S142: The electronic device displays an operation page of the video theme, where the operation page includes the first video creation entry.

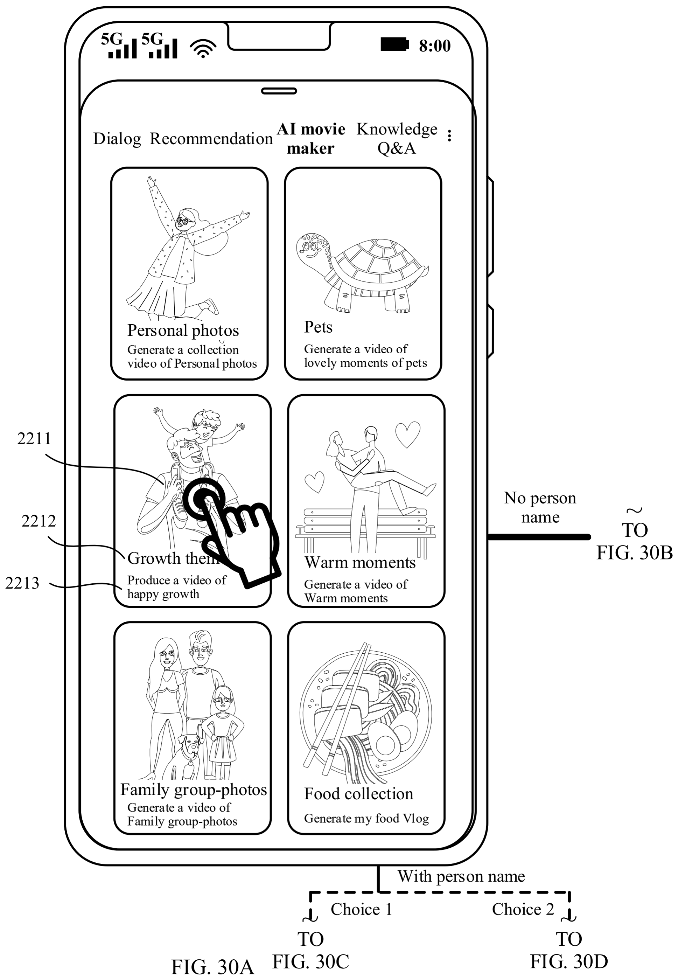

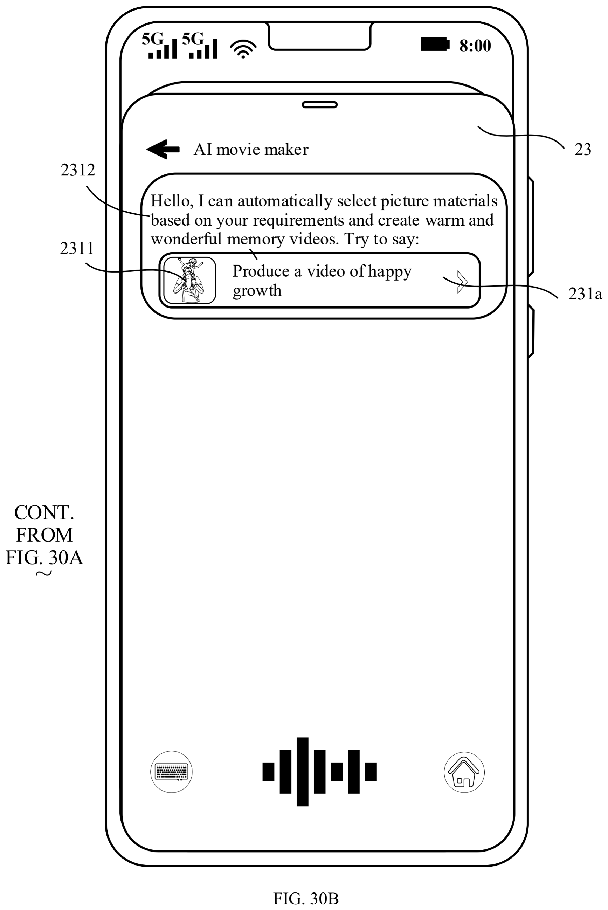

When a plurality of face groups obtained by the voice assistant application each are the first face group 10a (no person corresponding to the face groups includes name data, as shown in FIG. 1B), The voice assistant application responds to the second operation performed by the user on Growth theme card, and the display of the electronic device switches from the video production window 22 shown in FIG. 30A to an operation window 23 of Growth theme that displays and includes one video creation entry (the first video creation entry) 231a and that is shown in FIG. 30B. The first video creation entry 231a is associated with a plurality of first face groups 10a.

When an operation window of the target video theme is shown in FIG. 30B, as shown in FIG. 6A and FIG. 6B, S15 in the procedure may include S151-S154.

S151: The user inputs a third operation for the first video creation entry into the electronic device.

The user may send a voice "Produce a video of happy growth" to the smartphone or tap the first video creation entry 231a, which is used as the third operation input by the user for the first video creation entry 231a into the voice assistant application.

S152: The electronic device displays a first selection window in response to a first selection operation performed by the user on a target video creation entry.

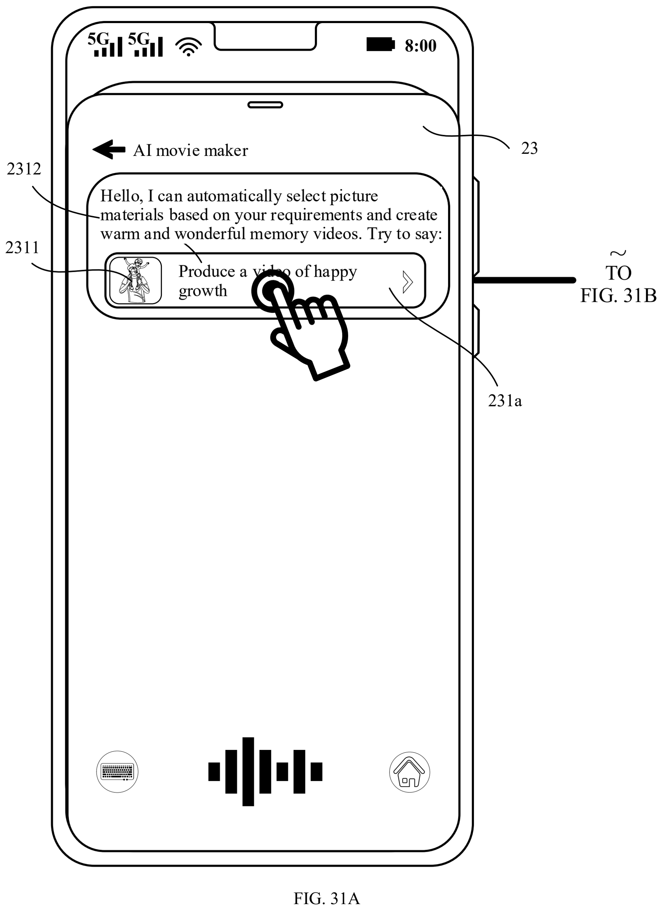

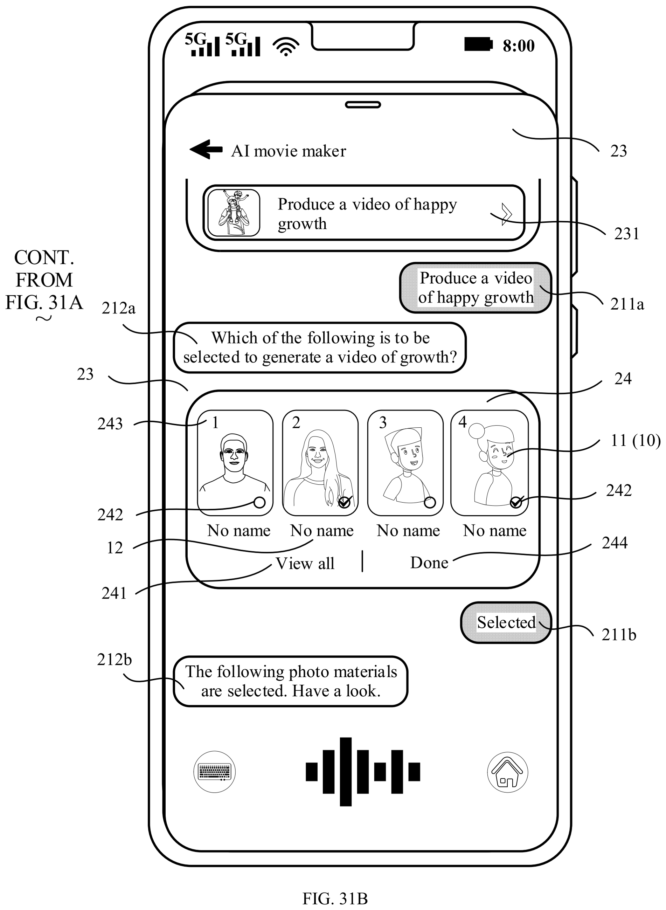

The voice assistant application of the electronic device responds to the third operation performed by the user on the first video creation entry 231a. The display of the electronic device switches from displaying the operation window 23 of Growth theme displayed in FIG. 31A to displaying a first selection window 24 by the display in FIG. 31B.

The first selection window 24 may include one or more facial images 11, different facial images 11 correspond to different persons and first face groups 10a, and no person includes name data 12. As shown in FIG. 21B, when the person does not include the name data 12, a text "Add name" is displayed below the facial image 11, to attract the user to name the person.

In this embodiment, the text "Add name" in the first selection window 24 may also be used as a name control, to perform a procedure of adding name data to the first face group 10a. A procedure of adding the name data is basically the same as a procedure shown in FIG. 19A to FIG. 19C, and details are not described herein again.

In Growth theme, a person displayed in the first selection window 24 needs to include a child.

S153: The user inputs a fourth operation for at least one face group 10 into the electronic device.

As shown in FIG. 31B, the first selection window 24 may further include a plurality of first selection controls 242, the plurality of first selection controls 242 are in one-to-one correspondence with a plurality of facial images 11, and each first selection control 242 is located in a display area of the facial image 11. The user may send a voice "Select the 2^{nd} one and the 4^{th} one" to the smartphone or tap selection controls 242 corresponding to a plurality of facial images 11, which is used as a fourth operation input by the user for two first face groups 10a into the voice assistant application. In this case, the display of the electronic device is displayed as shown in FIG. 31B. First selection controls 242 corresponding to a 2^{nd} first face group 10a and a 4^{th} first face group 10a in the first selection window 24 change from an "unselected" display state to a "selected" display state.

It should be noted that the first selection window 24 shown in FIG. 31B may also include the foregoing first expansion control 241. The user may perform an operation on the first expansion control 241, and a selection interface is entered to select facial images 11 in the plurality of first face groups 10a. The user needs to select more than one person in the selection interface. When a quantity of persons selected by the user is less than 1, the user performs an operation on a determining control, and the electronic device does not perform any step.

The first face group 10a selected by the user in the first selection window 24 needs to be a first face group 10a that includes at least one child.

S154: The user inputs a fifth operation for at least one first face group into the electronic device. For example, the user inputs a first selection determining operation for a 2^{nd} first face group 10a and a 4^{th} first face group 10a in FIG. 31B into the electronic device.

As shown in FIG. 31B, the first selection window 24 may further include a first selection determining control 244. The user may perform an operation on the first selection determining control 244, which is used as the fifth operation input by the user for the at least one selected first face group 10a into the voice assistant application.

Alternatively, the user may send a voice "Selected" to the smartphone, which is used as the fifth operation input by the user for the at least one selected first face group 10a into the voice assistant application.

The electronic device responds to the first selection determining operation performed by the user for the at least one first face group 10a, and then performs S16. For example, the electronic device responds to a fifth operation performed by the user on the 2^{nd} first face group 10a and the 4^{th} first face group 10a in the first selection window 24, determines a face group 10 corresponding to Growth theme, and then performs S16.

The foregoing is a specific procedure of S14 and S15 when the at least one face group obtained by the voice assistant application in S14 includes only the first face group 10a.

S143: The electronic device displays an operation page of the target video theme, where the operation page includes the second video creation entry.

When the plurality of face groups 10 obtained by the voice assistant application include the second face group 10b (at least one of a plurality of persons corresponding to the face group includes name data, as shown in FIG. 1C):

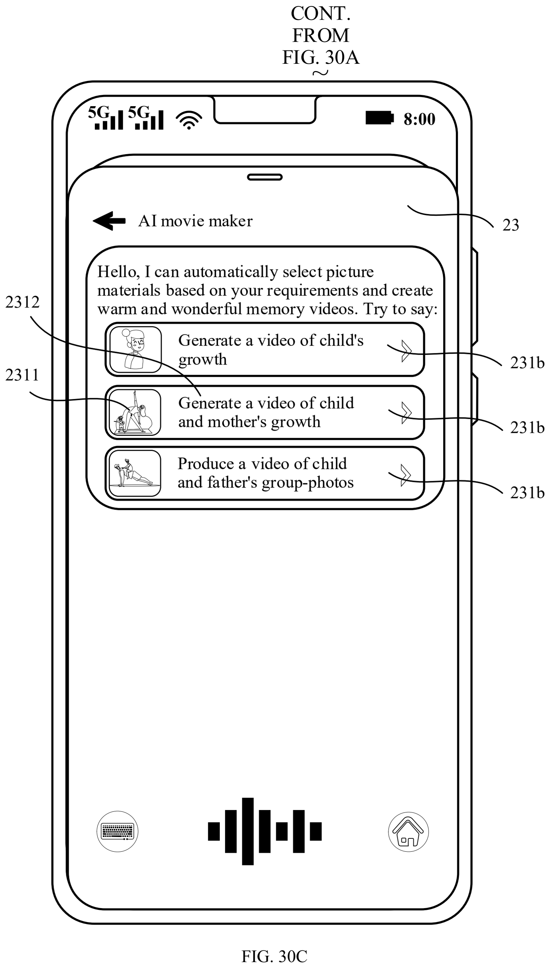

In some examples, the voice assistant application responds to the second operation performed by the user on Growth theme card, and the display of the electronic device switches from the video production window 22 shown in FIG. 30A to an operation window 23 of Growth theme that displays and includes N (N is a positive integer greater than 1) video creation entries (the second video creation entry) 231b and that is shown in FIG. 30C. Each second video creation entry 231b is associated with at least one second face group 10b that has name data, and second face groups 10b corresponding to different second video creation entries 231b are not completely the same.

For example, when the persons corresponding to the at least one face group each have name data, the voice assistant application responds to the second operation performed by the user on the Personal photos card, and the display of the electronic device switches from the video production window 22 shown in FIG. 30A to an operation window 23 that displays and includes N second video creation entries 231b and that is shown in FIG. 30C.

When the operation window 23 of the target video theme is shown in FIG. 30C, as shown in FIG. 6A and FIG. 6B, S15 in the procedure may include S155.

S155: The user inputs a sixth operation (a second selection operation) for the target video creation entry into the electronic device.

As shown in FIG. 30C, the operation window 23 of Growth theme includes N video creation entries (the second video creation entry) 231b.

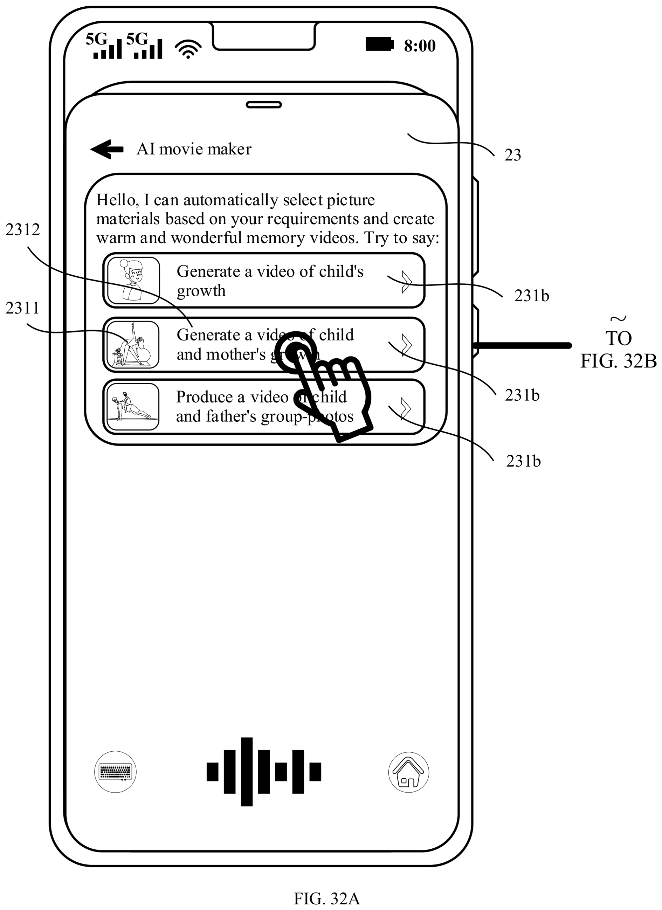

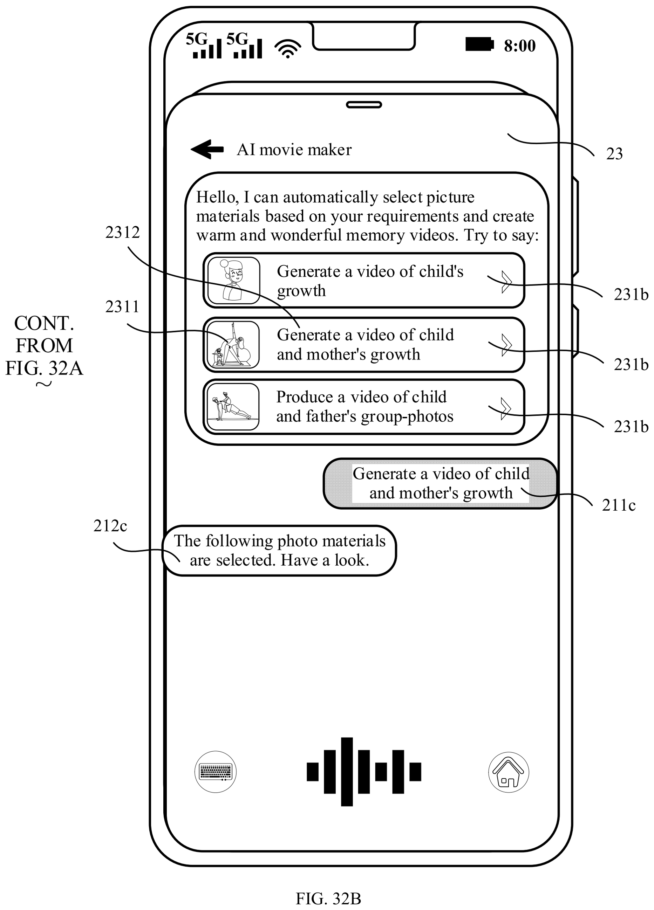

An example in which the second video creation entry 231b includes the entry recommendation text 2312 is used. The user may send a voice "Generate a video of child and mother's growth" to the electronic device or tap the corresponding first video creation entry, which is used as a sixth operation input by the user for a 2^{nd} second video creation entry 231b in the operation window 23 of Growth theme shown in FIG. 30C into the voice assistant application. The display of the electronic device switches from displaying the operation window 23 of Growth theme displayed in FIG. 32A to displaying that shown in FIG. 32B. The electronic device determines the second video creation entry 231b selected by the user.

It should be noted that each second video creation entry 231b corresponds to a second face group 10b that includes at least one child, or may correspond to a second face group 10b of an adult. The entry material 2311 of the second video creation entry 231b may include a portrait picture of one or more persons, and a facial image of a child needs to exist in the portrait picture. The entry recommendation text 2312 may include name data of the one or more persons, and the name data needs to include name data of a child.

Because each second video creation entry 231b in the operation window 23 of Growth theme shown in FIG. 32A corresponds to at least one second face group 10b, at least one second face group 10b corresponding to Growth theme may be determined by using the second selection operation for the 2^{nd} second video creation entry 231b. This is actually equivalent to the foregoing manner of determining the at least one first face group 10a corresponding to the first video creation entry 231a in S151-S154. Therefore, after S155, the electronic device may perform S16.

The foregoing is a specific procedure of S14-S15 when the at least one face group obtained by the voice assistant application in S14 includes only the second face group 10b.

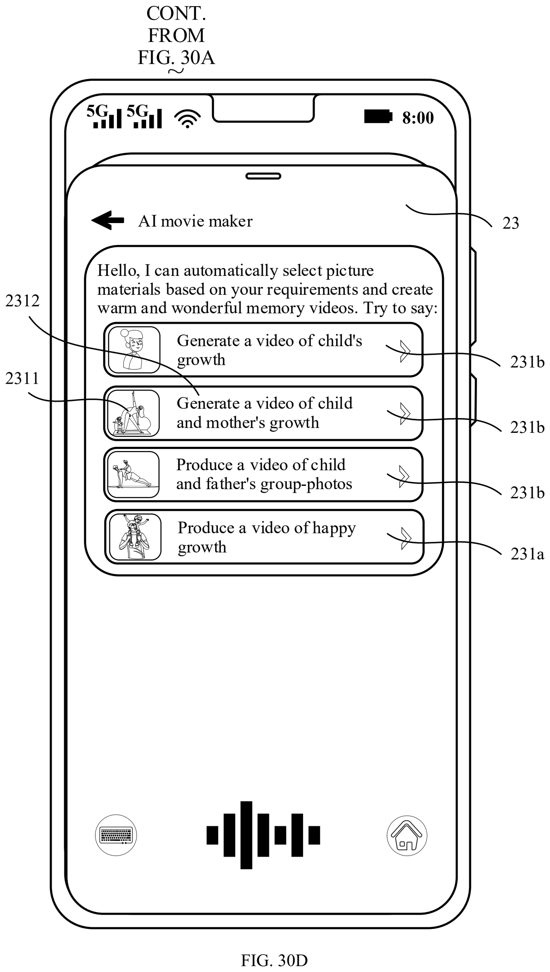

In some other examples, the voice assistant application responds to the second operation performed by the user on Growth theme card, and the display of the electronic device switches from the video production window 22 shown in FIG. 30A to an operation window 23 that displays and includes N second video creation entries 231b and one first video creation entry 231a and that is shown in FIG. 30D. Each second video creation entry 231b is associated with at least one person who has name data, and different second video creation entries 231b correspond to different persons. The first video creation entry 231a is associated with a plurality of persons who lack name data.

For example, when a part of the persons corresponding to the at least one face group has name data, and the other part of the persons lacks name data, the voice assistant application responds to the second operation performed by the user on the Warm moments card, and the display of the electronic device switches from the video production window 22 shown in FIG. 30A to an operation window 23 that displays and includes N second video creation entries 231b and one first video creation entry 231a and that is shown in FIG. 30D.

It should be noted that the face group 10 corresponding to the second video creation entry 231b includes only the second face group 10b, and does not correspond to the first face group 10a.

For a procedure in which the user selects the first video creation entry 231a in the operation window 23 shown in FIG. 30D, refer to the foregoing descriptions of S151-S154. For a procedure in which the user selects the second video creation entry 231b in the operation window 23 shown in FIG. 30D, refer to the foregoing descriptions of S155. Details are not described herein again.

In addition, because Growth theme corresponds to a plurality of persons, a third face group may be applicable to the video theme of Growth theme. For example, when determining a face group 10 corresponding to a composed video based on the third face group 10c, the first face group 10a and the second face group 10b may not be required.

For example, when a plurality of persons who have name data 12 exist in a plurality of persons corresponding to at least one face group 10 obtained by the electronic device from the album application, the plurality of persons who have name data 12 may be mutually combined to form a plurality of third face groups 10c. The production window 23 may display the second video creation entry 231b, and each second video creation entry 231b corresponds to one third face group 10c.

Certainly, on the basis of displaying the second video creation entry 231b, the production window 23 may further display the first video creation entry 231a. The first video creation entry 231a corresponds to a plurality of persons who lack name data.

It should be noted that the third face group 10c corresponding to the second video creation entry 231b corresponds to a person who has name data. After determining the face group, the electronic device may perform S16.

S16: The electronic device displays a third selection window.

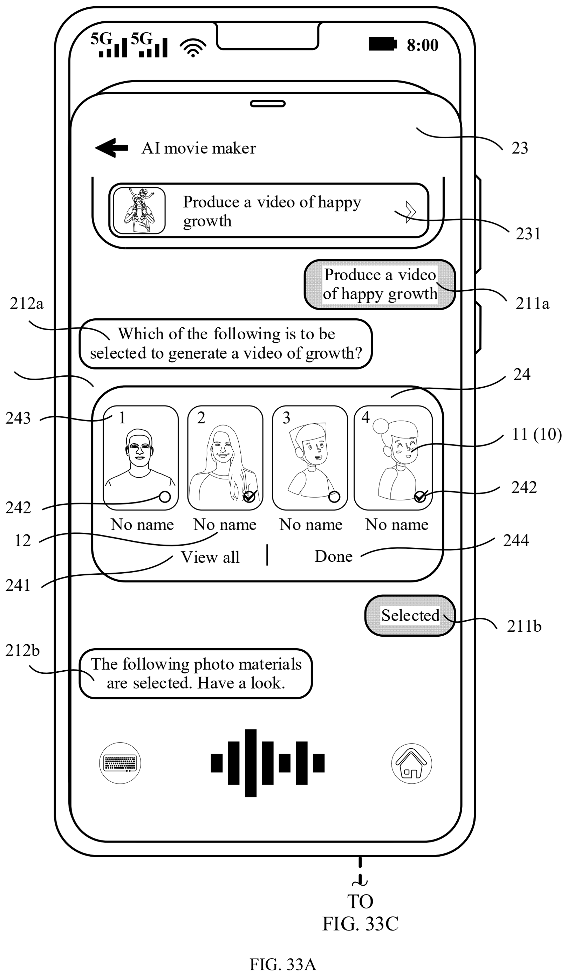

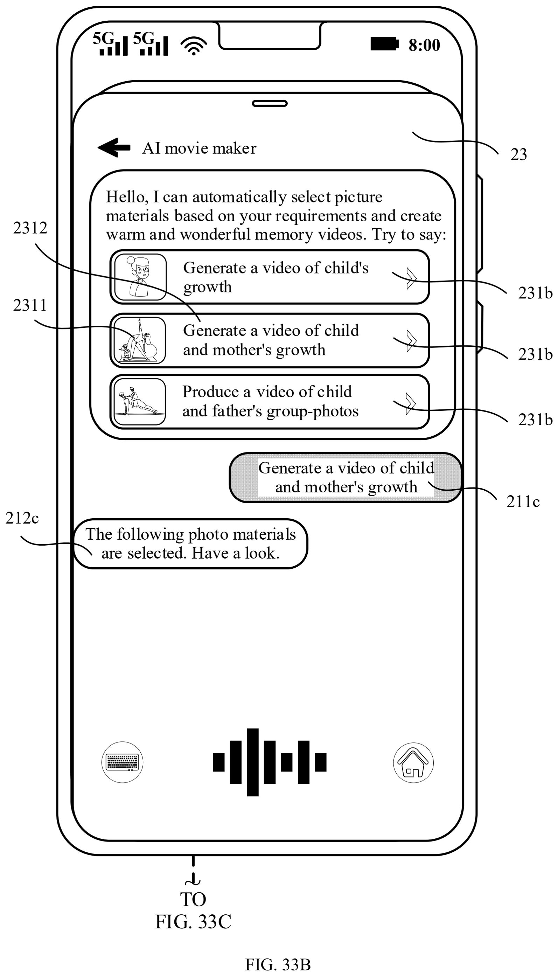

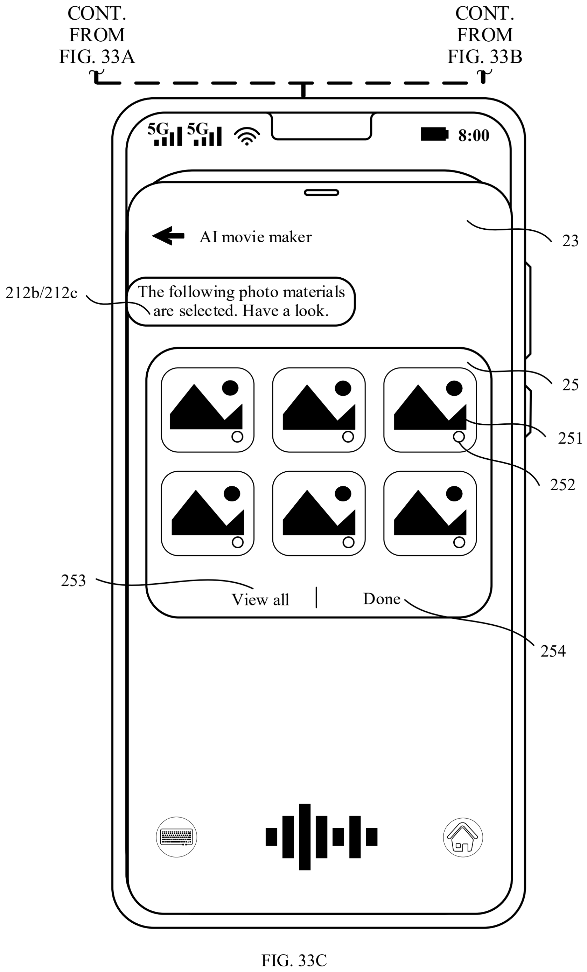

It may be understood that, when the display of the electronic device displays the first selection window 24 shown in FIG. 33A, in response to the first selection determining operation, after determining the first face group 10a corresponding to the video theme of Growth theme, the display may switch to display the third selection window 25 shown in FIG. 33C. Alternatively, when the display of the electronic device displays the operation window 23 of Growth theme shown in FIG. 33B, in response to the second selection operation, after determining at least one second face group 10b corresponding to the video theme of Growth theme, the display may switch to display the third selection window 25 shown in FIG. 33C.

The third selection window 25 may display a plurality of candidate portrait materials 251. The candidate portrait material 251 may be a picture, or may be a video. This is not limited in this embodiment of this application. It should be noted that the plurality of candidate portrait materials 251 displayed in the third selection window 25 are all portrait materials of one face group 10; or the plurality of candidate portrait materials 251 displayed in the third selection window 25 are all an intersection of portrait materials of a plurality of same persons (a second face group 10b corresponding to the second selection operation or a first face group 10a corresponding to the first selection determining operation). In addition, each candidate portrait material 251 needs to include a facial image of a child.

In the third selection window 25 shown in FIG. 33C, the plurality of candidate portrait materials 251 are arranged in a sequence of obtaining periods of the materials, and it may be understood that the plurality of candidate portrait materials 251 are arranged in a time sequence from childhood to adulthood.

In some examples, in the third selection window 25 shown in FIG. 33C, a quantity of candidate portrait materials 251 corresponding to each obtaining period is positively correlated with a quantity of materials captured by the electronic device in the obtaining period. For example, in a same year, a large quantity of materials are captured in August, and a small quantity of materials are captured in September. In this case, the third selection window 25 shown in FIG. 33C may display a large quantity of materials captured in August and a small quantity of materials captured in September. In this way, the user can select more materials in a growth process, to generate a video that conforms to Growth theme.

S17: The user inputs a seventh operation for one or more candidate portrait materials into the electronic device.

For example, the user may send a voice "Select all" to the smartphone, which is used as the seventh operation input by the user for the one or more candidate portrait materials 251 into the voice assistant application. In this case, the display of the electronic device switches from the third selection window 25 shown in FIG. 17A to that shown in FIG. 17B, and a third selection control 252 located in each material 251 changes from an "unselected" display state to a "selected" display state.

It should be noted that the third selection window 25 shown in FIG. 33C may also include the foregoing third expansion control 252. The user may perform an operation on the third expansion control 252, and select a plurality of candidate person materials from a person material interface. Details are not described herein again.

S18: The user inputs an eighth operation for the one or more candidate portrait materials into the electronic device. For example, the user inputs an eighth operation for a selected material into the electronic device.

As shown in FIG. 33C, the third selection window 25 may further include a third selection determining control 254.

The user may send a voice "Selected" to the smartphone, which is used as a third selection determining operation input by the user for the plurality of selected candidate portrait materials 251 into the voice assistant application.

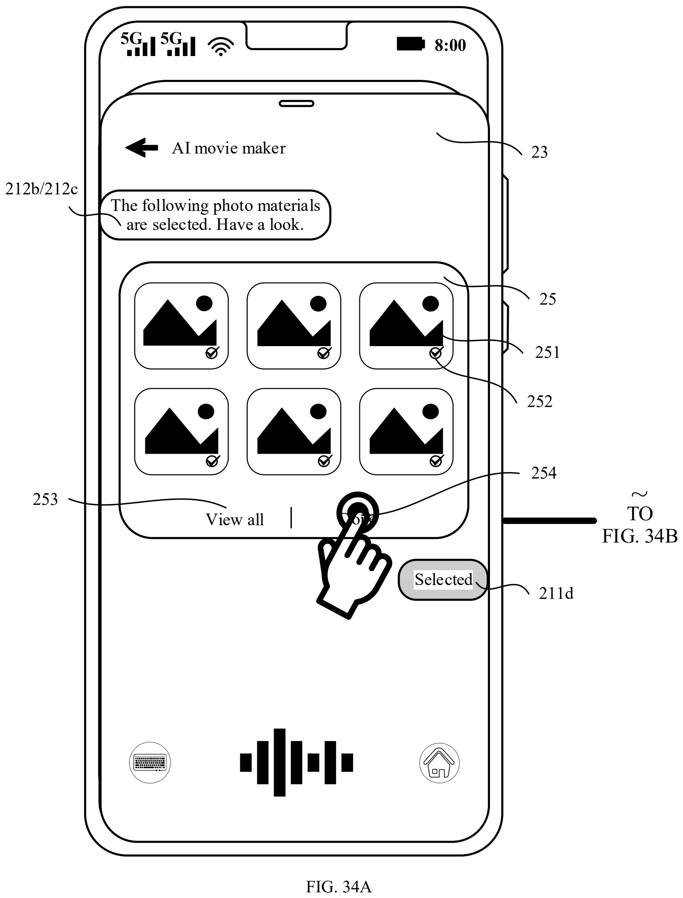

In some feasible implementations, after the user inputs the third selection determining operation into the electronic device, as shown in FIG. 34A, the voice assistant application may display a first chat message 211d corresponding to the voice in the operation window 23 of Growth theme based on a voice sent by the user. The first chat message 211d may be displayed below the third selection window 25.

S19: The electronic device creates a video in response to a third selection determining operation performed by the user on the one or more candidate portrait materials.

After determining a plurality of selected portrait materials in response to the third selection determining operation performed by the user on the one or more candidate portrait materials 251, the electronic device may compose the video based on the foregoing video composition function. Details are not described herein again.

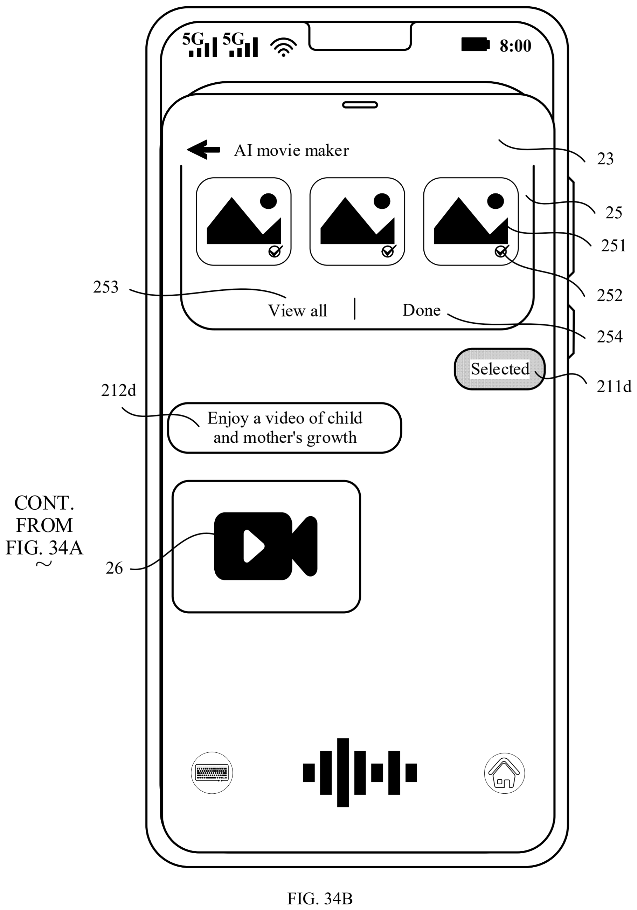

After the electronic device composes the video, the display of the electronic device switches from the third selection window 25 shown in FIG. 34A to a video operation window 23 of Growth theme shown in FIG. 34B, and the video operation window 23 of Growth theme displays a composed video 26.

The foregoing provides descriptions in S11-S19 by using an example in which the video theme of Growth theme is used as a target video theme.

The foregoing separately describes specific processes of the video generation method by using examples in which video themes are "Personal photos", "Family group-photos", "Warm moments", and "Growth theme". For a video composition process of another video theme, refer to the descriptions of the foregoing four examples. Details are not described herein again.

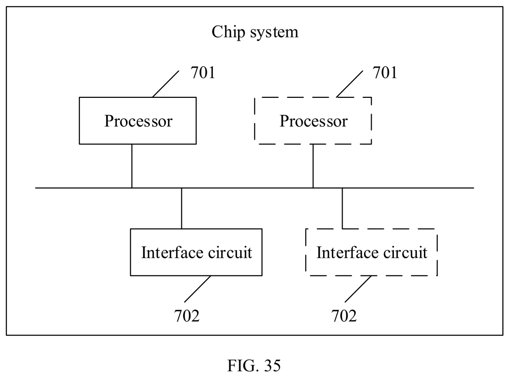

An embodiment of this application further provides a chip system (for example, a system on a chip (system on a chip, SoC)). As shown in FIG. 35, the chip system includes at least one processor 701 and at least one interface circuit 702. The processor 701 and the interface circuit 702 can be connected to each other through a line. For example, the interface circuit 702 may be configured to receive a signal from another apparatus (for example, the memory of the electronic device). For another example, the interface circuit 702 may be configured to send a signal to another apparatus (for example, the processor 701 or a camera of the electronic device). For example, the interface circuit 702 may read instructions stored in the memory and send the instructions to the processor 701. When the instruction is executed by the processor 701, the electronic device is enabled to perform the steps in the foregoing embodiments. It is clear that the chip system may further include another discrete device. This is not specifically limited in this embodiment of this application.

An embodiment of this application further provides a computer-readable storage medium. The computer-readable storage medium includes computer instructions. When the computer instructions run on an electronic device, the electronic device is enabled to perform the functions or steps performed by the electronic device in the foregoing method embodiment.

Embodiments of this application further provide a computer program product. When the computer program product runs on a computer, the computer is enabled to perform functions or steps performed by the electronic device in foregoing method embodiments. For example, the computer may be the electronic device.

According to the descriptions of the foregoing implementations, a person skilled in the art may clearly understand that, for the purpose of convenient and brief description, division into the foregoing functional modules is only used as an example for description. In actual applications, the foregoing functions may be allocated to and completed by different functional modules according to a requirement. That is, an inner structure of an apparatus is divided into different functional modules to complete all or some of the functions described above.

In the several embodiments provided in this application, it should be understood that the disclosed apparatus and method may be implemented in another manner. For example, the described apparatus embodiment is merely an example. For example, division of modules or units is merely logical function division and may be other division during actual implementation. For example, a plurality of units or components may be combined or integrated into another apparatus, or some features may be ignored or not performed. In addition, the displayed or discussed mutual coupling or direct coupling or communication connection may be implemented with some interfaces. Indirect coupling or communication connection between the apparatuses or units may be implemented in an electronic way, a mechanical way, or other ways.

The units described as separate parts may or may not be physically separated, and parts displayed as units may or may not be one or a plurality of physical units, that is, may be located at one position, or may be distributed to a plurality of different places. Some or all of the units may be selected based on actual needs, so as to achieve the objective of the solution of the embodiments.

In addition, the functional units in the embodiments of this application may be integrated into one processing unit, or each of the units may exist alone physically, or two or more units may be integrated into one unit. The integrated unit may be implemented in the form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The storage medium includes: a USB flash disk, a mobile hard disk, a read only memory (read only memory, ROM), a random access memory (random access memory, RAM), a magnetic disk, an optical disk, and other media capable of storing program code.

The foregoing content is only specific implementations of this application, but the protection scope of this application is not limited thereto. Any variation or replacement made within the technical scope disclosed in this application shall fall within the protection scope of this application. Therefore, the protection scope of this application shall be subject to the protection scope of the claims.

## Claims

1. A video generation method, applied to an electronic device, wherein the electronic device comprises a plurality of portrait materials, and at least one face group into which the plurality of portrait materials are grouped based on a facial image, and a portrait material in one face group comprises faces of a same person; and the method comprises:
displaying, by the electronic device, a video production window, wherein the video production window displays a plurality of theme cards, and different theme cards correspond to different video themes;
displaying, by the electronic device, an operation window of a target video theme in response to an operation of selecting a target theme card in the plurality of theme cards by a user, wherein when all persons corresponding to the at least one face group lack name data, the operation window comprises a first video creation entry; or when at least one of persons corresponding to the at least one face group has name data, the operation window comprises a second video creation entry; and the target video theme is a video theme corresponding to the target theme card;
displaying, by the electronic device, a first selection window in response to an operation performed on the first video creation entry, wherein the first selection window comprises a facial image of at least one person; and
generating, by the electronic device in response to an operation of selecting a facial image by the user, a video of a person corresponding to the facial image selected by the user;
or
generating, by the electronic device in response to an operation performed on the second video creation entry, a video of a person corresponding to the second video creation entry.

2. The method according to claim 1, wherein that the operation window comprises the second video creation entry comprises:
the operation window comprises one first video creation entry and N second video creation entries, the first video creation entry corresponds to a person who lacks name data, each second video creation entry corresponds to a person who has name data, and persons corresponding to different second video creation entries are not completely the same, wherein N is a positive integer greater than 1.

3. The method according to claim 1 or 2, wherein the generating, by the electronic device in response to an operation of selecting a facial image by the user, a video of a person corresponding to the facial image selected by the user comprises:
generating, by the electronic device, a video in response to an operation performed by the user on Q facial images in the first selection window, wherein a picture of the video simultaneously displays a person corresponding to the Q facial image, Q is a positive integer, and a value of Q is associated with the target video theme.

4. The method according to any one of claims 1-3, wherein the generating, by the electronic device in response to an operation of selecting a facial image by the user, a video of a person corresponding to the facial image selected by the user comprises:
displaying, by the electronic device, a third selection window in response to an operation of selecting a facial image by the user in the first selection window, wherein the third selection window displays a plurality of candidate portrait materials, each candidate portrait material is an intersection of portrait materials corresponding to the facial image selected by the user in the first selection window, and the portrait material comprises a picture and/or a video; and
generating, by the electronic device, a video in response to an operation of selecting one or more candidate portrait materials by the user in the third selection window.

5. The method according to any one of claims 1-4, wherein the first selection window further comprises a name control, and each name control corresponds to a person of one facial image; and
after the displaying a first selection window, the method further comprises:
displaying, by the electronic device, a name edit window in response to an operation of selecting a name control by the user; and
when receiving name data edited by the user in the name edit window, returning, by the electronic device, the first selection window, and using the name data as name data of a person corresponding to the name control selected by the user.

6. The method according to claim 5, wherein the displaying, by the electronic device, a name edit window in response to an operation of selecting a name control by the user comprises:
displaying, by the electronic device, the name edit window in an album application in response to the operation of selecting the name control by the user; and
after the electronic device receives the name data edited by the user in the name edit window, the method further comprises:
using, by the album application, the name data as the name data of the person corresponding to the name control selected by the user.

7. The method according to claim 5 or 6, wherein the name edit window comprises a name input area, the name input area is used by the user to input name subdata of the person, and the name subdata belongs to the name data;
the using, by the album application, the name data as the name data of the person corresponding to the name control selected by the user comprises:
using, by the album application, the name subdata as the name data of the person corresponding to the name control selected by the user;
and/or
the name edit window comprises a relationship input area, the relationship input area is used by the user to input relationship subdata between a person and an owner of the electronic device, and the relationship subdata belongs to the name data; and
the using, by the album application, the name data as the name data of the person corresponding to the name control selected by the user comprises:
using, by the album application, the relationship subdata as the name data of the person corresponding to the name control selected by the user.

8. The method according to any one of claims 1-7, wherein the generating, by the electronic device in response to an operation of selecting the second video creation entry by the user, a video of a person corresponding to the second video creation entry selected by the user comprises:
displaying, by the electronic device, the third selection window in response to the operation of selecting the second video creation entry by the user, wherein the third selection window displays a plurality of candidate portrait materials, each candidate portrait material is an intersection of portrait materials of the person corresponding to the second video creation entry selected by the user, and the portrait material comprises a picture and/or a video; and
generating, by the electronic device, a video in response to an operation of selecting one or more candidate portrait materials by the user.

9. The method according to claim 4 or 8, wherein that the third selection window displays the plurality of candidate portrait materials comprises:
arranging, by the electronic device, the plurality of candidate portrait materials in the third selection window based on a sequence of obtaining periods of the portrait materials, wherein a quantity of candidate portrait materials displayed in each obtaining period is positively correlated with a quantity of portrait materials captured by the electronic device in the obtaining period.

10. The method according to any one of claims 1-9, wherein the first video creation entry comprises a first recommendation text, and the first recommendation text is a preset recommendation text corresponding to a video theme; and/or
the second video creation entry comprises a second recommendation text, and the second recommendation text comprises name data of the person corresponding to the second video creation entry.

11. The method according to any one of claims 1-10, wherein the theme card displays the preset recommendation text corresponding to the video theme.

12. The method according to any one of claims 1-11, wherein the first video creation entry comprises a first example image, and the first example image is an example image corresponding to the video theme; and/or
the second video creation entry comprises a second example image, and the second example image comprises a portrait material of the person corresponding to the second video creation entry.

13. The method according to claim 12, wherein the operation window comprises the second video creation entry; and
the target theme card comprises one second example image of the second video creation entry.

14. The method according to any one of claims 1-13, wherein before the operation window displays the operation window of the target video theme, the method further comprises:
obtaining, by the electronic device, at least one face group corresponding to a plurality of portrait materials in the album application.

15. The method according to any one of claims 1-14, wherein before the displaying, by the electronic device, a video production window, the method further comprises:
starting, by the electronic device, a voice assistant application in response to an input operation performed by the user; and
displaying, by the voice assistant application, the video production window.

16. An electronic device, wherein the electronic device comprises a processor, a memory, and a display, the processor is separately coupled to the memory and the display, the memory is configured to store computer program code, the computer program code comprises computer instructions, and when the processor executes the computer instructions, the electronic device is enabled to perform the method according to any one of claims 1-15.

17. A computer-readable storage medium, wherein the computer-readable storage medium comprises computer instructions, and when the computer instructions are run on an electronic device, the electronic device is enabled to perform the method according to any one of claims 1-15.

18. A computer program product, comprising a computer program/instructions, wherein when the computer program/instructions are executed by a processor, the steps of the method according to any one of claims 1-15 are implemented.
